(19) Europäisches Patentamt
European Patent Office
Office européen des brevets

(11) **EP 4 068 198 B1**

(12) **EUROPÄISCHE PATENTSCHRIFT**

(45) Veröffentlichungstag und Bekanntmachung des Hinweises auf die Patenterteilung:
**27.12.2023 Patentblatt 2023/52**

(21) Anmeldenummer: **21166594.8**

(22) Anmeldetag: **01.04.2021**

(51) Internationale Patentklassifikation (IPC):
**G06T 5/00** *(2006.01)* **G06T 11/00** *(2006.01)*
**H04N 5/272** *(2006.01)* **G06T 15/20** *(2011.01)*

(52) Gemeinsame Patentklassifikation (CPC):
**G06T 11/00; G06T 5/006;** G06T 2207/10016;
G06T 2207/10028; G06T 2207/20056;
G06T 2207/20221

(54) **VERFAHREN ZUR ERZEUGUNG EINES BILDS EINES OBJEKTS, COMPUTERPROGRAMMPRODUKT UND BILDERZEUGUNGSSYSTEM ZUR DURCHFÜHRUNG DES VERFAHRENS**

METHOD FOR GENERATING AN IMAGE OF AN OBJECT, COMPUTER PROGRAM PRODUCT AND IMAGING SYSTEM FOR CARRYING OUT THE METHOD

PROCÉDÉ DE GÉNÉRATION D'UNE IMAGE D'UN OBJET, PRODUIT PROGRAMME INFORMATIQUE ET SYSTÈME DE GÉNÉRATION DES IMAGES DESTINÉS À LA MISE EN UVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.10.2022 Patentblatt 2022/40**

(73) Patentinhaber: **Carl Zeiss AG**
**73447 Oberkochen (DE)**

(72) Erfinder:
• **Demuth, Jonathan**
**73447 Oberkochen (DE)**

• **Casenave, Christophe**
**73434 Aalen (DE)**

(74) Vertreter: **Freischem & Partner Patentanwälte mbB**
**Salierring 47-53**
**50677 Köln (DE)**

(56) Entgegenhaltungen:
**WO-A1-2020/021121     CN-A- 110 675 348**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Erzeugung eines Bilds eines Objekts, ein Computerprogrammprodukt und ein Bilderzeugungssystem zur Durchführung des Verfahrens.

Bereits seit langem ist es bekannt, Bilder mit einem optischen Abbildungssystem zu erzeugen, wobei das optische Abbildungssystem ein Objektiv und eine Bildaufnahmeeinheit aufweist. Die Bildaufnahmeeinheit ist beispielsweise als ein elektronischer Bildsensor ausgebildet. Insbesondere ist der elektronische Bildsensor als digitale Bilderfassungseinheit ausgebildet, beispielsweise in Form eines CMOS. Alternativ hierzu ist es vorgesehen, dass die Bilderfassungseinheit als ein lichtempfindlicher chemischer Film ausgebildet ist. Auch eine Bildsequenz, die mehrere Bilder aufweist, kann mit dem bekannten optischen Abbildungssystem erzeugt werden. Das mit dem bekannten optischen Abbildungssystem erzeugte Bild wird nachstehend auch als real erzeugtes Bild bezeichnet. Ferner wird die mit dem bekannten optischen Abbildungssystem erzeugte Bildsequenz nachstehend auch als real erzeugte Bildsequenz bezeichnet.

Das bekannte optische Abbildungssystem ist beispielsweise als eine Kamera ausgebildet. Insbesondere ist es vorgesehen, dass die Kamera als Filmkamera ausgebildet ist, die im kinematografischen Bereich eingesetzt wird. Alternativ hierzu ist es vorgesehen, dass die Kamera als Kamera ausgebildet ist, die im fotografischen Bereich eingesetzt wird.

Das Objektiv der oben genannten Kamera weist mindestens eine Linseneinheit und mindestens eine Blendeneinheit auf, welche mit einer Blendenöffnung versehen ist. Beispielsweise weist das Objektiv mindestens eine Linsengruppe auf, die entlang einer optischen Achse des Objektivs zur Einstellung der Fokussierung des Objektivs auf das Objekt und/oder zur Einstellung einer Brennweite des Objektivs bewegt wird. Dabei wird vorstehend und auch nachstehend unter einer Linsengruppe eine Gruppe verstanden, die eine einzige Linse oder mehrere Linsen aufweist. Zusätzlich kann die Linsengruppe auch mindestens ein Prisma aufweisen.

Das mittels des bekannten optischen Abbildungssystems real erzeugte Bild weist in der Regel Abbildungsfehler auf, beispielsweise aufgrund einer sphärischen Aberration, einer geometrischen Verzeichnung und/oder einer Vignettierung. Dabei ist die geometrische Verzeichnung im Grunde eine bildseitige Verzerrung von geraden Linien. Bei der Vignettierung handelt es sich um einen Randlichtabfall, also um eine Abschattung zu einem Bildrand hin. Auch real erzeugte Bildsequenzen können die vorgenannten Abbildungsfehler aufweisen.

In der Fotografie und in der Kinematografie sind Stilmittel bekannt, um die Aufmerksamkeit eines Betrachters eines Bilds oder eines Films auf bestimmte Inhalte eines Bilds zu lenken oder diese Inhalte des Bilds für einen Betrachter besonders zu gestalten, um einen anspruchsvollen ästhetischen Eindruck zu erzielen. Um dieses zu erreichen, ist es aus dem Stand der Technik bekannt, ein Bild eines Objekts unter Verwendung eines ganz bestimmten Objektivs oder bestimmter Objektive zu erzeugen. Beispielsweise sind Objektive mit hoher Öffnung in der Fotografie und in der Kinematografie nicht nur wegen ihrer hohen Lichtstärke von Vorteil, sondern sie können auch Bilder mit geringer Schärfentiefe erzeugen. Die Schärfentiefe ist ein Bereich vor einem Objektiv einer Kamera, wobei das Objektiv zur Abbildung eines Objekts verwendet wird. Liegt ein Objekt innerhalb dieses Bereichs - also innerhalb der Schärfentiefe-, so wird es von dem Objektiv scharf abgebildet. Ein sich in diesem Bereich befindendes Objekt wird durch Fokussierung des Objektivs auf dieses Objekt im Bild scharf dargestellt, wobei der Raum außerhalb der Schärfentiefe durch Unschärfe im Bild praktisch verschwimmt. Hierdurch wird die Aufmerksamkeit eines Betrachters auf den scharfen Bildbereich des Objekts gelenkt. Mit anderen Worten ausgedrückt, ist es möglich, ein Objekt durch Fokussierung des Objektivs auf eine ganz bestimmte Objektebene scharf abzubilden, und zwar bei gleichzeitiger unscharfer Abbildung der Teilbereiche des Objekts vor und hinter der Objektebene. Diese Teilbereiche werden unscharf abgebildet.

Wie oben erwähnt, werden die Stilmittel verwendet, um einen guten ästhetischen Eindruck zu erzielen. Beispielsweise ist es oft gewünscht, dass bestimmte Bereiche eines Objekts im Bild eine bestimmte Form annehmen. So ist es beispielsweise oft gewünscht, dass starke, lokale Lichtquellen, die Teil eines abzubildenden Objekts sind und die deutlich außerhalb einer fokussierten Objektebene liegen, im Bild als homogene Kreisscheiben dargestellt werden. Die Form und Abbildungsqualität dieser bestimmten Bereiche des Objekts im Bild wird in der Fachwelt auch als Bokeh bezeichnet. Bokeh beschreibt eine (wenn auch subjektive) ästhetische Qualität von unscharfen Bereichen in einem Bild eines Objekts. Dabei wird mit Bokeh nicht die Stärke einer Unschärfe bezeichnet, sondern die Form und Ausgestaltung der abgebildeten Bereiche des Objekts im Bild.

Aus dem Stand der Technik ist es bekannt, dass ein Computergrafiker eine dreidimensionale Szene, die eine Sequenz von mehreren dreidimensionalen Darstellungen aufweist, und/oder eine dreidimensionale Darstellung durch mathematische Berechnung von Daten erzeugen kann. Diese Daten werden dann verwendet, um diese dreidimensionale Szene in eine zweidimensionale Bildsequenz und/oder die dreidimensionale Darstellung in ein zweidimensionales Bild umzuwandeln. Dieses Verfahren ist auch als Rendering bekannt. Um die dreidimensionale Szene und/oder die dreidimensionale Darstellung zu erzeugen, verwendet der Computergrafiker ein mathematisches Modell der dreidimensionalen Szene und/oder der dreidimensionalen Darstellung. Das mathematische Modell umfasst beispielsweise Parameter, die insbesondere die Form, die Farbe und die Oberflächenbeschaffenheit eines zu modellierenden Objekts, welches in der dreidimensionalen Szene und/oder in der dreidimensionalen Darstellung dargestellt werden soll, beschreiben. Ferner umfasst das mathematische Modell beispielsweise Parameter, welche die Beleuchtung des Objekts beschreiben, insbesondere den Ort, die Art, die Farbe und die Richtung von zu modellierenden Lichtquellen. Darüber hinaus umfasst das mathematische Modell die Position des Objekts in der dreidimensionalen Szene und/oder in der dreidimensionalen Darstellung mindestens eines der Folgenden: die Aufnahmerichtung, das Sehfeld, die Brennweite, die Fokussierung, das Bildformat, die Größe der Bilderfassungseinheit, die Position und den Bewegungspfad einer virtuellen Kamera. Basierend auf diesen Parametern, kann das zweidimensionale Bild und/oder die zweidimensionale Bildsequenz berechnet werden. Für diese Berechnung wird häufig angenommen, dass die virtuelle Kamera als eine Lochkamera ausgebildet ist, deren Abbildung gemäß dem Strahlensatz berechnet werden kann. Da eine Lochkamera im Prinzip keine Abbildungsfehler aufweist, ist/sind das berechnete zweidimensionale Bild und/oder die berechnete zweidimensionale Bildsequenz frei von Bildfehlern.

Aus dem Stand der Technik ist es auch bekannt, die durch Rendering - also im Grunde künstlich - erzeugten zweidimensionalen Bilder oder zweidimensionalen Bildsequenzen mit Bildern und/oder Bildsequenzen zu mischen, welche mit einem optischen Abbildungssystem, beispielsweise einer Filmkamera, erzeugt wurden. Bei der vorgenannten Mischung können Effekte erzeugt werden, die in der 3D-Computergrafik und der Kinematografie als "visual effects" bezeichnet werden (häufig abgekürzt mit VFX). Die vorgenannte Mischung wird auch als Augmentierung bezeichnet. Eine Augmentierung erfolgt beispielsweise bei einer Nachbearbeitung eines kinematografischen Films, insbesondere bei einem sogenannten Compositing, bei dem Bilder, die aus unterschiedlichen Quellen stammen, zusammengeführt werden. Es ist wünschenswert, dass die durch ein Rendering erzeugten zweidimensionalen Bilder und/oder Bildsequenzen in einem durch Compositing erzeugten gemischten Bild und/oder in einer durch Compositing erzeugten gemischten Bildsequenz keine oder nur gering erkennbare Unterschiede zu den real erzeugten Bildern und/oder Bildsequenzen aufweisen, um einen guten ästhetischen Eindruck sowie einen möglichst realistischen Eindruck eines Objekts oder einer Szene zu vermitteln.

Aus dem Stand der Technik ist es auch bekannt, die durch Rendering - im Grunde künstlich - erzeugten zweidimensionalen Bilder oder zweidimensionalen Bildsequenzen nicht zu mischen, sondern für vollständig animierte Bilder und/oder Bildsequenzen zu verwenden. Dies wird beispielsweise bei der Herstellung von Animationsfilmen und/oder im Bereich der virtuellen Realität verwendet, wobei die virtuelle Realität beispielsweise bei Computerspielen, bei Flugsimulatoren für ein Pilotentraining, Schiffssimulatoren für ein Schiffsführertraining und/oder Zugsimulatoren für ein Zugführertraining verwendet wird. Auch hier ist es wünschenswert, dass die durch ein Rendering - im Grunde künstlich - erzeugten zweidimensionalen Bilder und/oder Bildsequenzen keine oder nur schwach erkennbare Unterschiede zu real erzeugten Bildern und/oder Bildsequenzen aufweisen, um einen guten ästhetischen Eindruck sowie einen möglichst realistischen Eindruck eines Objekts oder einer Szene zu vermitteln.

Hinsichtlich des Standes der Technik wird zusätzlich auf die WO 2020/021121 A1 sowie die CN 110675348 A verwiesen.

Der Erfindung liegt die Aufgabe zugrunde, ein Verfahren zur Erzeugung eines Bilds eines Objekts und ein Bilderzeugungssystem zur Durchführung des Verfahrens anzugeben, mit denen zum einen Abbildungsfehler in real erzeugten Bildern und/oder Bildsequenzen verändert werden sowie mit denen zum anderen künstlich erzeugte Darstellungen eines Objekts keine oder nur schwach erkennbare Unterschiede zu real erzeugten Bildern und/oder Bildsequenzen aufweisen.

Erfindungsgemäß wird diese Aufgabe mit einem Verfahren mit den Merkmalen des Anspruchs 1 oder des Anspruchs 18 gelöst. Ein Computerprogrammprodukt mit einem Programmcode, der in einen Prozessor eines Bilderzeugungssystems ladbar ist und, wenn er in dem Prozessor geladen ist, bei seiner Ausführung das Bilderzeugungssystem derart steuert, dass ein erfindungsgemäßes Verfahren durchgeführt wird, ist durch die Merkmale des Anspruchs 19 gegeben. Ferner betrifft die Erfindung ein Bilderzeugungssystem mit den Merkmalen des Anspruchs 20. Weitere Merkmale der Erfindung ergeben sich aus der nachfolgenden Beschreibung, den beigefügten Ansprüchen und/oder den beigefügten Zeichnungen.

Die Erfindung betrifft ein Verfahren zur Erzeugung eines Bilds eines Objekts. Bei dem erfindungsgemäßen Verfahren werden Daten über das Objekt mit einer ersten Datenverarbeitungseinrichtung bereitgestellt. Dabei werden vorstehend und auch nachstehend unter den Daten über das Objekt jegliche Daten verstanden, welche das Objekt beschreiben. Beispielsweise handelt es sich bei den Daten über das Objekt um mindestens ein zweidimensionales Eingabebild des Objekts. Zusätzlich oder alternativ hierzu handelt es sich bei den Daten über das Objekt beispielsweise um mindestens eine dreidimensionale Darstellung des Objekts. Auf die beiden Ausführungsformen der Daten über das Objekt wird weiter unten näher eingegangen. Wiederum zusätzlich oder alternativ hierzu ist es vorgesehen, dass die Daten über das Objekt Daten sind, mit denen eine mehrdimensionale, beispielsweise eine zweidimensionale oder dreidimensionale Darstellung des Objekts berechnet werden kann. Die vorgenannte Aufzählung von Daten über das Objekt ist nicht abschließend zu verstehen. Vielmehr können jegliche Daten über das Objekt verwendet werden, welche das Objekt beschreiben und welche für die Durchführung der Erfindung geeignet sind. Beispiele, wie diese Daten über das Objekt erhalten werden können, sind weiter unten erläutert.

Bei der ersten Datenverarbeitungseinrichtung handelt es sich beispielsweise um ein elektronisches System, das aus einer Zentraleinheit und aus peripheren Geräten gebildet ist. Beispielsweise ist die Zentraleinheit ein lokaler Computer, eine Servereinheit, ein Netzwerk mit mehreren Workstations, ein Cloud-basierter virtueller Server, ein Tabletcomputer und/oder ein Smartphone. Die peripheren Geräte sind beispielsweise als Eingabe- und/oder Ausgabeeinheit, insbesondere in Form einer Tastatur, und/oder als Monitor ausgebildet.

Das erfindungsgemäße Verfahren umfasst auch ein Bereitstellen mindestens eines ersten Datensatzes mit der ersten Datenverarbeitungseinrichtung. Der erste Datensatz weist erste Daten auf, die Folgendes umfassen: (i) mindestens einen ersten Abbildungsparameter eines ersten Abbildungssystems, mit dem die Daten über das Objekt erzeugt wurden, und/oder (ii) mindestens einen zweiten Abbildungsparameter eines zweiten Abbildungssystems, mit dessen Eigenschaften ein Bild des Objekts basierend auf den Daten über das Objekt auf einer Anzeigeeinheit dargestellt werden soll.

Somit können die ersten Daten mindestens den ersten Abbildungsparameter des ersten Abbildungssystems umfassen, mit dem die Daten über das Objekt erzeugt wurden. Wie weiter unten noch näher erläutert wird, umfassen erste Abbildungsparameter beispielsweise erste Metadaten des ersten Abbildungssystems, insbesondere erste Kameradaten und erste Objektivdaten. Weitere Beispiele zu den ersten Daten sind weiter unten genannt.

Bei dem ersten Abbildungssystem handelt es sich beispielsweise um ein erstes optisches Abbildungssystem, das mindestens eine Linse aufweist. Das erste optische Abbildungssystem ist beispielsweise als eine Kamera ausgebildet. Hierauf wird weiter unten näher eingegangen.

Zusätzlich oder alternativ hierzu ist es vorgesehen, dass das erste Abbildungssystem als ein Computergrafiksystem ausgebildet ist, mit dem eine dreidimensionale Szene, die eine Sequenz von mehreren dreidimensionalen Darstellungen aufweist, durch mathematische Berechnung von Daten erzeugt wird. Alternativ hierzu wird mit dem Computergrafiksystem eine dreidimensionale Darstellung durch mathematische Berechnung von Daten erzeugt. Die ersten Daten des ersten Datensatzes umfassen dann beispielsweise die durch diese mathematische Berechnung erzeugten Daten. Zusätzlich oder alternativ hierzu werden die vorgenannten mathematisch berechneten Daten in eine zweidimensionale Bildsequenz und/oder in ein zweidimensionales Bild umgewandelt. Dann umfassen die ersten Daten Daten der zweidimensionalen Bildsequenz und/oder des zweidimensionalen Bilds.

Wie zuvor genannt, werden die Daten einer dreidimensionalen Szene oder einer dreidimensionalen Darstellung mathematisch berechnet. Hierzu verwendet ein Computergrafiker beispielsweise ein mathematisches Modell einer dreidimensionalen Szene und/oder einer dreidimensionalen Darstellung. Das mathematische Modell umfasst beispielsweise Parameter, die insbesondere die Form, die Farbe und die Oberflächenbeschaffenheit eines zu modellierenden Objekts, welches in der dreidimensionalen Szene und/oder in der dreidimensionalen Darstellung dargestellt werden soll, beschreiben. Ferner umfasst das mathematische Modell beispielsweise Parameter, welche die Beleuchtung des Objekts beschreiben, insbesondere den Ort, die Art, die Farbe und die Richtung von zu modellierenden Lichtquellen. Darüber hinaus umfasst das mathematische Modell die Position des Objekts in der dreidimensionalen Szene und/oder in der dreidimensionalen Darstellung mindestens eines der Folgenden: die Aufnahmerichtung, das Sehfeld, die Brennweite, die Fokussierung, das Bildformat, die Größe der Bilderfassungseinheit, die Position und den Bewegungspfad einer virtuellen Kamera.

Wie oben geschildert, können die ersten Daten zusätzlich oder alternativ mindestens den zweiten Abbildungsparameter des zweiten Abbildungssystems umfassen. Mit den Eigenschaften des zweiten Abbildungssystems soll ein Bild des Objekts basierend auf den Daten über das Objekt auf einer Anzeigeeinheit dargestellt werden. Wie weiter unten noch näher erläutert wird, umfassen die zweiten Abbildungsparameter beispielsweise zweite Metadaten des zweiten Abbildungssystems, insbesondere erste Kameradaten und erste Objektivdaten. Weitere Beispiele zu den ersten Daten sind weiter unten genannt.

Bei dem zweiten Abbildungssystem handelt es sich beispielsweise um ein zweites optisches Abbildungssystem, das mindestens eine Linse aufweist. Das zweite optische Abbildungssystem ist beispielsweise als eine Kamera ausgebildet. Hierauf wird weiter unten näher eingegangen.

Zusätzlich oder alternativ hierzu ist es vorgesehen, dass das zweite Abbildungssystem als eine virtuelle Kamera ausgebildet ist. Der mindestens zweite Abbildungsparameter bewirkt, dass ein Bild des Objekts basierend auf den Daten über das Objekt derart auf der Anzeigeeinheit dargestellt wird, als ob die den zweiten Abbildungsparameter verwendende virtuelle Kamera das Objekt tatsächlich abbilden würde. Mit anderen Worten ausgedrückt, soll ein Bild des Objekts durch mathematische Berechnung basierend auf den Daten über das Objekt erzeugt werden und derart auf der Anzeigeeinheit dargestellt werden, als ob eine Kamera, welche die durch den zweiten Abbildungsparameter gewählte Eigenschaft aufweist, das Objekt tatsächlich abbildet.

Bei dem erfindungsgemäßen Verfahren erfolgt auch ein Laden des ersten Datensatzes von der ersten Datenverarbeitungseinrichtung in eine zweite Datenverarbeitungseinrichtung. Die erste Datenverarbeitungseinrichtung und die zweite Datenverarbeitungseinrichtung sind beispielsweise zum Datenaustausch miteinander verbunden. Insbesondere ist es vorgesehen, die erste Datenverarbeitungseinrichtung leitungstechnisch mit der zweiten Datenverarbeitungseinrichtung zu verbinden. Zusätzlich oder alternativ hierzu ist es vorgesehen, die erste Datenverarbeitungseinrichtung drahtlos mit der zweiten Datenverarbeitungseinrichtung derart zu verbinden, dass ein Datenaustausch erfolgen kann. Beispielsweise ist die drahtlose Verbindung zwischen der ersten Datenverarbeitungseinrichtung und der zweiten Datenverarbeitungseinrichtung eine Funkverbindung oder eine Verbindung über ein WLAN. Zusätzlich oder alternativ hierzu sind die erste Datenverarbeitungseinrichtung und die zweite Datenverarbeitungseinrichtung über das Internet miteinander verbunden. Bei der zweiten Datenverarbeitungseinrichtung handelt es sich beispielsweise um ein elektronisches System, das eine Zentraleinheit aufweist. Beispielsweise ist die Zentraleinheit ein lokaler Computer, eine Servereinheit, ein Netzwerk mit mehreren Workstations, ein Cloud-basierter virtueller Server, ein Tabletcomputer und/oder ein Smartphone. Zusätzlich kann die zweite Datenverarbeitungseinrichtung beispielsweise mit peripheren Geräten versehen sein. Die peripheren Geräte sind insbesondere als Eingabe- und/oder Ausgabeeinheit, beispielsweise in Form einer Tastatur, und/oder als Monitor ausgebildet.

Das erfindungsgemäße Verfahren umfasst ferner ein Laden eines zweiten Datensatzes aus einem Datenspeicher in die zweite Datenverarbeitungseinrichtung in Abhängigkeit des in die zweite Datenverarbeitungseinrichtung geladenen ersten Datensatzes. Der zweite Datensatz weist zweite Daten auf, die Folgendes umfassen: (i) Veränderungsdaten zur Veränderung von Abbildungsfehlern in Abhängigkeit des ersten Abbildungsparameters des ersten Abbildungssystems und/oder (ii) Änderungsdaten zur Änderung der Daten über das Objekt in Abhängigkeit des zweiten Abbildungsparameters des zweiten Abbildungssystems.

Somit können die zweiten Daten Veränderungsdaten zur Veränderung von Abbildungsfehlern in Abhängigkeit des ersten Abbildungsparameters des ersten Abbildungssystems umfassen. Mit anderen Worten ausgedrückt, umfassen die zweiten Daten Veränderungsdaten, die herangezogen werden können, um Abbildungsfehler, welche bei der Erzeugung der Daten über das Objekt (insbesondere bei der Erzeugung des oben genannten zweidimensionalen Eingabebilds des Objekts) aufgetreten sind, zu verändern. Insbesondere können mit den Veränderungsdaten die Abbildungsfehler verringert oder vergrößert werden. Beispielsweise können die Veränderungsdaten Korrekturdaten zur Korrektur von Abbildungsfehlern in Abhängigkeit des ersten Abbildungsparameters des ersten Abbildungssystems aufweisen. Mit anderen Worten ausgedrückt, umfassen die zweiten Daten Korrekturdaten, die herangezogen werden können, um Abbildungsfehler, welche bei der Erzeugung der Daten über das Objekt (insbesondere bei der Erzeugung des oben genannten zweidimensionalen Eingabebilds des Objekts) aufgetreten sind, zu verringern oder vollständig zu korrigieren. Zusätzlich oder alternativ ist es auch vorgesehen, unter Verwendung der Veränderungsdaten einen oder mehrere Abbildungsfehler zu rekonstruieren. Mit anderen Worten ausgedrückt, kann ein Abbildungsfehler unter Verwendung der Veränderungsdaten in ein Bild eingefügt werden.

Zusätzlich oder alternativ umfassen die zweiten Daten Änderungsdaten zur Änderung der Daten über das Objekt in Abhängigkeit des zweiten Abbildungsparameters des zweiten Abbildungssystems. Mit anderen Worten ausgedrückt, können mit Hilfe der Änderungsdaten die Daten über das Objekt in Abhängigkeit des zweiten Abbildungsparameters des zweiten Abbildungssystems geändert werden. Die Änderung der Daten über das Objekt erfolgt beispielsweise derart, dass durch die Änderung der Daten über das Objekt ein Bild des Objekts erzeugt wird, das im Grunde genommen einem mit dem oben genannten zweiten optischen Abbildungssystem oder einem mit der oben genannten virtuellen Kamera erzeugten Bild des Objekts entspricht oder im Wesentlichen entspricht.

Der zweite Datensatz kann beispielsweise in Form eines Polynoms ausgestaltet sein. Das Polynom repräsentiert beispielsweise eine virtuelle Kamera und beschreibt in mathematischer Form, wie und wo ein in ein Objektiv der virtuellen Kamera einfallender und aus dem Objektiv wieder austretender Lichtstrahl auf der Bilderfassungseinheit der virtuellen Kamera abgebildet wird. Beispielsweise weist das Polynom die folgende Form auf:

$$x_f = \sum_{i,j,k,l,m} c_{ijklm} x_s^i y_s^j x_a^k y_a^l \beta^m$$

wobei $x_s$ und $y_s$ die Strahlposition des austretenden Lichtstrahls an einer Fläche der Bilderfassungseinheit wiedergeben, $x_a$ und $y_a$ eine Strahlposition des einfallenden Lichtstrahls an einer Ebene einer virtuellen Blende wiedergeben und $\beta$ ein gewünschter Abbildungsmaßstab ist.

Bei dem erfindungsgemäßen Verfahren ist es vorgesehen, dass ein Bearbeitungsdatensatz insbesondere mit der ersten Datenverarbeitungseinrichtung und/oder der zweiten Datenverarbeitungseinrichtung basierend auf dem zweiten Datensatz erzeugt wird. Beispielsweise umfasst der Bearbeitungsdatensatz eine Korrekturkarte. Alternativ hierzu ist vorgesehen, dass beispielsweise mit der ersten Datenverarbeitungseinrichtung und/oder der zweiten Datenverarbeitungseinrichtung erkannt wird, dass der zweite Datensatz unverändert als Bearbeitungsdatensatz verwendet wird. Insbesondere wird beispielsweise mit der ersten Datenverarbeitungseinrichtung und/oder der zweiten Datenverarbeitungseinrichtung bestimmt, dass der zweite Datensatz unverändert als Bearbeitungsdatensatz verwendet wird.

Darüber hinaus ist es bei dem erfindungsgemäßen Verfahren vorgesehen, dass ein zweidimensionales Ausgabebild des Objekts durch Bearbeiten der Daten über das Objekt unter Verwendung des Bearbeitungsdatensatzes beispielsweise mit der ersten Datenverarbeitungseinrichtung und/oder der zweiten Datenverarbeitungseinrichtung erzeugt wird, wobei das Ausgabebild eine vorgebbare Anzahl an Ausgabebildpixeln aufweist. Beispielsweise wird die als Bearbeitungsdatensatz ausgebildete Korrekturkarte über das zweidimensionale Eingabebild des Objekts gelegt und Korrekturen der Abbildungsfehler vorgenommen. Das erzeugte zweidimensionale Ausgabebild ist dann das mit den Korrekturen versehene zweidimensionale Eingabebild des Objekts. Wenn beispielsweise der Bearbeitungsdatensatz als der zweite Datensatz ausgebildet ist, insbesondere in Form eines Polynoms, dann werden die Daten über das Objekt mit dem Bearbeitungsdatensatz derart bearbeitet, dass als zweidimensionales Ausgabebild ein Bild des Objekts erzeugt wird, das im Grunde genommen einem mit dem oben genannten zweiten optischen Abbildungssystem oder einem mit der oben genannten virtuellen Kamera erzeugten Bild des Objekts entspricht oder im Wesentlichen entspricht. Das zweidimensionale Ausgabebild des Objekts kann dann auf einer Anzeigeeinheit angezeigt werden.

Die Erfindung stellt ein Verfahren zur Erzeugung eines Bilds eines Objekts bereit, mit dem ein Abbildungsfehler oder mehrere Abbildungsfehler in real erzeugten Bildern und/oder Bildsequenzen auf einfache Weise verändert werden kann/können. Hierzu wird durch die Erfindung stets der passende Bearbeitungsdatensatz zur Verfügung gestellt, mit dem der Abbildungsfehler oder die mehreren Abbildungsfehler im real erzeugten Bild verändert werden können, insbesondere vollständig oder im Wesentlichen korrigiert werden können. Darüber hinaus gewährleistet es die Erfindung, dass künstlich erzeugte Darstellungen eines Objekts keine oder nur schwach erkennbare Unterschiede zu real erzeugten Bildern und/oder Bildsequenzen aufweisen. Auch hierzu wird stets der passende Bearbeitungsdatensatz zur Verfügung gestellt, mit dem die künstlich erzeugte Darstellung des Objekts entsprechend bearbeitet werden kann.

Bei einer Ausführungsform des erfindungsgemäßen Verfahrens ist es zusätzlich oder alternativ vorgesehen, dass der zweite Datensatz von der zweiten Datenverarbeitungseinrichtung in die erste Datenverarbeitungseinrichtung geladen wird. Darüber hinaus ist es vorgesehen, dass das Erzeugen des Bearbeitungsdatensatzes oder das Erkennen, dass der zweite Datensatz als Bearbeitungsdatensatz verwendet wird, mit der ersten Datenverarbeitungseinrichtung erfolgt.

Bei einer weiteren Ausführungsform des erfindungsgemäßen Verfahrens ist es zusätzlich oder alternativ vorgesehen, dass das Erzeugen des zweidimensionalen Ausgabebilds des Objekts mit der ersten Datenverarbeitungseinrichtung erfolgt.

Bei einer wiederum weiteren Ausführungsform des erfindungsgemäßen Verfahrens ist es zusätzlich oder alternativ vorgesehen, dass das Erzeugen des Bearbeitungsdatensatzes oder das Erkennen, dass der zweite Datensatz als Bearbeitungsdatensatz verwendet wird, mit der zweiten Datenverarbeitungseinrichtung erfolgt. Zusätzlich ist es beispielsweise vorgesehen, dass der Bearbeitungsdatensatz von der zweiten Datenverarbeitungseinrichtung in die erste Datenverarbeitungseinrichtung geladen wird und das Erzeugen des zweidimensionalen Ausgabebilds des Objekts mit der ersten Datenverarbeitungseinrichtung erfolgt. Alternativ hierzu ist beispielsweise vorgesehen, dass das Erzeugen des zweidimensionalen Ausgabebilds des Objekts mit der zweiten Datenverarbeitungseinrichtung erfolgt und dass das zweidimensionale Ausgabebild von der zweiten Datenverarbeitungseinrichtung in die erste Datenverarbeitungseinrichtung geladen wird.

Wie oben bereits erwähnt, ist es bei einer Ausführungsform des erfindungsgemäßen Verfahrens zusätzlich oder alternativ vorgesehen, dass die Daten über das Objekt mindestens ein zweidimensionales Eingabebild des Objekts umfassen. Das Eingabebild des Objekts weist eine vorgegebene Anzahl an Eingabebildpixeln auf. Das zweidimensionale Eingabebild wird beispielsweise mit einem optischen Abbildungssystem in Form einer Kamera erzeugt. Insbesondere ist es vorgesehen, das zweidimensionale Eingabebild auf einem Datenträger zu speichern, von dem die erste Datenverarbeitungseinrichtung das Eingabebild lädt und bereitstellt. Beim Erzeugen des Ausgabebilds des Objekts wird mindestens ein Eingabebildpixel der vorgegebenen Anzahl an Eingabebildpixeln des Eingabebilds des Objekts beispielsweise mit der ersten Datenverarbeitungseinrichtung und/oder mit der zweiten Datenverarbeitungseinrichtung unter Verwendung des Bearbeitungsdatensatzes bearbeitet, wobei Pixelwerte des Eingabebildpixels des Eingabebilds des Objekts mit Daten des Bearbeitungsdatensatzes geändert werden. Beispielsweise werden Grauwerte oder Farbwerte des Eingabebildpixels geändert.

Wie oben bereits erwähnt, ist es bei einer weiteren Ausführungsform des erfindungsgemäßen Verfahrens zusätzlich oder alternativ vorgesehen, dass die Daten über das Objekt mindestens eine dreidimensionale Darstellung betreffen. Die Daten über das Objekt umfassen erste Dateninhalte in einer ersten Dimension, zweite Dateninhalte in einer zweiten Dimension sowie dritte Dateninhalte in einer dritten Dimension. Die Erfindung ist nicht auf die vorbeschriebene Ausführungsform der Daten über das Objekt hinsichtlich einer dreidimensionalen Darstellung eingeschränkt. Vielmehr ist jede Ausführungsform verwendbar, welche für die Erfindung geeignet ist, beispielsweise eine dreidimensionale Darstellung, die Körper aufweist, die eine beliebige Form aufweisen können. Beispielsweise sind die Körper kugelförmig, quaderförmig und/oder rotationsförmig. Diese Körper können insbesondere additiv oder subtraktiv zusammengesetzt werden. Wie oben bereits erwähnt, kann man eine dreidimensionale Szene, die eine Sequenz von mehreren dreidimensionalen Darstellungen aufweist, und/oder eine dreidimensionale Darstellung durch mathematische Berechnung von Daten erzeugen. Hierzu wird ein mathematisches Modell der dreidimensionalen Szene und/oder der dreidimensionalen Darstellung verwendet. Das mathematische Modell umfasst beispielsweise Parameter, die insbesondere die Form, die Farbe und die Oberflächenbeschaffenheit eines zu modellierenden Objekts, welches in der dreidimensionalen Szene und/oder in der dreidimensionalen Darstellung dargestellt werden soll, beschreiben. Ferner umfasst das mathematische Modell beispielsweise Parameter, welche die Beleuchtung des Objekts beschreiben, insbesondere den Ort, die Art, die Farbe und die Richtung von zu modellierenden Lichtquellen. Darüber hinaus umfasst das mathematische Modell die Position des Objekts in der dreidimensionalen Szene und/oder in der dreidimensionalen Darstellung mindestens eines der Folgenden: die Aufnahmerichtung, das Sehfeld, die Brennweite, die Fokussierung, das Bildformat, die Größe der Bilderfassungseinheit, die Position und den Bewegungspfad einer virtuellen Kamera. Beim Erzeugen des Ausgabebilds des Objekts wird/werden beispielsweise der erste Dateninhalt, der zweite Dateninhalt und/oder der dritte Dateninhalt beispielsweise mit der ersten Datenverarbeitungseinrichtung und/oder mit der zweiten Datenverarbeitungseinrichtung unter Verwendung des Bearbeitungsdatensatzes bearbeitet, wobei der erste Dateninhalt, der zweite Dateninhalt und/oder der dritte Dateninhalt mit Daten des Bearbeitungsdatensatzes geändert wird/werden.

Wie oben bereits erwähnt, ist es bei einer noch weiteren Ausführungsform des erfindungsgemäßen Verfahrens zusätzlich oder alternativ vorgesehen, dass als erstes Abbildungssystem ein erstes optisches Abbildungssystem verwendet wird. Beispielsweise weist das erste optische Abbildungssystem ein erstes Objektiv und eine erste Bildaufnahmeeinheit auf. Die erste Bildaufnahmeeinheit ist beispielsweise als ein elektronischer Bildsensor ausgebildet. Insbesondere ist der elektronische Bildsensor als digitale Bilderfassungseinheit ausgebildet, beispielsweise in Form eines CMOS. Alternativ hierzu ist es vorgesehen, dass die Bilderfassungseinheit als ein lichtempfindlicher chemischer Film ausgebildet ist. Das erste optische Abbildungssystem ist beispielsweise als eine Kamera ausgebildet. Insbesondere ist es vorgesehen, dass die Kamera als Filmkamera ausgebildet ist, die im kinematografischen Bereich eingesetzt wird. Alternativ hierzu ist es vorgesehen, dass die Kamera als Kamera ausgebildet ist, die im fotografischen Bereich eingesetzt wird. Das erste Objektiv weist mindestens eine Linseneinheit und mindestens eine Blendeneinheit auf, welche mit einer Blendenöffnung versehen ist. Beispielsweise weist das erste Objektiv mindestens eine Linsengruppe auf, die entlang einer optischen Achse des ersten Objektivs zur Einstellung der Fokussierung des ersten Objektivs auf das Objekt und/oder zur Einstellung einer Brennweite des ersten Objektivs bewegt wird. Dabei wird vorstehend und auch nachstehend unter einer Linsengruppe eine Gruppe verstanden, die eine einzige Linse oder mehrere Linsen aufweist. Zusätzlich kann die Linsengruppe auch mindestens ein Prisma aufweisen.

Bei einer weiteren Ausführungsform des erfindungsgemäßen Verfahrens ist es zusätzlich oder alternativ vorgesehen, dass als der erste Abbildungsparameter erste Metadaten des ersten Abbildungssystems verwendet werden. Die ersten Metadaten umfassen beispielsweise Abbildungseigenschaften und/oder Funktionseinheiten des ersten Abbildungssystems. Die ersten Metadaten werden insbesondere automatisch aus den Daten über das Objekt oder aus zu den Eigenschaften des ersten Abbildungssystems korrespondierenden Daten von der ersten Datenverarbeitungseinrichtung ausgelesen oder manuell in die erste Datenverarbeitungseinrichtung eingegeben. Beispielsweise werden als der erste Abbildungsparameter mindestens einer der folgenden Parameter verwendet:

- erste Kameradaten über eine erste Kamera, mit welcher die Daten über das Objekt erzeugt wurden;
- erste Objektivdaten über ein erstes Objektiv, mit welchem die Daten über das Objekt erzeugt wurden;
- erste Blendeneinheitsdaten über eine erste Blendeneinheit, mit welcher die Daten über das Objekt erzeugt wurden;
- erste Fokussiereinheitsdaten über eine erste Fokussiereinheit, mit welcher die Daten über das Objekt erzeugt wurden;
- erste Brennweiteneinstelleinheitsdaten über eine erste Brennweiteneinstelleinheit, mit welcher die Daten über das Objekt erzeugt wurden;
- erste Informationen über eine Position und eine Lage des ersten Abbildungssystems im Raum. Mit anderen Worten ausgedrückt, werden erste Informationen über die Position und die Ausrichtung des ersten Abbildungssystems beispielsweise im dreidimensionalen Raum bereitgestellt; sowie
- erste Informationen über eine Auflösung des ersten Abbildungssystems. Mit anderen Worten ausgedrückt, wird die Auflösung, mit welcher die Daten über das Objekt erzeugt wurden, bereitgestellt. Beispielsweise ist die Auflösung eine sogenannte "Full-HD"-Auflösung, also insbesondere eine Auflösung von 1920 × 1080 Pixel. Zusätzlich oder alternativ hierzu ist die Auflösung eine sogenannte 2k-Auflösung, also insbesondere eine Auflösung von 2560 × 1440 Pixel. Die Erfindung ist aber nicht auf die vorgenannten Auflösungen eingeschränkt. Vielmehr ist jede Auflösung verwendbar, welche für die Erfindung geeignet ist. Zusätzlich oder alternativ ist es vorgesehen, dass die ersten Informationen eine von einem Benutzer gewünschte, beispielsweise in die erste Datenverarbeitungseinrichtung eingebbare Zielauflösung aufweist. Die Zielauflösung kann beispielsweise eine der vorgenannten Auflösungen sein.

Bei einer noch weiteren Ausführungsform des erfindungsgemäßen Verfahrens ist es zusätzlich oder alternativ vorgesehen, dass als zweites Abbildungssystem ein zweites optisches Abbildungssystem verwendet wird. Beispielsweise weist das zweite optische Abbildungssystem ein zweites Objektiv und eine zweite Bildaufnahmeeinheit auf. Die zweite Bildaufnahmeeinheit ist beispielsweise als ein elektronischer Bildsensor ausgebildet. Insbesondere ist der elektronische Bildsensor als digitale Bilderfassungseinheit ausgebildet, beispielsweise in Form eines CMOS. Alternativ hierzu ist es vorgesehen, dass die zweite Bilderfassungseinheit als ein lichtempfindlicher chemischer Film ausgebildet ist. Das zweite optische Abbildungssystem ist beispielsweise als eine Kamera ausgebildet. Insbesondere ist es vorgesehen, dass die Kamera als Filmkamera ausgebildet ist, die im kinematografischen Bereich eingesetzt wird. Alternativ hierzu ist es vorgesehen, dass die Kamera als Kamera ausgebildet ist, die im fotografischen Bereich eingesetzt wird. Das zweite Objektiv weist mindestens eine Linseneinheit und mindestens eine Blendeneinheit auf, welche mit einer Blendenöffnung versehen ist. Beispielsweise weist das zweite Objektiv mindestens eine Linsengruppe auf, die entlang einer optischen Achse des zweiten Objektivs zur Einstellung der Fokussierung des zweiten Objektivs auf das Objekt und/oder zur Einstellung einer Brennweite des zweiten Objektivs bewegt wird. Dabei wird vorstehend und auch nachstehend unter einer Linsengruppe eine Gruppe verstanden, die eine einzige Linse oder mehrere Linsen aufweist. Zusätzlich kann die Linsengruppe auch mindestens ein Prisma aufweisen.

Bei einer wiederum weiteren Ausführungsform des erfindungsgemäßen Verfahrens ist es zusätzlich oder alternativ vorgesehen, dass als der zweite Abbildungsparameter zweite Metadaten des zweiten Abbildungssystems verwendet werden. Die zweiten Metadaten umfassen beispielsweise Abbildungseigenschaften und/oder Funktionseinheiten des zweiten Abbildungssystems. Die zweiten Metadaten werden insbesondere automatisch aus den Daten über das Objekt oder aus zu den Eigenschaften des zweiten Abbildungssystems korrespondierenden Daten von der ersten Datenverarbeitungseinrichtung ausgelesen oder manuell in die erste Datenverarbeitungseinrichtung eingegeben. Beispielsweise werden als der zweite Abbildungsparameter mindestens einer der folgenden Parameter verwendet:

- zweite Kameradaten über eine zweite Kamera, mit deren Eigenschaften die Daten über das Objekt auf der Anzeigeeinheit dargestellt werden sollen;

- zweite Objektivdaten über ein zweites Objektiv, mit dessen Eigenschaften die Daten über das Objekt auf der Anzeigeeinheit dargestellt werden sollen;

- zweite Blendeneinheitsdaten über eine zweite Blendeneinheit, mit deren Eigenschaften die Daten über das Objekt auf der Anzeigeeinheit dargestellt werden sollen;

- zweite Fokussiereinheitsdaten über eine zweite Fokussiereinheit, mit deren Eigenschaften die Daten über das Objekt auf der Anzeigeeinheit dargestellt werden sollen;

- zweite Brennweiteneinstelleinheitsdaten über eine zweite Brennweiteneinstelleinheit, mit deren Eigenschaften die Daten über das Objekt auf der Anzeigeeinheit dargestellt werden sollen;

- zweite Informationen über eine Position und eine Lage des zweiten Abbildungssystems im Raum. Mit anderen Worten ausgedrückt, werden zweite Informationen über die Position und die Ausrichtung des zweiten Abbildungssystems beispielsweise im dreidimensionalen Raum bereitgestellt; sowie

- zweite Informationen über eine Auflösung des zweiten Abbildungssystems. Mit anderen Worten ausgedrückt, wird die Auflösung, mit der die Daten über das Objekt auf der Anzeigeeinheit dargestellt werden soll, bereitgestellt. Beispielsweise ist die Auflösung eine sogenannte "Full-HD"-Auflösung, also insbesondere eine Auflösung von 1920 × 1080 Pixel. Zusätzlich oder alternativ hierzu ist die Auflösung eine sogenannte 2k-Auflösung, also insbesondere eine Auflösung von 2560 × 1440 Pixel. Die Erfindung ist aber nicht auf die vorgenannten Auflösungen eingeschränkt. Vielmehr ist jede Auflösung verwendbar, welche für die Erfindung geeignet ist. Zusätzlich oder alternativ ist es vorgesehen, dass die zweiten Informationen eine von einem Benutzer gewünschte, insbesondere manuell in die erste Datenverarbeitungseinrichtung eingebbare Zielauflösung aufweist. Die Zielauflösung kann beispielsweise eine der vorgenannten Auflösungen sein.

Bei einer Ausführungsform des erfindungsgemäßen Verfahrens ist es zusätzlich oder alternativ vorgesehen, dass als Veränderungsdaten Daten zur Veränderung einer Verzeichnung des ersten Abbildungssystems verwendet werden. Zusätzlich oder alternativ hierzu ist es vorgesehen, dass als Veränderungsdaten Daten zur Veränderung einer Vignettierung des ersten Abbildungssystems verwendet werden.

Bei einer weiteren Ausführungsform des erfindungsgemäßen Verfahrens ist es zusätzlich oder alternativ vorgesehen, dass als Veränderungsdaten Daten zur Korrektur einer Verzeichnung des ersten Abbildungssystems verwendet werden. Zusätzlich oder alternativ hierzu ist es vorgesehen, dass als Veränderungsdaten Daten zur Korrektur einer Vignettierung des ersten Abbildungssystems verwendet werden.

Wie oben bereits erwähnt, ist es bei einer Ausführungsform des erfindungsgemäßen Verfahrens zusätzlich oder alternativ vorgesehen, dass als das zweite Abbildungssystem eine virtuelle Kamera verwendet wird, wobei mit der virtuellen Kamera ein Bild des Objekts durch mathematische Berechnung basierend auf den Daten über das Objekt derart erzeugt wird, als ob eine Kamera, welche die durch den zweiten Abbildungsparameter gewählte Eigenschaft aufweist, das Objekt tatsächlich abbildet. Wie ebenfalls oben bereits erwähnt, ist es bei einer Ausführungsform des erfindungsgemäßen Verfahrens vorgesehen, dass als zweiter Datensatz eine mathematische Abbildungsvorschrift, insbesondere ein Polynom oder eine Fourier-Entwicklung, verwendet wird, wobei die mathematische Abbildungsvorschrift die virtuelle Kamera repräsentiert und in mathematischer Form beschreibt, wie und wo ein in ein Objektiv der virtuellen Kamera einfallender und aus dem Objektiv wieder austretender Lichtstrahl auf einer Bilderfassungseinheit der virtuellen Kamera abgebildet wird. Es wird explizit darauf hingewiesen, dass die mathematische Abbildungsvorschrift nicht auf die vorgenannten Ausführungsformen eingeschränkt ist. Vielmehr ist jede mathematische Abbildungsvorschrift verwendbar, welche für die Erfindung geeignet ist.

Bei dem erfindungsgemäßen Verfahren ist es vorgesehen, dass der von der ersten Datenverarbeitungseinrichtung in die zweite Datenverarbeitungseinrichtung geladene erste Datensatz Benutzeridentifikationsdaten aufweist. Bei einer noch weiteren Ausführungsform des erfindungsgemäßen Verfahrens ist es zusätzlich oder alternativ vorgesehen, dass der von der ersten Datenverarbeitungseinrichtung in die zweite Datenverarbeitungseinrichtung geladene erste Datensatz Identifikationsdaten der Daten über das Objekt aufweist. Mit anderen Worten ausgedrückt, wird ein erster Datensatz verwendet, der mittels der Identifikationsdaten eine eindeutige Identifikation der Daten über das Objekt ermöglicht. Damit ist es beispielsweise möglich, ein zweidimensionales Eingabebild und/oder Daten über das Objekt, die eine dreidimensionale Darstellung betreffen, eindeutig zu identifizieren. Entsprechendes gilt für die Benutzeridentifikationsdaten. Mittels der Benutzeridentifikationsdaten ist es möglich, einen Benutzer des erfindungsgemäßen Verfahrens eindeutig zu identifizieren. Beispielsweise umfassen die Benutzeridentifikationsdaten eine Verwendungsberechtigung zur Durchführung des erfindungsgemäßen Verfahrens oder von Teilen des erfindungsgemäßen Verfahrens. Die Verwendungsberechtigung kann beispielsweise dann vorliegen, wenn der Benutzer für die Durchführung des erfindungsgemäßen Verfahrens bezahlt hat, in naher Zukunft bezahlen wird, ihm ein Verfügungsrahmen für die Durchführung des erfindungsgemäßen Verfahrens zur Verfügung steht oder er eine Lizenz zur Durchführung des erfindungsgemäßen Verfahrens erworben hat.

Bei dem erfindungsgemäßen Verfahren ist es vorgesehen, dass der folgende Verfahrensschritt durchgeführt wird: Prüfen anhand der Benutzeridentifikationsdaten unter Verwendung der ersten Datenverarbeitungseinrichtung und/oder der zweiten Datenverarbeitungseinrichtung, ob eine Verwendungsberechtigung für die Verwendung des zweiten Datensatzes mit der ersten

Datenverarbeitungseinrichtung und/oder der zweiten Datenverarbeitungseinrichtung vorliegt, und Erzeugen des Bearbeitungsdatensatzes nur dann, wenn die Verwendungsberechtigung vorliegt. Bei einer wiederum weiteren Ausführungsform des erfindungsgemäßen Verfahrens ist es zusätzlich oder alternativ vorgesehen, dass der folgende Verfahrensschritt durchgeführt wird: Prüfen anhand der Identifikationsdaten unter Verwendung der ersten Datenverarbeitungseinrichtung und/oder der zweiten Datenverarbeitungseinrichtung, ob eine Verwendungsberechtigung für die Verwendung des zweiten Datensatzes mit der ersten Datenverarbeitungseinrichtung und/oder der zweiten Datenverarbeitungseinrichtung vorliegt, und Erzeugen des Bearbeitungsdatensatzes nur dann, wenn die Verwendungsberechtigung vorliegt. Beispielsweise werden die vorgenannten Verfahrensschritte vor dem Erzeugen oder Erkennen des Bearbeitungsdatensatzes mit der ersten Datenverarbeitungseinrichtung durchgeführt.

Bei einer noch weiteren Ausführungsform des erfindungsgemäßen Verfahrens ist es zusätzlich oder alternativ vorgesehen, dass - beispielsweise nach dem Laden des zweiten Datensatzes von der zweiten Datenverarbeitungseinrichtung in die erste Datenverarbeitungseinrichtung - die folgenden Verfahrensschritte durchgeführt werden: (i) die Identifikationsdaten und/oder die Benutzeridentifikationsdaten werden erneut von der ersten Datenverarbeitungseinrichtung in die zweite Datenverarbeitungseinrichtung geladen, sowie (ii) anhand der Identifikationsdaten und/oder der Benutzeridentifikationsdaten wird unter Verwendung der zweiten Datenverarbeitungseinrichtung geprüft, ob eine Verwendungsberechtigung für die Verwendung des zweiten Datensatzes mit der ersten Datenverarbeitungseinrichtung und/oder der zweiten Datenverarbeitungseinrichtung vorliegt. Der Bearbeitungsdatensatz wird nur dann erzeugt, wenn die Verwendungsberechtigung vorliegt. Beispielsweise werden die vorgenannten Verfahrensschritte vor dem Erzeugen oder Erkennen des Bearbeitungsdatensatzes mit der ersten Datenverarbeitungseinrichtung durchgeführt.

Bei einer Ausführungsform des erfindungsgemäßen Verfahrens ist es zusätzlich oder alternativ vorgesehen, dass nach der Erzeugung des zweidimensionalen Ausgabebilds des Objekts das zweidimensionale Ausgabebild nochmals geändert wird. Hierzu ist es bei dieser Ausführungsform vorgesehen, dass die zweiten Daten des zweiten Datensatzes Änderungsdaten zur Änderung des erzeugten Ausgabebilds des Objekts zur Einarbeitung von Abbildungsfehlern in das Ausgabebild des Objekts in Abhängigkeit des ersten Abbildungsparameters des ersten Abbildungssystems umfassen. Ferner weist der Bearbeitungsdatensatz nach dessen Erzeugung oder Erkennung Bearbeitungsdaten basierend auf den Änderungsdaten auf. Bei der Ausführungsform des erfindungsgemäßen Verfahrens ist es vorgesehen, dass ein Ändern des Ausgabebilds des Objekts durch Bearbeiten mindestens eines Ausgabebildpixels der vorgebbaren Anzahl an Ausgabebildpixeln des Ausgabebilds des Objekts beispielsweise mit der ersten Datenverarbeitungseinrichtung und/oder mit der zweiten Datenverarbeitungseinrichtung unter Verwendung der Bearbeitungsdaten erfolgt, wobei Pixelwerte des Ausgabebildpixels des Ausgabebilds des Objekts mit den Bearbeitungsdaten geändert werden. Bei dieser Ausführungsform ist von Vorteil, dass ein zuvor beispielsweise vollständig oder nahezu vollständig korrigiertes und abbildungsfehlerfreies Ausgabebild durch Einarbeitung von Abbildungsfehlern derart bearbeitet wird, dass ein nahezu natürlicher ästhetischer Eindruck wie bei einem realen Bild, das mit einem optischen Abbildungssystem erstellt wurde, entsteht.

Die Erfindung betrifft ein weiteres Verfahren zur Erzeugung eines Bilds eines Objekts. Das weitere erfindungsgemäße Verfahren kann mindestens eines der oben genannten Merkmale oder eine Kombination von mindestens zwei der weiter oben genannten Merkmale aufweisen. Bei dem weiteren erfindungsgemäßen Verfahren werden ebenfalls Daten über das Objekt mit einer ersten Datenverarbeitungseinrichtung bereitgestellt. Es wird hinsichtlich der Daten über das Objekt und der ersten Datenverarbeitungseinrichtung auf die weiter oben gemachten Ausführungen verwiesen, die auch hier gelten.

Das weitere erfindungsgemäße Verfahren umfasst auch ein Bereitstellen mindestens eines ersten Datensatzes mit der ersten Datenverarbeitungseinrichtung. Der erste Datensatz weist erste Daten auf, die Folgendes umfassen: (i) mindestens einen ersten Abbildungsparameter eines ersten Abbildungssystems, mit dem die Daten über das Objekt erzeugt wurden, und/oder (ii) mindestens einen zweiten Abbildungsparameter eines zweiten Abbildungssystems, mit dessen Eigenschaften ein Bild des Objekts basierend auf den Daten über das Objekt auf einer Anzeigeeinheit dargestellt werden soll. Hinsichtlich des ersten Abbildungsparameters, des ersten Abbildungssystems, des zweiten Abbildungsparameters und des zweiten Abbildungssystems wird auf die oben gemachten Ausführungen verwiesen, die auch hier gelten.

Bei dem weiteren erfindungsgemäßen Verfahren erfolgt auch ein Laden des ersten Datensatzes von der ersten Datenverarbeitungseinrichtung in eine zweite Datenverarbeitungseinrichtung. Hinsichtlich der zweiten Datenverarbeitungseinrichtung wird auf die weiter oben gemachten Ausführungen verwiesen, die auch hier gelten.

Ferner erfolgt bei dem weiteren erfindungsgemäßen Verfahren ein Erzeugen eines Lizenzdatensatzes in Abhängigkeit des in die zweite Datenverarbeitungseinrichtung geladenen ersten Datensatzes. Der Lizenzdatensatz ist im Grunde genommen ein elektronischer Schlüssel, mit dem ein geeigneter zweiter Datensatz entschlüsselt (also geöffnet) werden kann, um die Daten über das Objekt zu bearbeiten. Im Anschluss daran erfolgt ein Laden des Lizenzdatensatzes von der zweiten Datenverarbeitungseinrichtung in die erste Datenverarbeitungseinrichtung.

Das weitere erfindungsgemäße Verfahren umfasst ferner ein Laden eines zweiten Datensatzes aus einem Datenspeicher in die erste Datenverarbeitungseinrichtung in Abhängigkeit des in die zweite Datenverarbeitungseinrichtung geladenen ersten Datensatzes. Der zweite Datensatz weist zweite Daten auf, die Folgendes umfassen: (i) Veränderungsdaten zur Veränderung von Abbildungsfehlern in Abhängigkeit des ersten Abbildungsparameters des ersten Abbildungssystems und/oder (ii) Änderungsdaten zur Änderung der Daten über das Objekt in Abhängigkeit des zweiten Abbildungsparameters des zweiten Abbildungssystems. Hinsichtlich des zweiten Datensatzes wird auf die weiter oben gemachten Ausführungen verwiesen, die auch hier gelten. Darüber hinaus erfolgt bei dem weiteren erfindungsgemäßen Verfahren ein Entschlüsseln des zweiten Datensatzes unter Verwendung des Lizenzdatensatzes.

Ferner ist es bei dem weiteren erfindungsgemäßen Verfahren vorgesehen, dass ein Bearbeitungsdatensatz mit der ersten Datenverarbeitungseinrichtung basierend auf dem zweiten Datensatz erzeugt wird. Beispielsweise umfasst der Bearbeitungsdatensatz eine Korrekturkarte. Alternativ hierzu ist es vorgesehen, dass mit der ersten Datenverarbeitungseinrichtung erkannt wird, dass der zweite Datensatz unverändert als Bearbeitungsdatensatz verwendet wird.

Darüber hinaus ist es bei dem weiteren erfindungsgemäßen Verfahren vorgesehen, dass ein zweidimensionales Ausgabebild des Objekts durch Bearbeiten der Daten über das Objekt unter Verwendung des Bearbeitungsdatensatzes beispielsweise mit der ersten Datenverarbeitungseinrichtung und/oder der zweiten Datenverarbeitungseinrichtung erzeugt wird, wobei das Ausgabebild eine vorgebbare Anzahl an Ausgabebildpixeln aufweist. Beispielsweise wird die als Bearbeitungsdatensatz ausgebildete Korrekturkarte über das zweidimensionale Eingabebild des Objekts gelegt und Korrekturen der Abbildungsfehler vorgenommen. Das erzeugte zweidimensionale Ausgabebild ist dann das mit den Korrekturen versehene zweidimensionale Eingabebild des Objekts. Wenn beispielsweise der Bearbeitungsdatensatz als der zweite Datensatz ausgebildet ist, insbesondere in Form eines Polynoms, dann werden die Daten über das Objekt mit dem Bearbeitungsdatensatz derart bearbeitet, dass als zweidimensionales Ausgabebild ein Bild des Objekts erzeugt wird, das im Grunde genommen einem mit dem oben genannten zweiten optischen Abbildungssystem oder einem mit der oben genannten virtuellen Kamera erzeugten Bild des Objekts entspricht oder im Wesentlichen entspricht. Das zweidimensionale Ausgabebild des Objekts kann dann auf einer Anzeigeeinheit angezeigt werden.

Auch das weitere erfindungsgemäße Verfahren weist die Vorteile auf, die weiter oben bereits genannt sind. Diese gelten auch hier.

Die Erfindung betrifft auch ein Computerprogrammprodukt mit einem Programmcode, der in einen Prozessor eines Bilderzeugungssystems teilweise oder vollständig ladbar ist oder geladen ist und der, wenn er in dem Prozessor geladen ist, bei seiner Ausführung das Bilderzeugungssystem derart steuert, dass ein Verfahren mit mindestens einem der oben genannten oder weiter unten genannten Merkmale oder mit einer Kombination aus mindestens zwei der weiter oben oder weiter unten genannten Merkmale durchgeführt wird. Mit anderen Worten ausgedrückt, betrifft die Erfindung ein Computerprogrammprodukt, das in einen Prozessor teilweise oder vollständig ladbar ist oder geladen ist und bei Ausführung in dem Prozessor ein Bilderzeugungssystem derart steuert, dass ein Verfahren mit mindestens einem der oben genannten oder weiter unten genannten Merkmale oder mit einer Kombination aus mindestens zwei der weiter oben oder weiter unten genannten Merkmale durchgeführt wird.

Die Erfindung betrifft auch ein Bilderzeugungssystem zur Erzeugung eines Bilds eines Objekts. Das erfindungsgemäße Bilderzeugungssystem weist eine Anzeigeeinheit auf, die beispielsweise als ein Monitor ausgebildet ist. Die Erfindung ist aber nicht auf eine derartige Anzeigeeinheit eingeschränkt. Vielmehr kann für die Erfindung jede Anzeigeeinheit verwendet werden, die für die Erfindung geeignet ist. Ferner weist das erfindungsgemäße Bilderzeugungssystem ein erstes Abbildungssystem und ein zweites Abbildungssystem auf. Zusätzlich weist das erfindungsgemäße Bilderzeugungssystem eine erste Datenverarbeitungseinrichtung zur Bereitstellung von Daten über das Objekt und zur Bereitstellung eines ersten Datensatzes auf, der erste Daten aufweist. Die ersten Daten umfassen mindestens einen ersten Abbildungsparameter des ersten Abbildungssystems, mit dem die Daten über das Objekt erzeugt wurden. Zusätzlich oder alternativ hierzu umfassen die ersten Daten mindestens einen zweiten Abbildungsparameter des zweiten Abbildungssystems, mit dessen Eigenschaften ein Bild des Objekts basierend auf den Daten über das Objekt auf der Anzeigeeinheit dargestellt werden soll. Hinsichtlich des ersten Abbildungsparameters und des zweiten Abbildungsparameters wird auf die Ausführungen weiter oben verwiesen, die auch hier gelten. Auch hinsichtlich des ersten Abbildungssystems und des zweiten Abbildungssystems wird auf die Ausführungen weiter oben verwiesen, die auch hier gelten.

Bei der ersten Datenverarbeitungseinrichtung handelt es sich beispielsweise um ein elektronisches System, das aus einer Zentraleinheit und aus peripheren Geräten gebildet ist. Beispielsweise ist die Zentraleinheit ein lokaler Computer, eine Servereinheit, ein Netzwerk mit mehreren Workstations, ein Cloud-basierter virtueller Server, ein Tabletcomputer und/oder ein Smartphone. Die peripheren Geräte sind beispielsweise als Eingabe- und/oder Ausgabeeinheit, insbesondere in Form einer Tastatur, und/oder als Monitor ausgebildet.

Das erfindungsgemäße Bilderzeugungssystem weist eine zweite Datenverarbeitungseinrichtung auf, die mit der ersten Datenverarbeitungseinrichtung zum Datenaustausch verbunden ist. Insbesondere ist es vorgesehen, die erste Datenverarbeitungseinrichtung leitungstechnisch mit der zweiten Datenverarbeitungseinrichtung zu verbinden. Zusätzlich oder alternativ hierzu ist es vorgesehen, die erste Datenverarbeitungseinrichtung drahtlos mit der zweiten Datenverarbeitungseinrichtung derart zu verbinden, dass ein Datenaustausch erfolgen kann. Beispielsweise ist die drahtlose Verbindung zwischen der ersten Datenverarbeitungseinrichtung und der zweiten Datenverarbeitungseinrichtung eine Funkverbindung oder WLAN-Verbindung. Zusätzlich oder alternativ hierzu sind die erste Datenverarbeitungseinrichtung und die zweite Datenverarbeitungseinrichtung über das Internet miteinander verbunden. Bei der zweiten Datenverarbeitungseinrichtung handelt es sich beispielsweise um ein elektronisches System, das eine Zentraleinheit aufweist. Beispielsweise ist die Zentraleinheit ein lokaler Computer, eine Servereinheit, ein Netzwerk mit mehreren Workstations, ein Cloud-basierter virtueller Server, ein Tabletcomputer und/oder ein Smartphone. Zusätzlich kann die zweite Datenverarbeitungseinrichtung beispielsweise mit peripheren Geräten versehen sein. Die peripheren Geräte sind insbesondere als Eingabe- und/oder Ausgabeeinheit, beispielsweise in Form einer Tastatur, und/oder als Monitor ausgebildet.

Das erfindungsgemäße Bilderzeugungssystem weist zusätzlich einen Datenspeicher auf, in dem ein zweiter Datensatz gespeichert ist, wobei der zweite Datensatz zweite Daten aufweist. Die zweiten Daten umfassen Veränderungsdaten zur Veränderung von Abbildungsfehlern in Abhängigkeit des ersten Abbildungsparameters des ersten Abbildungssystems. Beispielsweise sind die Veränderungsdaten Daten zur Korrektur von Abbildungsfehlern in Abhängigkeit des ersten Abbildungsparameters des ersten Abbildungssystems. Zusätzlich oder alternativ hierzu weisen die zweiten Daten Änderungsdaten zur Änderung der Daten über das Objekt in Abhängigkeit des zweiten Abbildungsparameters des zweiten Abbildungssystems auf. Der Datenspeicher ist beispielsweise der ersten Datenverarbeitungseinrichtung und/oder der zweiten Datenverarbeitungseinrichtung zugeordnet. Beispielsweise ist es vorgesehen, dass der Datenspeicher eine Einheit der ersten Datenverarbeitungseinrichtung und/oder der zweiten Datenverarbeitungseinrichtung ist. Der Ort des Datenspeichers muss nicht identisch zum Ort der ersten Datenverarbeitungseinrichtung und/oder der zweiten Datenverarbeitungseinrichtung sein. Vielmehr kann der Datenspeicher auch örtlich getrennt von der ersten Datenverarbeitungseinrichtung und/oder der zweiten Datenverarbeitungseinrichtung angeordnet sein.

Darüber hinaus umfasst das erfindungsgemäße Bilderzeugungssystem einen Prozessor, in dem ein Computerprogrammprodukt geladen ist, das mindestens eines der oben genannten oder weiter unten genannten Merkmale oder eine Kombination aus mindestens zwei der weiter oben oder weiter unten genannten Merkmale aufweist.

Bei einer Ausführungsform des erfindungsgemäßen Bilderzeugungssystems ist es zusätzlich oder alternativ vorgesehen, dass das erste Abbildungssystem als erstes optisches Abbildungssystem ausgebildet ist. Insbesondere ist es vorgesehen, dass das erste optische Abbildungssystem mindestens eine Linse aufweist. Beispielsweise weist das erste optische Abbildungssystem ein erstes Objektiv und eine erste Bildaufnahmeeinheit auf. Die erste Bildaufnahmeeinheit ist beispielsweise als ein elektronischer Bildsensor ausgebildet. Insbesondere ist der elektronische Bildsensor als digitale Bilderfassungseinheit ausgebildet, beispielsweise in Form eines CMOS. Alternativ hierzu ist es vorgesehen, dass die Bilderfassungseinheit als ein lichtempfindlicher chemischer Film ausgebildet ist. Das erste optische Abbildungssystem ist beispielsweise als eine Kamera ausgebildet. Insbesondere ist es vorgesehen, dass die Kamera als Filmkamera ausgebildet ist, die im kinematografischen Bereich eingesetzt wird. Alternativ hierzu ist es vorgesehen, dass die Kamera als Kamera ausgebildet ist, die im fotografischen Bereich eingesetzt wird. Das erste Objektiv weist mindestens eine Linseneinheit und mindestens eine Blendeneinheit auf, welche mit einer Blendenöffnung versehen ist. Beispielsweise weist das erste Objektiv mindestens eine Linsengruppe auf, die entlang einer optischen Achse des ersten Objektivs zur Einstellung der Fokussierung des ersten Objektivs auf das Objekt und/oder zur Einstellung einer Brennweite des ersten Objektivs bewegt wird. Dabei wird vorstehend und auch nachstehend unter einer Linsengruppe eine Gruppe verstanden, die eine einzige Linse oder mehrere Linsen aufweist. Zusätzlich kann die Linsengruppe auch mindestens ein Prisma aufweisen.

Bei einer weiteren Ausführungsform des erfindungsgemäßen Bilderzeugungssystems ist es zusätzlich oder alternativ vorgesehen, dass das erste Abbildungssystem als ein Computergrafiksystem ausgebildet ist, mit dem eine dreidimensionale Szene, die eine Sequenz von mehreren dreidimensionalen Darstellungen aufweist, durch mathematische Berechnung von Daten erzeugt wird. Alternativ wird mit dem Computergrafiksystem eine dreidimensionale Darstellung durch mathematische Berechnung von Daten erzeugt. Die ersten Daten des ersten Datensatzes umfassen dann beispielsweise die durch diese mathematische Berechnung erzeugten Daten. Zusätzlich oder alternativ hierzu werden die vorgenannten mathematisch berechneten Daten in eine zweidimensionale Bildsequenz und/oder in ein zweidimensionales Bild umgewandelt. Dann umfassen die ersten Daten Daten der zweidimensionalen Bildsequenz und/oder des zweidimensionalen Bilds.

Wie zuvor genannt, werden die Daten einer dreidimensionalen Szene oder einer dreidimensionalen Darstellung mathematisch berechnet. Hierzu verwendet ein Computergrafiker beispielsweise ein mathematisches Modell einer dreidimensionalen Szene und/oder einer dreidimensionalen Darstellung. Das mathematische Modell umfasst beispielsweise Parameter, die insbesondere die Form, die Farbe und die Oberflächenbeschaffenheit eines zu modellierenden Objekts, welches in der dreidimensionalen Szene und/oder in der dreidimensionalen Darstellung dargestellt werden soll, beschreiben. Ferner umfasst das mathematische Modell beispielsweise Parameter, welche die Beleuchtung des Objekts beschreiben, insbesondere den Ort, die Art, die Farbe und die Richtung von zu modellierenden Lichtquellen. Darüber hinaus umfasst das mathematische Modell die Position des Objekts in der dreidimensionalen Szene und/oder in der dreidimensionalen Darstellung mindestens eines der Folgenden: die Aufnahmerichtung, das Sehfeld, die Brennweite, die Fokussierung, das Bildformat, die Größe der Bilderfassungseinheit, die Position und den Bewegungspfad einer virtuellen Kamera.

Bei einer noch weiteren Ausführungsform des erfindungsgemäßen Bilderzeugungssystems ist es zusätzlich oder alternativ vorgesehen, dass das zweite Abbildungssystem als optisches Abbildungssystem ausgebildet ist. Beispielsweise weist das zweite optische Abbildungssystem mindestens eine Linse auf. Das zweite optische Abbildungssystem ist beispielsweise als eine Kamera ausgebildet. Insbesondere ist es vorgesehen, dass die Kamera als Filmkamera ausgebildet ist, die im kinematografischen Bereich eingesetzt wird. Alternativ hierzu ist es vorgesehen, dass die Kamera als Kamera ausgebildet ist, die im fotografischen Bereich eingesetzt wird. Das zweite Objektiv weist mindestens eine Linseneinheit und mindestens eine Blendeneinheit auf, welche mit einer Blendenöffnung versehen ist. Beispielsweise weist das zweite Objektiv mindestens eine Linsengruppe auf, die entlang einer optischen Achse des zweiten Objektivs zur Einstellung der Fokussierung des zweiten Objektivs auf das Objekt und/oder zur Einstellung einer Brennweite des zweiten Objektivs bewegt wird. Dabei wird vorstehend und auch nachstehend unter einer Linsengruppe eine Gruppe verstanden, die eine einzige Linse oder mehrere Linsen aufweist. Zusätzlich kann die Linsengruppe auch mindestens ein Prisma aufweisen.

Bei einer Ausführungsform des erfindungsgemäßen Bilderzeugungssystems ist es zusätzlich oder alternativ vorgesehen, dass das zweite Abbildungssystem als eine virtuelle Kamera ausgebildet ist. Der mindestens zweite Abbildungsparameter bewirkt, dass ein Bild des Objekts basierend auf den Daten über das Objekt derart auf der Anzeigeeinheit dargestellt wird, als ob die den zweiten Abbildungsparameter verwendende virtuelle Kamera das Objekt tatsächlich abbilden würde. Mit anderen Worten ausgedrückt, soll ein Bild des Objekts durch mathematische Berechnung basierend auf den Daten über das Objekt erzeugt werden und derart auf der Anzeigeeinheit dargestellt werden, als ob eine Kamera, welche die durch den zweiten Abbildungsparameter gewählte Eigenschaft aufweist, das Objekt tatsächlich abbildet.

Wie oben bereits erwähnt, ist es bei einer Ausführungsform des erfindungsgemä-ßen Bilderzeugungssystems zusätzlich oder alternativ vorgesehen, dass das erste Abbildungssystem mindestens eines der folgenden Merkmale aufweist: eine erste Kamera, ein erstes Objektiv, eine erste Blendeneinheit, eine erste Fokussiereinheit und/oder eine erste Brennweiteneinstelleinheit. Hinsichtlich der ersten Kamera und des ersten Objektivs wird auf die weiter oben gemachten Ausführungen verwiesen, die auch hier gelten. Die erste Blendeneinheit ist beispielsweise eine Blende mit einer verstellbaren Öffnung. Die erste Fokussiereinheit und die erste Brennweiteneinstelleinheit weisen beispielsweise einzelne Linsen oder mehrere Linsen auf, die zu Linsengruppen zusammengefasst werden können. Einzelne oder mehrere Linsen sind beweglich ausgestaltet, so dass zum einen das erste Abbildungssystem auf ein Objekt fokussiert werden kann und zum anderen eine Brennweite des ersten Abbildungssystems eingestellt werden kann.

Wie oben bereits erwähnt, ist es bei einer weiteren Ausführungsform des erfindungsgemäßen Bilderzeugungssystems zusätzlich oder alternativ vorgesehen, dass das zweite Abbildungssystem mindestens eines der folgenden Merkmale aufweist: eine zweite Kamera, ein zweites Objektiv, eine zweite Blendeneinheit, eine zweite Fokussiereinheit und/oder eine zweite Brennweiteneinstelleinheit. Hinsichtlich der zweiten Kamera und des zweiten Objektivs wird auf die weiter oben gemachten Ausführungen verwiesen, die auch hier gelten. Die zweite Blendeneinheit ist beispielsweise eine Blende mit einer verstellbaren Öffnung. Die zweite Fokussiereinheit und die zweite Brennweiteneinstelleinheit weisen beispielsweise einzelne Linsen oder mehrere Linsen auf, die zu Linsengruppen zusammengefasst werden können. Einzelne oder mehrere Linsen sind beweglich ausgestaltet, so dass zum einen das zweite Abbildungssystem auf ein Objekt fokussiert werden kann und zum anderen eine Brennweite des zweiten Abbildungssystems eingestellt werden kann.

Wie oben bereits erwähnt, ist es bei einer Ausführungsform des erfindungsgemä-ßen Bilderzeugungssystems zusätzlich oder alternativ vorgesehen, dass das zweite Abbildungssystem eine virtuelle Kamera zur Erzeugung eines Bilds des Objekts durch mathematische Berechnung basierend auf den Daten über das Objekt derart ist, als ob eine Kamera, welche die durch den zweiten Abbildungsparameter gewählte Eigenschaft aufweist, das Objekt tatsächlich abbildet. Zusätzlich oder alternativ hierzu ist es vorgesehen, dass der zweite Datensatz als eine mathematische Abbildungsvorschrift, insbesondere als ein Polynom oder als eine Fourier-Entwicklung ausgebildet ist, wobei die mathematische Abbildungsvorschrift die virtuelle Kamera repräsentiert und in mathematischer Form beschreibt, wie und wo ein in ein Objektiv der virtuellen Kamera einfallender und aus dem Objektiv wieder austretender Lichtstrahl auf einer Bilderfassungseinheit der virtuellen Kamera abgebildet wird. Es wird explizit darauf hingewiesen, dass die mathematische Abbildungsvorschrift nicht auf die vorgenannten Ausführungsformen eingeschränkt ist. Vielmehr ist jede mathematische Abbildungsvorschrift verwendbar, welche für die Erfindung geeignet ist.

Weitere praktische Ausführungsformen und Vorteile der Erfindung sind nachfolgend im Zusammenhang mit den Zeichnungen beschrieben. Dabei zeigen:

Fig. 1      eine schematische Darstellung eines erfindungsgemäßen Bilderzeugungssystems;

Fig. 2      eine schematische Darstellung eines Abbildungssystems in Form einer Kamera;

Fig.3      eine weitere schematische Darstellung des Abbildungssystems gemäß der Figur 2;

Fig. 4      eine schematische Darstellung eines Ablaufdiagramms einer Ausführungsform eines erfindungsgemäßen Verfahrens;

Fig. 5      eine schematische Darstellung von weiteren Verfahrensschritten des erfindungsgemäßen Verfahrens gemäß der Figur 4;

Fig. 6      eine schematische Darstellung eines zweidimensionalen Eingabebilds;

Fig. 7      eine dreidimensionale Darstellung von Daten;

Fig. 8      eine schematische Darstellung von Abbildungsparametern eines Abbildungssystems;

Fig. 9      eine schematische Darstellung eines Ablaufdiagramms einer weiteren Ausführungsform des erfindungsgemäßen Verfahrens;

Fig. 10      eine schematische Darstellung eines Ablaufdiagramms einer noch weiteren Ausführungsform des erfindungsgemäßen Verfahrens;

Fig. 11      eine schematische Darstellung eines Ablaufdiagramms einer wiederum weiteren Ausführungsform des erfindungsgemäßen Verfahrens;

Fig. 12      eine schematische Darstellung eines Ablaufdiagramms einer Ausführungsform des erfindungsgemäßen Verfahrens; sowie

Fig. 13      eine schematische Darstellung eines Ablaufdiagramms einer weiteren Ausführungsform des erfindungsgemäßen Verfahrens.

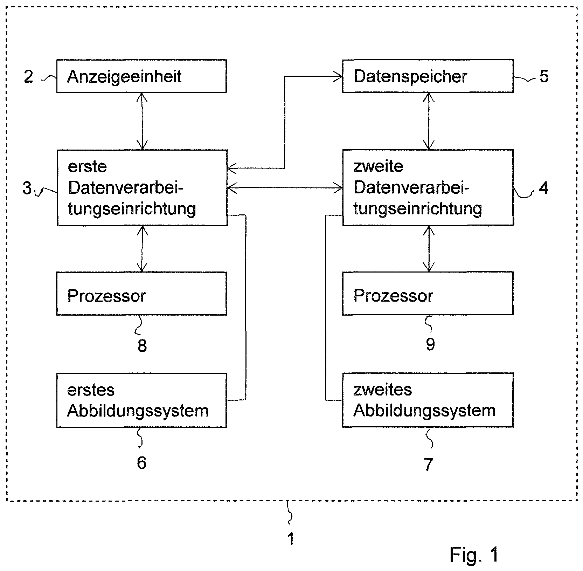

**Figur 1** zeigt eine schematische Darstellung eines erfindungsgemäßen Bilderzeugungssystems 1, das der Erzeugung eines Bilds eines Objekts dient. Das Bilderzeugungssystem 1 weist eine Anzeigeeinheit 2 auf, die beispielsweise als ein Monitor ausgebildet ist. Die Erfindung ist aber nicht auf eine derartige Anzeigeeinheit 2 eingeschränkt. Vielmehr kann für die Erfindung jede Anzeigeeinheit 2 verwendet werden, die für die Erfindung geeignet ist.

Zusätzlich weist das Bilderzeugungssystem 1 eine erste Datenverarbeitungseinrichtung 3 auf. Bei der ersten Datenverarbeitungseinrichtung 3 handelt es sich beispielsweise um ein elektronisches System, das aus einer Zentraleinheit und aus peripheren Geräten gebildet ist. Beispielsweise ist die Zentraleinheit ein lokaler Computer, eine Servereinheit, ein Netzwerk mit mehreren Workstations, ein Cloud-basierter virtueller Server, ein Tabletcomputer und/oder ein Smartphone. Die peripheren Geräte sind beispielsweise als Eingabe- und/oder Ausgabeeinheit, insbesondere in Form einer Tastatur, und/oder als Monitor ausgebildet.

Das Bilderzeugungssystem 1 weist ferner eine zweite Datenverarbeitungseinrichtung 4 auf, die mit der ersten Datenverarbeitungseinrichtung 3 zum Datenaustausch verbunden ist. Insbesondere ist es vorgesehen, die erste Datenverarbeitungseinrichtung 3 leitungstechnisch mit der zweiten Datenverarbeitungseinrichtung 4 zu verbinden. Zusätzlich oder alternativ hierzu ist es vorgesehen, die erste Datenverarbeitungseinrichtung 3 drahtlos mit der zweiten Datenverarbeitungseinrichtung 4 derart zu verbinden, dass ein Datenaustausch erfolgen kann. Beispielsweise ist die drahtlose Verbindung zwischen der ersten Datenverarbeitungseinrichtung 3 und der zweiten Datenverarbeitungseinrichtung 4 eine Funkverbindung oder WLAN-Verbindung. Zusätzlich oder alternativ kann die erste Datenverarbeitungseinrichtung 3 mit der zweiten Datenverarbeitungseinrichtung 4 über das Internet verbunden sein.

Bei der zweiten Datenverarbeitungseinrichtung 4 handelt es sich beispielsweise um ein elektronisches System, das eine Zentraleinheit aufweist. Beispielsweise ist die Zentraleinheit ein lokaler Computer, eine Servereinheit, ein Netzwerk mit mehreren Workstations, ein Cloud-basierter virtueller Server, ein Tabletcomputer und/oder ein Smartphone. Zusätzlich kann die zweite Datenverarbeitungseinrichtung 4 beispielsweise mit peripheren Geräten versehen sein. Die peripheren Geräte sind insbesondere als Eingabe- und/oder Ausgabeeinheit, beispielsweise in Form einer Tastatur, und/oder als Monitor ausgebildet.

Das Bilderzeugungssystem 1 weist zusätzlich einen Datenspeicher 5 auf. Der Datenspeicher 5 ist beispielsweise der ersten Datenverarbeitungseinrichtung 3 und/oder der zweiten Datenverarbeitungseinrichtung 4 zugeordnet. Beispielsweise ist es vorgesehen, dass der Datenspeicher 5 eine Einheit der ersten Datenverarbeitungseinrichtung 3 und/oder der zweiten Datenverarbeitungseinrichtung 4 ist. Der Ort des Datenspeichers 5 muss nicht identisch zum Ort der ersten Datenverarbeitungseinrichtung 3 und/oder der zweiten Datenverarbeitungseinrichtung 4 sein. Vielmehr kann der Datenspeicher 5 auch örtlich getrennt von der ersten Datenverarbeitungseinrichtung 3 und/oder der zweiten Datenverarbeitungseinrichtung 4 angeordnet sein.

Das Bilderzeugungssystem 1 weist auch ein erstes Abbildungssystem 6 auf. Beispielsweise ist das erste Abbildungssystem 6 als erstes optisches Abbildungssystem ausgebildet. Das erste Abbildungssystem 6 in Form des ersten optischen Abbildungssystems weist mindestens eine Linse auf. Beispielsweise weist das erste Abbildungssystem 6 in Form des ersten optischen Abbildungssystems ein erstes Objektiv und eine erste Bildaufnahmeeinheit auf. Die erste Bildaufnahmeeinheit ist beispielsweise als ein elektronischer Bildsensor ausgebildet. Insbesondere ist der elektronische Bildsensor als digitale Bilderfassungseinheit ausgebildet, beispielsweise in Form eines CMOS. Alternativ hierzu ist es vorgesehen, dass die Bilderfassungseinheit als ein lichtempfindlicher chemischer Film ausgebildet ist. Das erste Abbildungssystem 6 in Form des ersten optischen Abbildungssystems ist beispielsweise als eine Kamera ausgebildet. Insbesondere ist es vorgesehen, dass die Kamera als Filmkamera ausgebildet ist, die im kinematografischen Bereich eingesetzt wird. Alternativ hierzu ist es vorgesehen, dass die Kamera als Kamera ausgebildet ist, die im fotografischen Bereich eingesetzt wird. Das erste Objektiv weist mindestens eine Linseneinheit und mindestens eine Blendeneinheit auf, welche mit einer Blendenöffnung versehen ist. Beispielsweise weist das erste Objektiv mindestens eine Linsengruppe auf, die entlang einer optischen Achse des ersten Objektivs zur Einstellung der Fokussierung des ersten Objektivs auf das Objekt und/oder zur Einstellung einer Brennweite des ersten Objektivs bewegt wird. Dabei wird vorstehend und auch nachstehend unter einer Linsengruppe eine Gruppe verstanden, die eine einzige Linse oder mehrere Linsen aufweist. Zusätzlich kann die Linsengruppe auch mindestens ein Prisma aufweisen.

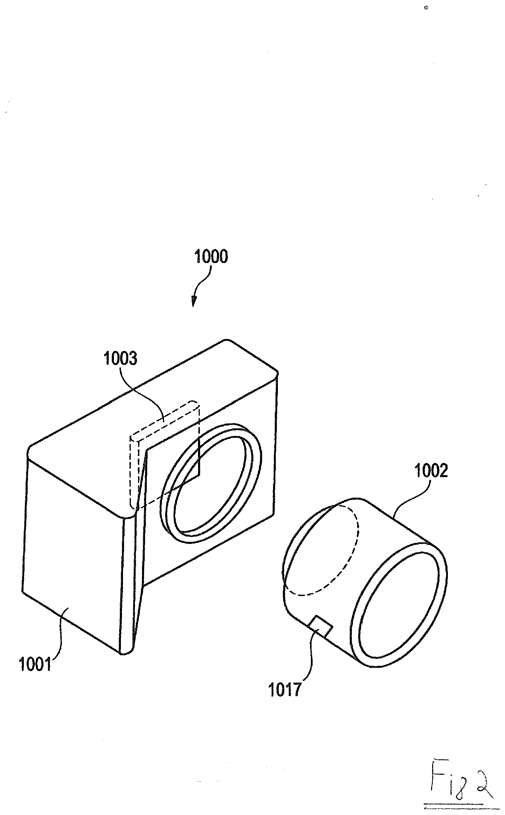

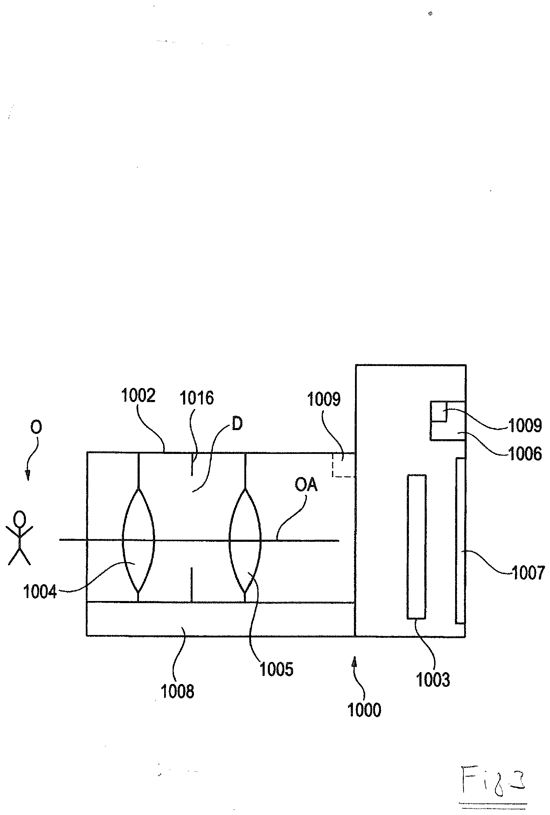

**Figuren 2 und 3** zeigen eine Ausführungsform des ersten Abbildungssystems 6 in Form einer Kamera 1000. **Figur 2** zeigt eine schematische Darstellung einer Kamera 1000. Die Kamera 1000 ist beispielsweise als Fotokamera oder als Filmkamera ausgebildet. Die Kamera 1000 weist ein Gehäuse 1001 auf, an dem ein Objektiv 1002 angeordnet ist. In dem Gehäuse 1001 ist eine Bilderfassungseinheit 1003 angeordnet, mit der Bilder erfasst werden, die durch das Objektiv 1002 abgebildet werden. Beispielsweise ist die Bilderfassungseinheit 1003 eine digitale Bilderfassungseinheit, insbesondere ein CMOS-Sensor. Die Erfindung ist aber nicht auf die Verwendung einer digitalen Bilderfassungseinheit eingeschränkt. Vielmehr kann für die Bilderfassungseinheit jegliche Bilderfassungseinheit verwendet werden, die für die Erfindung geeignet ist, beispielsweise ein fotografischer Film. Bei der in **Figur 2** dargestellten Ausführungsform ist das Objektiv 1002 als Wechselobjektiv ausgebildet. Die Erfindung ist aber nicht auf ein derartiges Objektiv eingeschränkt. Vielmehr ist für die Erfindung auch ein Objektiv geeignet, das nicht lösbar an dem Gehäuse 1001 der Kamera 1000 angeordnet ist. An dem Objektiv 1002 ist beispielsweise eine XD-Datenschnittstelle 1017 zum Anschluss einer Datenspeichereinheit angeordnet.

**Figur 3** zeigt eine weitere schematische Darstellung der Kamera 1000 gemäß der **Figur 2** in einem Aufriss. Das Objektiv 1002 weist bei dieser Ausführungsform eine erste Linseneinheit 1004 und eine zweite Linseneinheit 1005 auf, die entlang einer optischen Achse OA des Objektivs 1002 hintereinander angeordnet sind. Das Objektiv 1002 kann eine bestimmte Anzahl an einzelnen Linsen, Linsengruppen und/oder weiteren optischen Einheiten, beispielsweise in Form von Prismen oder Spiegeln, aufweisen. Die Erfindung ist nicht auf eine bestimmte Ausführungsform eines Objektivs beschränkt. Vielmehr ist jedes geeignete Objektiv bei der Erfindung einsetzbar. Zwischen der ersten Linseneinheit 1004 und der zweiten Linseneinheit 1005 ist eine Blendeneinheit 1016 angeordnet, die eine verstellbare Blendenöffnung mit einem Durchmesser D aufweist. Die Kamera 1000 weist ferner einen Prozessor 1006 sowie einen Monitor 1007 auf. Ferner ist die Bilderfassungseinheit 1003 an der Kamera 1000 vorgesehen. Von dem abzubildenden Objekt O in Richtung der Bilderfassungseinheit 1003 sind zunächst das Objekt O, dann das Objektiv 1002 und dann die Bilderfassungseinheit 1003 angeordnet. Darüber hinaus weist die Kamera 1000 und/oder das Objektiv 1002 ein SLAM-Modul 1008 auf, dessen Aufbau, Funktion und Wirkungsweise nachfolgend näher erläutert wird.

Das SLAM-Modul 1008 weist eine inertiale Messeinheit, eine Tiefenkamera und eine Umgebungskamera auf. Die inertiale Messeinheit des SLAM-Moduls 1008 weist Beschleunigungssensoren und Drehratensensoren auf, die beispielsweise eine Detektion einer Bewegung der Kamera 1000 oder des Objektivs 1002 mit 6 Freiheitsgraden ermöglicht. Die inertiale Messeinheit ist im Grunde genommen ein Trägheitsnavigationssystem und dient zur Detektion der Bewegung sowie zur Feststellung der Lage der Kamera 1000 oder des Objektivs 1002 im Raum. Die Tiefenkamera des SLAM-Moduls 1008 dient der Bestimmung des Abstands des Objektivs 1002 zu einem Punkt im Raum, also einem Punkt in der Umgebung der Kamera 1000. Beispielsweise ist die Tiefenkamera als eine plenoptische Abbildungseinheit, als eine stereoskopische Abbildungseinheit, als eine Time-of-Flight-Abbildungseinheit (also als eine TOF-Abbildungseinheit) und/oder als eine Einheit zur Projektion und Erfassung eines Musters (beispielsweise einer Streifenprojektion oder Projektion einer Punktwolke) ausgebildet. Eine plenoptische Abbildungseinheit, beispielsweise eine plenoptische Kamera, ist aus dem Stand der Technik bekannt. Mittels einer plenoptischen Kamera ist es möglich, nicht nur die Position und die Intensität eines Lichtstrahls auf der Bilderfassungseinheit 1003 festzustellen, sondern es ist auch möglich, die Richtung, aus welcher der Lichtstrahl eingefallen ist, zu bestimmen. Auch eine stereoskopische Abbildungseinheit, beispielsweise in Form einer stereoskopischen Kamera, ist aus dem Stand der Technik bekannt. Diese beruht auf dem Prinzip der Stereoskopie. Ferner ist auch eine TOF-Abbildungseinheit, beispielsweise in Form einer TOF-Kamera, aus dem Stand der Technik bekannt. Bei einer TOF-Kamera wird mit einem Laufzeitverfahren die Distanz zwischen dem Objekt O und der TOF-Kamera gemessen. Es wird aber darauf hingewiesen, dass die Erfindung auf die Verwendung der vorgenannten Abbildungseinheiten zur Bestimmung der Abstände nicht eingeschränkt ist. Vielmehr ist jedes geeignete Verfahren und/oder jede geeignete Abbildungseinheit zur Bestimmung der Abstände verwendbar. Beispielsweise können die Abstände auch mit einer Ultraschallmesseinheit unter Verwendung eines Ultraschallmessverfahrens bestimmt werden. Die Umgebungskamera des SLAM-Moduls 1008 dient der Aufnahme der Umgebung der Kamera 1000.

Ferner ist die Kamera 1000 mit einer Kommunikationseinrichtung 1009 versehen. Alternativ hierzu ist das Objektiv 1002 mit der Kommunikationseinrichtung 1009 versehen, was durch die gestrichelten Linien in der **Figur 3** verdeutlicht ist. Die Kommunikationseinrichtung 1009 ist als Funkeinrichtung ausgebildet, die einen Übertragungsstandard oder mehrere Übertragungsstandards auf einen Übertragungsweg oder mehrere Übertragungswege verwendet. Beispielsweise wird als Übertragungsstandard Bluetooth verwendet. Ferner wird zur Übertragung ein drahtloses lokales Netzwerk, also ein WLAN, verwendet. Wie oben bereits ausgeführt, ist die Erfindung auf eine derartige Ausbildung der Kommunikationseinrichtung nicht eingeschränkt. Vielmehr kann die Kommunikationseinrichtung 1009 jegliche Form aufweisen, die für die Erfindung geeignet ist.

Bei einer weiteren Ausführungsform des Bilderzeugungssystems 1 ist es zusätzlich oder alternativ vorgesehen, dass das erste Abbildungssystem 6 als ein Computergrafiksystem ausgebildet ist, mit dem eine dreidimensionale Szene, die eine Sequenz von mehreren dreidimensionalen Darstellungen aufweist, durch mathematische Berechnung von Daten erzeugt wird. Alternativ wird mit dem Computergrafiksystem eine dreidimensionale Darstellung durch mathematische Berechnung von Daten erzeugt. Zur Berechnung verwendet ein Computergrafiker beispielsweise ein mathematisches Modell einer dreidimensionalen Szene und/oder einer dreidimensionalen Darstellung. Das mathematische Modell umfasst beispielsweise Parameter, die insbesondere die Form, die Farbe und die Oberflächenbeschaffenheit eines zu modellierenden Objekts, welches in der dreidimensionalen Szene und/oder in der dreidimensionalen Darstellung dargestellt werden soll, beschreiben. Ferner umfasst das mathematische Modell beispielsweise Parameter, welche die Beleuchtung des Objekts beschreiben, insbesondere den Ort, die Art, die Farbe und die Richtung von zu modellierenden Lichtquellen. Darüber hinaus umfasst das mathematische Modell die Position des Objekts in der dreidimensionalen Szene und/oder in der dreidimensionalen Darstellung mindestens eines der Folgenden: die Aufnahmerichtung, das Sehfeld, die Brennweite, die Fokussierung, das Bildformat, die Größe der Bilderfassungseinheit, die Position und den Bewegungspfad einer virtuellen Kamera.

Das Bilderzeugungssystem 1 weist auch ein zweites Abbildungssystem 7 auf. Beispielsweise ist das zweite Abbildungssystem 7 als zweites optisches Abbildungssystem ausgebildet. Das zweite Abbildungssystem 7 in Form des zweiten optischen Abbildungssystems weist mindestens eine Linse auf. Das zweite Abbildungssystem 7 in Form des zweiten optischen Abbildungssystems ist beispielsweise als eine Kamera mit einem zweiten Objektiv ausgebildet. Insbesondere ist es vorgesehen, dass die Kamera als Filmkamera ausgebildet ist, die im kinematografischen Bereich eingesetzt wird. Alternativ hierzu ist es vorgesehen, dass die Kamera als Kamera ausgebildet ist, die im fotografischen Bereich eingesetzt wird. Das zweite Objektiv weist mindestens eine Linseneinheit und mindestens eine Blendeneinheit auf, welche mit einer Blendenöffnung versehen ist. Beispielsweise weist das zweite Objektiv mindestens eine Linsengruppe auf, die entlang einer optischen Achse des zweiten Objektivs zur Einstellung der Fokussierung des zweiten Objektivs auf das Objekt und/oder zur Einstellung einer Brennweite des zweiten Objektivs bewegt wird. Dabei wird vorstehend und auch nachstehend unter einer Linsengruppe eine Gruppe verstanden, die eine einzige Linse oder mehrere Linsen aufweist. Zusätzlich kann die Linsengruppe auch mindestens ein Prisma aufweisen.

Das zweite Abbildungssystem 7 kann beispielsweise ebenfalls ausgebildet sein, wie in den **Figuren 2 und 3** dargestellt. Es wird auf die oben gemachten Ausführungen verwiesen, die auch hier gelten.

Bei einer Ausführungsform des Bilderzeugungssystems 1 ist es zusätzlich oder alternativ vorgesehen, dass das zweite Abbildungssystem 7 als eine virtuelle Kamera ausgebildet ist. Mit einer virtuellen Kamera wird ein Bild des Objekts durch mathematische Berechnung erzeugt und derart auf der Anzeigeeinheit 2 dargestellt, als ob eine Kamera, welche dieselben Eigenschaften wie die virtuelle Kamera aufweist, das Objekt tatsächlich abbildet.

Das Bilderzeugungssystem 1 weist einen ersten Prozessor 8 und einen zweiten Prozessor 9 auf. Der erste Prozessor 8 ist der ersten Datenverarbeitungseinrichtung 3 zugeordnet. Mit anderen Worten ausgedrückt, ist der erste Prozessor 8 mit der ersten Datenverarbeitungseinrichtung 3 verbunden. Beispielsweise ist es vorgesehen, dass der erste Prozessor 8 eine Einheit der ersten Datenverarbeitungseinrichtung 3 ist. Der zweite Prozessor 9 ist der zweiten Datenverarbeitungseinrichtung 4 zugeordnet. Mit anderen Worten ausgedrückt, ist der zweite Prozessor 9 mit der zweiten Datenverarbeitungseinrichtung 4 verbunden. Beispielsweise ist es vorgesehen, dass der zweite Prozessor 9 eine Einheit der zweiten Datenverarbeitungseinrichtung 4 ist.

Der erste Prozessor 8 und der zweite Prozessor 9 weisen ein Computerprogrammprodukt mit einem Programmcode auf, der teilweise oder vollständig in den ersten Prozessor 8 und/oder in den zweiten Prozessor 9 geladen ist. Bei Ausführung des Programmcodes wird das Bilderzeugungssystem 1 derart gesteuert, dass ein erfindungsgemäßes Verfahren durchgeführt wird. Ausführungsformen des erfindungsgemäßen Verfahrens werden nachstehend näher erläutert.

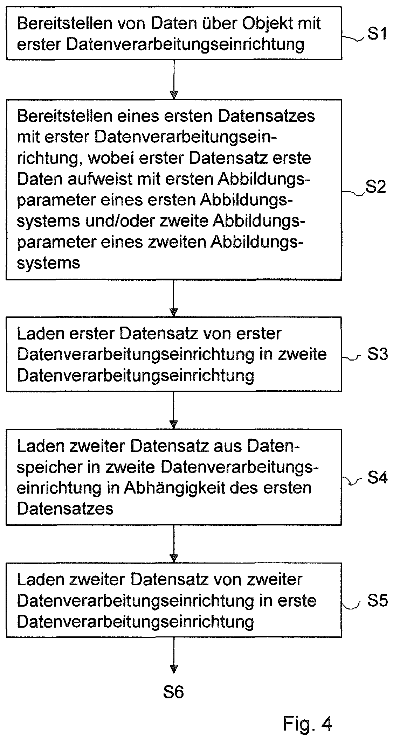

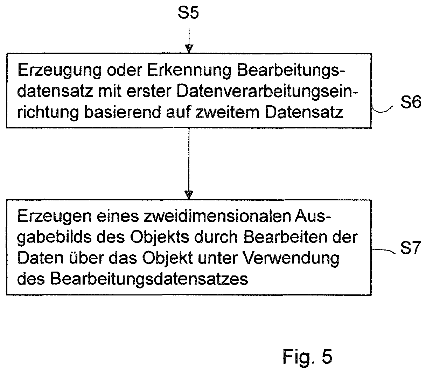

**Figuren 4 und 5** zeigen ein Ablaufdiagramm einer Ausführungsform des erfindungsgemäßen Verfahrens. Im Verfahrensschritt S1 werden Daten über das Objekt mit der ersten Datenverarbeitungseinrichtung 3 bereitgestellt. Wie weiter oben bereits erwähnt, sind Daten über das Objekt jegliche Daten, welche das Objekt beschreiben. Beispielsweise handelt es sich bei den Daten über das Objekt um mindestens ein zweidimensionales Eingabebild des Objekts. Zusätzlich oder alternativ hierzu handelt es sich bei den Daten über das Objekt beispielsweise um mindestens eine dreidimensionale Darstellung des Objekts. Wiederum zusätzlich oder alternativ hierzu ist es vorgesehen, dass die Daten über das Objekt Daten sind, mit denen eine mehrdimensionale, beispielsweise eine zweidimensionale oder dreidimensionale Darstellung des Objekts berechnet werden kann. Die vorgenannte Aufzählung von Daten über das Objekt ist nicht abschließend zu verstehen. Vielmehr können jegliche Daten über das Objekt verwendet werden, welche das Objekt beschreiben und welche für die Durchführung der Erfindung geeignet sind.

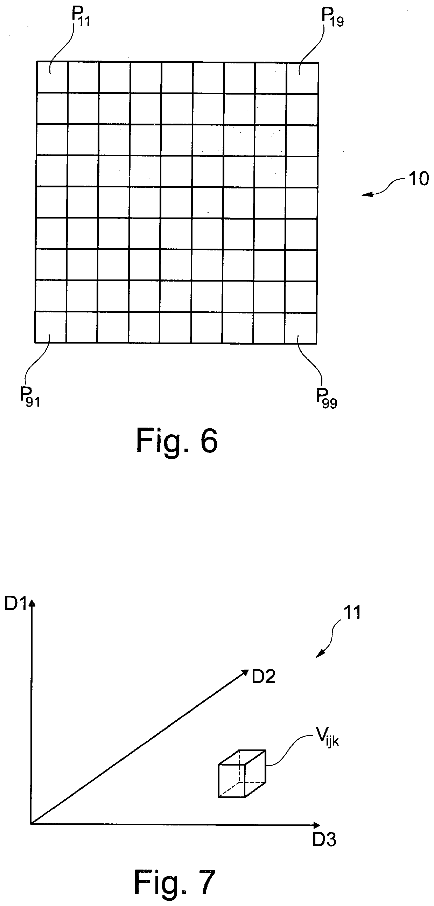

Wie oben bereits erwähnt, umfassen die Daten über das Objekt beispielsweise mindestens ein zweidimensionales Eingabebild des Objekts. **Figur 6** zeigt eine schematische Darstellung einer Ausführungsform des zweidimensionalen Eingabebilds 10, das eine vorgegebene Anzahl an Eingabebildpixeln $P_{op}$ aufweist, wobei o und p ganze Zahlen sind, für die gilt: $1 \leq o \leq n$ sowie $1 \leq p \leq n$. Dabei entspricht n der Gesamtanzahl der Eingabebildpixel. Für die Ausführungsform der **Figur 6** gilt: n = 81. Beispielhaft sind vier der Eingabebildpixel mit Bezugszeichen bezeichnet, nämlich mit $P_{11}$, $P_{19}$, $P_{91}$ und $P_{99}$. Es wird explizit darauf hingewiesen, dass die Gesamtzahl der Eingabebildpixel nicht auf den vorgenannten Wert eingeschränkt ist. Vielmehr kann die Gesamtzahl der Eingabebildpixel jeden Wert annehmen, der geeignet ist. Insbesondere liegt die Gesamtzahl der Eingabebildpixel weit im 6-stelligen, weit im 7-stelligen, weit im 8-stelligen oder weit im 9-stelligen Bereich.

Das zweidimensionale Eingabebild 10 wird beispielsweise mit dem ersten Abbildungssystem 6 erzeugt. Beispielsweise wird das zweidimensionale Eingabebild 10 mit der Kamera 1000 erzeugt, welche in den **Figuren 2 und 3** dargestellt ist. Insofern handelt es sich bei dem zweidimensionalen Eingabebild 10 gemäß der weiter oben erläuterten Definition um ein real erzeugtes Bild. Insbesondere ist es vorgesehen, das zweidimensionale Eingabebild 10 auf einem Datenträger (nicht dargestellt) zu speichern, von dem die erste Datenverarbeitungseinrichtung 3 das Eingabebild 10 lädt und bereitstellt.

Wie ebenfalls oben bereits erwähnt, umfassen die Daten über das Objekt beispielsweise mindestens eine dreidimensionale Darstellung. **Figur 7** zeigt eine schematische Darstellung einer Ausführungsform der dreidimensionalen Darstellung 11. Diese umfasst erste Dateninhalte in einer ersten Dimension D1, zweite Dateninhalte in einer zweiten Dimension D2 sowie dritte Dateninhalte in einer dritten Dimension D3. Die ersten Dateninhalte, die zweiten Dateninhalte und die dritte Dateninhalte können beispielsweise als ein Voxel $V_{ijk}$ dargestellt werden, wobei i, j und k ganze Zahlen sind, für die beispielsweise gilt: $1 \leq i \leq m$, $1 \leq j \leq m$ sowie $1 \leq k \leq m$. Dabei entspricht m der Gesamtanzahl der Voxel. Die Gesamtanzahl der Voxel kann jeden Wert annehmen, der geeignet ist. Insbesondere liegt die Gesamtzahl der Voxel weit im 6-stelligen, weit im 7-stelligen, weit im 8-stelligen oder weit im 9-stelligen Bereich. Die Erfindung ist nicht auf die vorbeschriebene Ausführungsform der Daten über das Objekt hinsichtlich der dreidimensionalen Darstellung eingeschränkt. Vielmehr ist jede Ausführungsform verwendbar, welche für die Erfindung geeignet ist. Es wird auf die Ausführungen weiter oben verwiesen, die auch hier gelten.

Wie oben bereits erwähnt, kann man eine dreidimensionale Szene, die eine Sequenz von mehreren dreidimensionalen Darstellungen aufweist, und/oder eine dreidimensionale Darstellung durch mathematische Berechnung von Daten erzeugen. Hierzu wird ein mathematisches Modell der dreidimensionalen Szene und/oder der dreidimensionalen Darstellung verwendet. Das mathematische Modell umfasst beispielsweise Parameter, die insbesondere die Form, die Farbe und die Oberflächenbeschaffenheit eines zu modellierenden Objekts, welches in der dreidimensionalen Szene und/oder in der dreidimensionalen Darstellung dargestellt werden soll, beschreiben. Ferner umfasst das mathematische Modell beispielsweise Parameter, welche die Beleuchtung des Objekts beschreiben, insbesondere den Ort, die Art, die Farbe und die Richtung von zu modellierenden Lichtquellen. Darüber hinaus umfasst das mathematische Modell die Position des Objekts in der dreidimensionalen Szene und/oder in der dreidimensionalen Darstellung mindestens eines der Folgenden: die Aufnahmerichtung, das Sehfeld, die Brennweite, die Fokussierung, das Bildformat, die Größe der Bilderfassungseinheit, die Position und den Bewegungspfad einer virtuellen Kamera. Die mit dem mathematischen Modell berechneten Daten sind beispielsweise die Daten über das Objekt.

Im Verfahrensschritt S2 erfolgt ein Bereitstellen eines ersten Datensatzes mit der ersten Datenverarbeitungseinrichtung 3. Bei einer Ausführungsform des erfindungsgemäßen Verfahrens umfasst der erste Datensatz folgende erste Daten:

(i) Benutzeridentifikationsdaten, mit denen es möglich ist, einen Benutzer des erfindungsgemäßen Verfahrens eindeutig zu identifizieren. Beispielsweise umfassen die Benutzeridentifikationsdaten eine Verwendungsberechtigung zur Durchführung des erfindungsgemäßen Verfahrens oder von Teilen des erfindungsgemäßen Verfahrens. Die Verwendungsberechtigung kann beispielsweise dann vorliegen, wenn der Benutzer für die Durchführung des erfindungsgemäßen Verfahrens bezahlt hat, in naher Zukunft bezahlen wird, ihm ein Verfügungsrahmen für die Durchführung des erfindungsgemäßen Verfahrens zur Verfügung steht oder er eine Lizenz zur Durchführung des erfindungsgemäßen Verfahrens erworben hat;

(ii) Identifikationsdaten, mit denen eine eindeutige Identifikation der Daten über das Objekt ermöglicht wird. Damit ist es beispielsweise möglich, das zweidimensionale Eingabebild 10 und/oder Daten über das Objekt, welche die dreidimensionale Darstellung 11 betreffen, eindeutig zu identifizieren;

(iii) mindestens einen ersten Abbildungsparameter des ersten Abbildungssystems 6, mit dem die Daten über das Objekt erzeugt wurden, und/oder mindestens einen zweiten Abbildungsparameter des zweiten Abbildungssystems 7, mit dessen Eigenschaften ein Bild des Objekts basierend auf den Daten über das Objekt auf der Anzeigeeinheit 2 dargestellt werden soll.

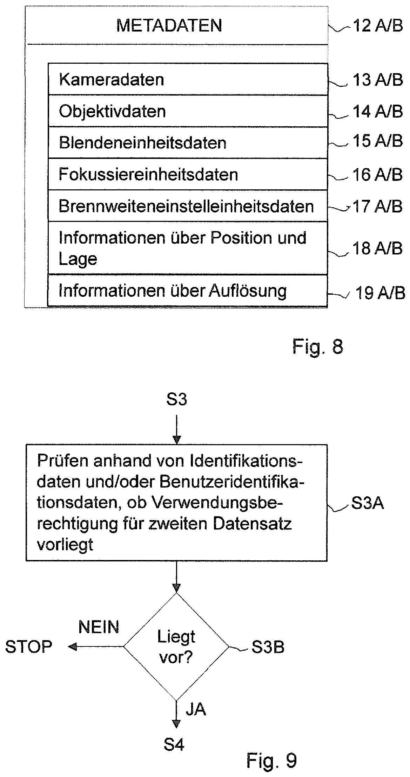

Somit können die ersten Daten mindestens den ersten Abbildungsparameter des ersten Abbildungssystems 6 umfassen, mit dem die Daten über das Objekt erzeugt wurden. Beispiele des ersten Abbildungsparameters sind in **Figur 8** dargestellt. Beispielsweise werden als der erste Abbildungsparameter erste Metadaten 12A des ersten Abbildungssystems 6 verwendet. Die ersten Metadaten 12A umfassen beispielsweise Abbildungseigenschaften und/oder Funktionseinheiten des ersten Abbildungssystems 6. Diese werden insbesondere mit der ersten Datenverarbeitungseinrichtung 3 aus den Daten des Objekts ausgelesen oder manuell in die erste Datenverarbeitungseinrichtung 3 eingegeben. Beispielsweise umfassen die ersten Metadaten 12A mindestens einen der folgenden Parameter:

- erste Kameradaten 13A über die Kamera 1000, mit welcher die Daten über das Objekt erzeugt wurden;
- erste Objektivdaten 14A über das Objektiv 1002, mit welchem die Daten über das Objekt erzeugt wurden;
- erste Blendeneinheitsdaten 15A über die Blendeneinheit 1016, mit welcher die Daten über das Objekt erzeugt wurden;
- erste Fokussiereinheitsdaten 16A über die erste Fokussiereinheit in Form der ersten Linseneinheit 1004 und der zweiten Linseneinheit 1005, mit welcher die Daten über das Objekt erzeugt wurden;
- erste Brennweiteneinstelleinheitsdaten 17A über eine erste Brennweiteneinstelleinheit in Form der ersten Linseneinheit 1004 und der zweiten Linseneinheit 1005, mit welcher die Daten über das Objekt erzeugt wurden;

- erste Informationen 18A über eine Position und eine Lage des ersten Abbildungssystems 6 in Form der Kamera 1000 im Raum. Mit anderen Worten ausgedrückt, werden erste Informationen 18A über die Position und die Ausrichtung des ersten Abbildungssystems 6 beispielsweise im dreidimensionalen Raum bereitgestellt; sowie

- erste Informationen 19A über eine Auflösung des ersten Abbildungssystems 6. Mit anderen Worten ausgedrückt, wird die Auflösung, mit welcher die Daten über das Objekt erzeugt wurden, bereitgestellt. Beispielsweise ist die Auflösung eine sogenannte "Full-HD"-Auflösung, also insbesondere eine Auflösung von 1920 × 1080 Pixel. Zusätzlich oder alternativ hierzu ist die Auflösung eine sogenannte 2k-Auflösung, also insbesondere eine Auflösung von 2560 × 1440 Pixel. Die Erfindung ist aber nicht auf die vorgenannten Auflösungen eingeschränkt. Vielmehr ist jede Auflösung verwendbar, welche für die Erfindung geeignet ist. Zusätzlich oder alternativ hierzu kann ein Benutzer eine gewünschte Zielauflösung eingeben.

Wie oben erläutert, kann das erste Abbildungssystem 6 auch als ein Computergrafiksystem ausgebildet sein, mit dem eine dreidimensionale Szene, die eine Sequenz von mehreren dreidimensionalen Darstellungen aufweist, durch mathematische Berechnung von Daten erzeugt wird. Alternativ hierzu wird mit dem Computergrafiksystem eine dreidimensionale Darstellung durch mathematische Berechnung von Daten erzeugt. Die ersten Daten des ersten Datensatzes umfassen dann beispielsweise die durch diese mathematische Berechnung erzeugten Daten. Zusätzlich oder alternativ hierzu werden die vorgenannten mathematisch berechneten Daten in eine zweidimensionale Bildsequenz und/oder in ein zweidimensionales Bild umgewandelt. Dann umfassen die ersten Daten Daten der zweidimensionalen Bildsequenz und/oder des zweidimensionalen Bilds.

Wie oben erläutert, können die ersten Daten zusätzlich oder alternativ mindestens den zweiten Abbildungsparameter des zweiten Abbildungssystems 7 umfassen. Mit den Eigenschaften des zweiten Abbildungssystems 7 soll ein Bild des Objekts basierend auf den Daten über das Objekt auf der Anzeigeeinheit 2 dargestellt werden. Für eine Ausführungsform, bei der das zweite Abbildungssystem 7 als zweites optisches Abbildungssystem ausgebildet ist, sind in **Figur 8** Beispiele des zweiten Abbildungsparameters dargestellt. Beispielsweise werden als der zweite Abbildungsparameter zweite Metadaten 12B des zweiten Abbildungssystems 7 verwendet. Die zweiten Metadaten 12B umfassen beispielsweise Abbildungseigenschaften und/oder Funktionseinheiten des zweiten Abbildungssystems 7. Diese werden insbesondere mit der ersten Datenverarbeitungseinrichtung 3 aus den Daten des Objekts ausgelesen oder manuell in die erste Datenverarbeitungseinrichtung 3 eingegeben. Beispielsweise umfassen die zweiten Metadaten 12B mindestens einen der folgenden Parameter:

- zweite Kameradaten 13B über die Kamera 1000, mit deren Eigenschaften die Daten über das Objekt auf der Anzeigeeinheit 2 dargestellt werden sollen;

- zweite Objektivdaten 14B über das Objektiv 1002, mit dessen Eigenschaften die Daten über das Objekt auf der Anzeigeeinheit 2 dargestellt werden sollen;

- zweite Blendeneinheitsdaten 15B über die Blendeneinheit 1016, mit deren Eigenschaften die Daten über das Objekt auf der Anzeigeeinheit 2 dargestellt werden sollen;

- zweite Fokussiereinheitsdaten 16B über die zweite Fokussiereinheit in Form der ersten Linseneinheit 1004 und der zweiten Linseneinheit 1005, mit deren Eigenschaften die Daten über das Objekt auf der Anzeigeeinheit 2 dargestellt werden sollen;

- zweite Brennweiteneinstelleinheitsdaten 17B über eine zweite Brennweiteneinstelleinheit in Form der ersten Linseneinheit 1004 und der zweiten Linseneinheit 1005, mit deren Eigenschaften die Daten über das Objekt auf der Anzeigeeinheit 2 dargestellt werden sollen;

- zweite Informationen 18B über eine Position und eine Lage des zweiten Abbildungssystems 7 in Form der Kamera 1000 im Raum. Mit anderen Worten ausgedrückt, werden zweite Informationen 18B über die Position und die Ausrichtung des zweiten Abbildungssystems 7 beispielsweise im dreidimensionalen Raum bereitgestellt; sowie

- zweite Informationen 19B über eine Auflösung des zweiten Abbildungssystems 7. Mit anderen Worten ausgedrückt, wird die Auflösung, mit welcher die Daten über das Objekt erzeugt wurden, bereitgestellt. Beispielsweise ist die Auflösung eine sogenannte "Full-HD"-Auflösung, also insbesondere eine Auflösung von 1920 × 1080 Pixel. Zusätzlich oder alternativ hierzu ist die Auflösung eine sogenannte 2k-Auflösung, also insbesondere eine Auflösung von 2560 × 1440 Pixel. Die Erfindung ist aber nicht auf die vorgenannten Auflösungen eingeschränkt. Vielmehr ist jede Auflösung verwendbar, welche für die Erfindung geeignet ist. Zusätzlich oder alternativ hierzu kann ein Benutzer eine gewünschte Zielauflösung vorgeben.

Zusätzlich oder alternativ hierzu ist es vorgesehen, dass das zweite Abbildungssystem 7 als eine virtuelle Kamera ausgebildet ist. Der mindestens zweite Abbildungsparameter bewirkt, dass ein Bild des Objekts basierend auf den Daten über das Objekt derart auf der Anzeigeeinheit 2 dargestellt wird, als ob die den zweiten Abbildungsparameter verwendende virtuelle Kamera das Objekt tatsächlich abbilden würde. Mit anderen Worten ausgedrückt, soll ein Bild des Objekts durch mathematische Berechnung basierend auf den Daten über das Objekt erzeugt werden und derart auf der Anzeigeeinheit 2 dargestellt werden, als ob eine Kamera, welche die durch den zweiten Abbildungsparameter gewählte Eigenschaft aufweist, das Objekt tatsächlich abbildet.

Im Verfahrensschritt S3 erfolgt ein Laden des ersten Datensatzes von der ersten Datenverarbeitungseinrichtung 3 in die zweite Datenverarbeitungseinrichtung 4. Sodann erfolgt im Verfahrensschritt S4 ein Laden eines zweiten Datensatzes aus dem Datenspeicher 5 in die zweite Datenverarbeitungseinrichtung 4 in Abhängigkeit des in die zweite Datenverarbeitungseinrichtung 4 geladenen ersten Datensatzes. Mit anderen Worten ausgedrückt, wird der zweite Datensatz in Abhängigkeit des in die zweite Datenverarbeitungseinrichtung 4 geladenen ersten Datensatzes ausgewählt und sodann vom Datenspeicher 5 in die zweite Datenverarbeitungseinrichtung 4 geladen. Wenn der erste Datensatz den ersten Abbildungsparameter des ersten Abbildungssystems 6 betrifft, dann weist der zweite Datensatz zweite Daten auf, die Veränderungsdaten zur Veränderung von Abbildungsfehlern in Abhängigkeit des ersten Abbildungsparameters des ersten Abbildungssystems 6 umfassen. Beispielsweise sind die Veränderungsdaten Daten zur Korrektur von Abbildungsfehlern in Abhängigkeit des ersten Abbildungsparameters des ersten Abbildungssystems 6. Wenn der erste Datensatz zusätzlich oder alternativ den zweiten Abbildungsparameter des zweiten Abbildungssystems 7 betrifft, dann weist der zweite Datensatz zweite Daten auf, die Änderungsdaten zur Änderung der Daten über das Objekt in Abhängigkeit des zweiten Abbildungsparameters des zweiten Abbildungssystems 7 umfassen.

Somit können die zweiten Daten Veränderungsdaten zur Veränderung von Abbildungsfehlern in Abhängigkeit des ersten Abbildungsparameters des ersten Abbildungssystems 6 umfassen. Insbesondere sind die Veränderungsdaten Daten zur Korrektur von Abbildungsfehlern in Abhängigkeit des ersten Abbildungsparameters des ersten Abbildungssystems 6. Mit anderen Worten ausgedrückt, umfassen die zweiten Daten Korrekturdaten, die herangezogen werden können, um Abbildungsfehler, welche bei der Erzeugung der Daten über das Objekt (insbesondere bei der Erzeugung des oben genannten zweidimensionalen Eingabebilds 10 des Objekts) aufgetreten sind, zu verringern oder vollständig zu korrigieren. Beispielsweise sind die Korrekturdaten Daten zur Korrektur einer Verzeichnung des ersten Abbildungssystems 6. Zusätzlich oder alternativ hierzu ist es vorgesehen, dass als Korrekturdaten Daten zur Korrektur einer Vignettierung des ersten Abbildungssystems 6 verwendet werden.

Zusätzlich oder alternativ umfassen die zweiten Daten Änderungsdaten zur Änderung der Daten über das Objekt in Abhängigkeit des zweiten Abbildungsparameters des zweiten Abbildungssystems 7. Mit anderen Worten ausgedrückt, können mit Hilfe der Änderungsdaten die Daten über das Objekt in Abhängigkeit des zweiten Abbildungsparameters des zweiten Abbildungssystems 7 geändert werden. Die Änderung der Daten über das Objekt erfolgt beispielsweise derart, dass durch die Änderung der Daten über das Objekt ein Bild des Objekts erzeugt wird, das im Grunde genommen einem mit dem oben genannten zweiten optischen Abbildungssystem 7 oder einem mit der oben genannten virtuellen Kamera erzeugten Bild des Objekts entspricht oder im Wesentlichen entspricht.

Der zweite Datensatz kann beispielsweise in Form eines Polynoms ausgestaltet sein. Das Polynom repräsentiert beispielsweise eine virtuelle Kamera und beschreibt in mathematischer Form, wie und wo ein in ein Objektiv der virtuellen Kamera einfallender und aus dem Objektiv wieder austretender Lichtstrahl auf der Bilderfassungseinheit der virtuellen Kamera abgebildet wird. Beispielsweise weist das Polynom die folgende Form auf:

$$x_f = \sum_{i,j,k,l,m} c_{ijklm} x_s^i y_s^j x_a^k y_a^l \beta^m$$

wobei $x_s$ und $y_s$ die Strahlposition des austretenden Lichtstrahls an einer Fläche der Bilderfassungseinheit wiedergeben, $x_a$ und $y_a$ eine Strahlposition des einfallenden Lichtstrahls an einer Ebene einer virtuellen Blende wiedergeben und $\beta$ ein gewünschter Abbildungsmaßstab ist.

Im Verfahrensschritt S5 erfolgt ein Laden des zweiten Datensatzes von der zweiten Datenverarbeitungseinrichtung 4 in die erste Datenverarbeitungseinrichtung 3. Dabei können zusammen mit dem zweiten Datensatz die Identifikationsdaten über die Daten des Objekts von der zweiten Datenverarbeitungseinrichtung 4 in die erste Datenverarbeitungseinrichtung 3 geladen werden. Zusätzlich oder alternativ hierzu ist es vorgesehen, dass zusammen mit dem zweiten Datensatz Informationen über die Kosten für die Durchführung des Verfahrens von der zweiten Datenverarbeitungseinrichtung 4 in die erste Datenverarbeitungseinrichtung 3 geladen werden.

Wenn der Benutzer mit den Kosten einverstanden ist, erfolgt die Durchführung des Verfahrensschritts S6. Sollte der Benutzer mit den Kosten nicht einverstanden sein, so werden die zweiten Daten von der ersten Datenverarbeitungseinrichtung 3 gelöscht und das Verfahren gestoppt. Alternativ hierzu ist es vorgesehen, die Kosten für die weitere Durchführung des Verfahrens dem Benutzer mitzuteilen und sodann den Verfahrensschritt S6 durchzuführen. Im Verfahrensschritt S6 wird nun ein Bearbeitungsdatensatz mit der ersten Datenverarbeitungseinrichtung 3 basierend auf dem zweiten Datensatz erzeugt. Beispielsweise umfasst der Bearbeitungsdatensatz eine Korrekturkarte. Alternativ hierzu ist es vorgesehen, dass mit der ersten Datenverarbeitungseinrichtung 3 erkannt wird, dass der zweite Datensatz unverändert als Bearbeitungsdatensatz verwendet wird.

Im Verfahrensschritt S7 wird ein zweidimensionales Ausgabebild des Objekts durch Bearbeiten der Daten über das Objekt unter Verwendung des Bearbeitungsdatensatzes mit der ersten Datenverarbeitungseinrichtung 3 erzeugt, wobei das Ausgabebild eine vorgebbare Anzahl an Ausgabebildpixeln aufweist. Beispielsweise wird die als Bearbeitungsdatensatz ausgebildete Korrekturkarte über das zweidimensionale Eingabebild 10 des Objekts gelegt und Korrekturen der Abbildungsfehler vorgenommen. Das erzeugte zweidimensionale Ausgabebild ist dann das mit den Korrekturen versehene zweidimensionale Eingabebild 10 des Objekts. Wenn beispielsweise der Bearbeitungsdatensatz als der zweite Datensatz ausgebildet ist, insbesondere in Form eines Polynoms, dann werden die Daten über das Objekt mit dem Bearbeitungsdatensatz derart bearbeitet, dass als zweidimensionales Ausgabebild ein Bild des Objekts erzeugt wird, das im Grunde genommen einem mit dem oben genannten zweiten optischen Abbildungssystem 7 oder einem mit der oben genannten virtuellen Kamera erzeugten Bild des Objekts entspricht oder im Wesentlichen entspricht. Das zweidimensionale Ausgabebild des Objekts kann dann auf der Anzeigeeinheit 2 angezeigt werden.

Wie oben bereits erläutert, ist es bei der Ausführungsform des erfindungsgemäßen Verfahrens vorgesehen, dass der in die zweite Datenverarbeitungseinrichtung 4 geladene erste Datensatz Identifikationsdaten der Daten über das Objekt und/oder Benutzeridentifikationsdaten aufweist. Bei einer weiteren Ausführungsform des erfindungsgemäßen Verfahrens ist es vorgesehen, dass vor Durchführung des Verfahrensschritts S4, bei dem der zweite Datensatz aus dem Datenspeicher 5 geladen wird, zunächst eine Prüfung durchgeführt wird, ob überhaupt eine Verwendungsberechtigung für die Verwendung des zweiten Datensatzes vorliegt. Diese Ausführungsform des erfindungsgemäßen Verfahrens ist in **Figur 9** dargestellt. So wird im Verfahrensschritt S3A anhand der Identifikationsdaten und/oder der Benutzeridentifikationsdaten unter Verwendung der ersten Datenverarbeitungseinrichtung 3 und/oder der zweiten Datenverarbeitungseinrichtung 4 geprüft, ob eine Verwendungsberechtigung für die Verwendung des zweiten Datensatzes mit der ersten Datenverarbeitungseinrichtung 3 und/oder der zweiten Datenverarbeitungseinrichtung 4 vorliegt. Die Verwendungsberechtigung kann beispielsweise dann vorliegen, wenn der Benutzer für die Durchführung des erfindungsgemäßen Verfahrens bezahlt hat, in naher Zukunft bezahlen wird, ihm ein Verfügungsrahmen für die Durchführung des erfindungsgemäßen Verfahrens zur Verfügung steht oder er eine Lizenz zur Durchführung des erfindungsgemäßen Verfahrens erworben hat. Liegt eine Verwendungsberechtigung vor, so wird gemäß dem Verfahrensschritt S3B der Verfahrensschritt S4 durchgeführt. Liegt keine Verwendungsberechtigung vor, dann wird dem Benutzer dieses mitgeteilt. In diesem Falle kann er sich eine Verwendungsberechtigung beschaffen, beispielsweise durch Bezahlen einer Benutzungsgebühr für die Durchführung des erfindungsgemäßen Verfahrens oder durch Erwerben einer Lizenz. Wenn der Benutzer sich keine Verwendungsberechtigung beschafft, wird gemäß dem Verfahrensschritt S3B das erfindungsgemäße Verfahren gestoppt. Zusätzlich oder alternativ hierzu ist es vorgesehen, den zweiten Datensatz zu löschen.

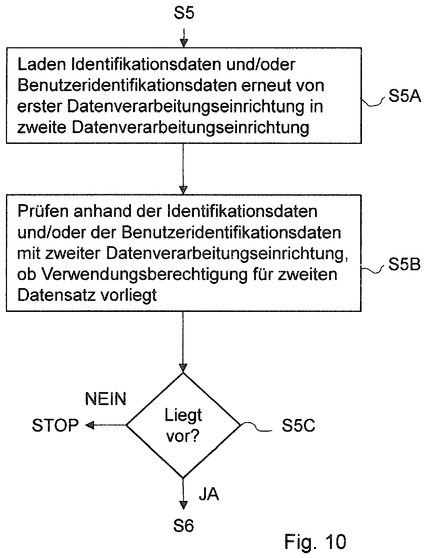

Bei einer noch weiteren Ausführungsform des erfindungsgemäßen Verfahrens ist es zusätzlich oder alternativ vorgesehen, dass vor Durchführung des Verfahrensschritts S6, bei dem der Bearbeitungsdatensatz erzeugt oder erkannt wird, zunächst eine Prüfung durchgeführt wird, ob überhaupt eine Verwendungsberechtigung für die Verwendung des zweiten Datensatzes vorliegt. Diese Ausführungsform des erfindungsgemäßen Verfahrens ist in **Figur 10** dargestellt. So wird nach dem Verfahrensschritt S5 zunächst der Verfahrensschritt S5A durchgeführt. Dabei werden die Identifikationsdaten und/oder die Benutzeridentifikationsdaten erneut von der ersten Datenverarbeitungseinrichtung 3 in die zweite Datenverarbeitungseinrichtung 4 geladen. Im Verfahrensschritt S5B wird anhand der Identifikationsdaten und/oder der Benutzeridentifikationsdaten unter Verwendung der zweiten Datenverarbeitungseinrichtung 4 geprüft, ob eine Verwendungsberechtigung für die Verwendung des zweiten Datensatzes mit der ersten Datenverarbeitungseinrichtung 3 und/oder der zweiten Datenverarbeitungseinrichtung 4 vorliegt. Die Verwendungsberechtigung kann beispielsweise dann vorliegen, wenn der Benutzer für die Durchführung des erfindungsgemäßen Verfahrens bezahlt hat, in naher Zukunft bezahlen wird, ihm ein Verfügungsrahmen für die Durchführung des erfindungsgemäßen Verfahrens zur Verfügung steht oder er eine Lizenz zur Durchführung des erfindungsgemäßen Verfahrens erworben hat. Liegt eine Verwendungsberechtigung vor, so wird gemäß dem Verfahrensschritt S5C der Verfahrensschritt S6 durchgeführt. Der Bearbeitungsdatensatz wird nur dann erzeugt oder erkannt, wenn die Verwendungsberechtigung vorliegt. Liegt keine Verwendungsberechtigung vor, dann wird dem Benutzer dieses mitgeteilt. In diesem Falle kann er sich eine Verwendungsberichtigung beschaffen, beispielsweise durch Bezahlen einer Benutzungsgebühr für die Durchführung des erfindungsgemäßen Verfahrens oder durch Erwerben einer Lizenz. Wenn der Benutzer sich keine Verwendungsberechtigung beschafft, wird das erfindungsgemäße Verfahren gemäß dem Verfahrensschritt S5C gestoppt. Zusätzlich oder alternativ hierzu ist es vorgesehen, den zweiten Datensatz zu löschen.

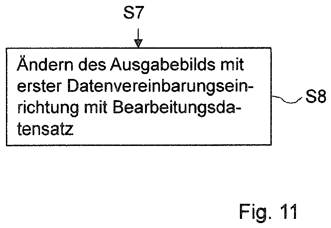

Bei einer Ausführungsform des erfindungsgemäßen Verfahrens ist es zusätzlich oder alternativ vorgesehen, dass nach der Durchführung des Verfahrensschritts S7 ein weiterer Verfahrensschritt S8 durchgeführt wird. Der Verfahrensschritt S8 ist in **Figur 11** dargestellt. Bei dieser Ausführungsform des erfindungsgemäßen Verfahrens ist es vorgesehen, dass nach der Erzeugung des zweidimensionalen Ausgabebilds des Objekts das zweidimensionale Ausgabebild nochmals geändert wird. Hierzu ist es vorgesehen, dass die zweiten Daten des zweiten Datensatzes Änderungsdaten zur Änderung des erzeugten Ausgabebilds des Objekts zur Einarbeitung von Abbildungsfehlern in das Ausgabebild des Objekts in Abhängigkeit des ersten Abbildungsparameters des ersten Abbildungssystems 6 umfassen. Ferner weist der Bearbeitungsdatensatz nach dessen Erzeugung oder Erkennung Bearbeitungsdaten basierend auf den Änderungsdaten auf. Im Verfahrensschritt S8 wird das Ausgabebild des Objekts durch Bearbeiten mindestens eines Ausgabebildpixels der vorgebbaren Anzahl an Ausgabebildpixeln des Ausgabebilds des Objekts mit der ersten Datenverarbeitungseinrichtung 3 unter Verwendung der Bearbeitungsdaten geändert, wobei Pixelwerte des Ausgabebildpixels des Ausgabebilds des Objekts mit den Bearbeitungsdaten geändert werden. Bei dieser Ausführungsform ist von Vorteil, dass ein zuvor beispielsweise vollständig oder nahezu vollständig korrigiertes und abbildungsfehlerfreies Ausgabebild durch Einarbeitung von Abbildungsfehlern derart bearbeitet wird, dass ein nahezu natürlicher ästhetischer Eindruck wie bei einem realen Bild, das mit einem optischen Abbildungssystem erstellt wurde, entsteht.

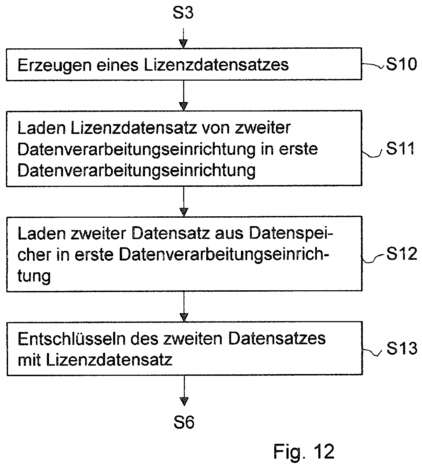

**Figur 12** zeigt eine schematische Darstellung einer weiteren Ausführungsform des erfindungsgemäßen Verfahrens. Die weitere Ausführungsform des erfindungsgemäßen Verfahrens beruht auf der Ausführungsform gemäß der **Figuren 4 und 5.** Es wird daher zunächst auf die weiter oben gemachten Ausführungen verwiesen, die auch hier gelten. Die weitere Ausführungsform gemäß der **Figur 12** weist ebenfalls die Verfahrensschritte S1 bis S3 auf. Nach dem Verfahrensschritt S3 wird der Verfahrensschritt S10 durchgeführt. Im Verfahrensschritt S10 erfolgt mit der zweiten Datenverarbeitungseinrichtung 4 ein Erzeugen eines Lizenzdatensatzes in Abhängigkeit des in die zweite Datenverarbeitungseinrichtung 4 geladenen ersten Datensatzes. Der Lizenzdatensatz ist im Grunde genommen ein elektronischer Schlüssel, mit dem ein geeigneter zweiter Datensatz entschlüsselt (also geöffnet) werden kann, um die Daten über das Objekt zu bearbeiten.

Im Verfahrensschritt S11 erfolgt dann ein Laden des Lizenzdatensatzes von der zweiten Datenverarbeitungseinrichtung 4 in die erste Datenverarbeitungseinrichtung 3. Dabei können zusammen mit dem Lizenzdatensatz die Identifikationsdaten über die Daten des Objekts von der zweiten Datenverarbeitungseinrichtung 4 in die erste Datenverarbeitungseinrichtung 3 geladen werden. Zusätzlich oder alternativ hierzu ist es vorgesehen, dass zusammen mit dem Lizenzdatensatz Informationen über die Kosten für die Durchführung des Verfahrens von der zweiten Datenverarbeitungseinrichtung 4 in die erste Datenverarbeitungseinrichtung 3 geladen werden.

Wenn der Benutzer mit den Kosten einverstanden ist, erfolgt die Durchführung des Verfahrensschritts S12. Sollte der Benutzer mit den Kosten nicht einverstanden sein, so wird der Lizenzdatensatz von der ersten Datenverarbeitungseinrichtung 3 gelöscht und das Verfahren gestoppt. Alternativ hierzu ist es vorgesehen, die Kosten für die weitere Durchführung des Verfahrens dem Benutzer mitzuteilen und sodann den Verfahrensschritt S12 durchzuführen.

Im Verfahrensschritt S12 wird ein zweiter Datensatz aus dem Datenspeicher 5 in die erste Datenverarbeitungseinrichtung 3 in Abhängigkeit des in die zweite Datenverarbeitungseinrichtung 4 geladenen ersten Datensatzes geladen. Der zweite Datensatz weist zweite Daten auf, die Folgendes umfassen: (i) Veränderungsdaten zur Veränderung von Abbildungsfehlern in Abhängigkeit des ersten Abbildungsparameters des ersten Abbildungssystems 6, insbesondere Korrekturdaten zur Korrektur von Abbildungsfehlern in Abhängigkeit des ersten Abbildungsparameters des ersten Abbildungssystems 6, und/oder (ii) Änderungsdaten zur Änderung der Daten über das Objekt in Abhängigkeit des zweiten Abbildungsparameters des zweiten Abbildungssystems 7. Hinsichtlich des zweiten Datensatzes wird auf die weiter oben gemachten Ausführungen verwiesen, die auch hier gelten.

Im Verfahrensschritt S13 erfolgt sodann ein Entschlüsseln des zweiten Datensatzes unter Verwendung des Lizenzdatensatzes mit der ersten Datenverarbeitungseinrichtung 3. Nach dem Verfahrensschritt S13 erfolgt die Durchführung des Verfahrensschritts S6 und sämtlicher weiterer Verfahrensschritte, die sich gegebenenfalls noch anschließen.

Wie oben bereits erläutert, ist es bei der Ausführungsform des erfindungsgemäßen Verfahrens vorgesehen, dass der in die zweite Datenverarbeitungseinrichtung 4 geladene erste Datensatz Identifikationsdaten der Daten über das Objekt und/oder Benutzeridentifikationsdaten aufweist. Bei einer weiteren Ausführungsform des erfindungsgemäßen Verfahrens gemäß der **Figur 12** ist es vorgesehen, dass vor Durchführung des Verfahrensschritts S10, bei dem der Lizenzdatensatz erzeugt wird, zunächst eine Prüfung durchgeführt wird, ob überhaupt eine Verwendungsberechtigung für die Verwendung des Lizenzdatensatzes vorliegt. Diese Ausführungsform des erfindungsgemäßen Verfahrens erfolgt analog zu der in Figur 9 dargestellten Ausführungsform. So wird anhand der Identifikationsdaten und/oder der Benutzeridentifikationsdaten unter Verwendung der ersten Datenverarbeitungseinrichtung 3 und/oder der zweiten Datenverarbeitungseinrichtung 4 geprüft, ob eine Verwendungsberechtigung für die Verwendung des Lizenzdatensatzes mit der ersten Datenverarbeitungseinrichtung 3 und/oder der zweiten Datenverarbeitungseinrichtung 4 vorliegt. Die Verwendungsberechtigung kann beispielsweise dann vorliegen, wenn der Benutzer für die Durchführung des erfindungsgemäßen Verfahrens bezahlt hat, in naher Zukunft bezahlen wird, ihm ein Verfügungsrahmen für die Durchführung des erfindungsgemäßen Verfahrens zur Verfügung steht oder er eine Lizenz zur Durchführung des erfindungsgemäßen Verfahrens erworben hat. Liegt eine Verwendungsberechtigung vor, so wird der Verfahrensschritt S10 durchgeführt. Liegt keine Verwendungsberechtigung vor, dann wird dem Benutzer dieses mitgeteilt. In diesem Falle kann er sich eine Verwendungsberichtigung beschaffen, beispielsweise durch Bezahlen einer Benutzungsgebühr für die Durchführung des erfindungsgemäßen Verfahrens oder durch Erwerben einer Lizenz. Wenn der Benutzer sich keine Verwendungsberechtigung beschafft, wird das erfindungsgemäße Verfahren gestoppt.

Bei einer noch weiteren Ausführungsform des erfindungsgemäßen Verfahrens gemäß der **Figur 12** ist es zusätzlich oder alternativ vorgesehen, dass vor Durchführung des Verfahrensschritts S12, bei dem der zweite Datensatz aus dem Datenspeicher 5 in die erste Datenverarbeitungseinrichtung 3 geladen wird, zunächst eine Prüfung durchgeführt wird, ob überhaupt eine Verwendungsberechtigung für die Verwendung des Lizenzdatensatzes vorliegt. Diese Ausführungsform des erfindungsgemäßen Verfahrens erfolgt analog zu der Ausführungsform gemäß der **Figur 10.** So werden/wird zunächst die Identifikationsdaten und/oder die Benutzeridentifikationsdaten erneut von der ersten Datenverarbeitungseinrichtung 3 in die zweite Datenverarbeitungseinrichtung 4 geladen. Anhand der Identifikationsdaten und/oder der Benutzeridentifikationsdaten wird unter Verwendung der zweiten Datenverarbeitungseinrichtung 4 geprüft, ob eine Verwendungsberechtigung für die Verwendung des Lizenzdatensatzes mit der ersten Datenverarbeitungseinrichtung 3 und/oder der zweiten Datenverarbeitungseinrichtung 4 vorliegt. Die Verwendungsberechtigung kann beispielsweise dann vorliegen, wenn der Benutzer für die Durchführung des erfindungsgemäßen Verfahrens bezahlt hat, in naher Zukunft bezahlen wird, ihm ein Verfügungsrahmen für die Durchführung des erfindungsgemäßen Verfahrens zur Verfügung steht oder er eine Lizenz zur Durchführung des erfindungsgemäßen Verfahrens erworben hat. Liegt eine Verwendungsberechtigung vor, so wird der Verfahrensschritt S12 durchgeführt. Liegt keine Verwendungsberechtigung vor, dann wird dem Benutzer dieses mitgeteilt. In diesem Falle kann er sich eine Verwendungsberichtigung beschaffen, beispielsweise durch Bezahlen einer Benutzungsgebühr für die Durchführung des erfindungsgemäßen Verfahrens oder durch Erwerben einer Lizenz. Wenn der Benutzer sich keine Verwendungsberechtigung beschafft, wird das erfindungsgemäße Verfahren gestoppt. Zusätzlich oder alternativ hierzu ist es vorgesehen, den Lizenzdatensatz zu löschen.

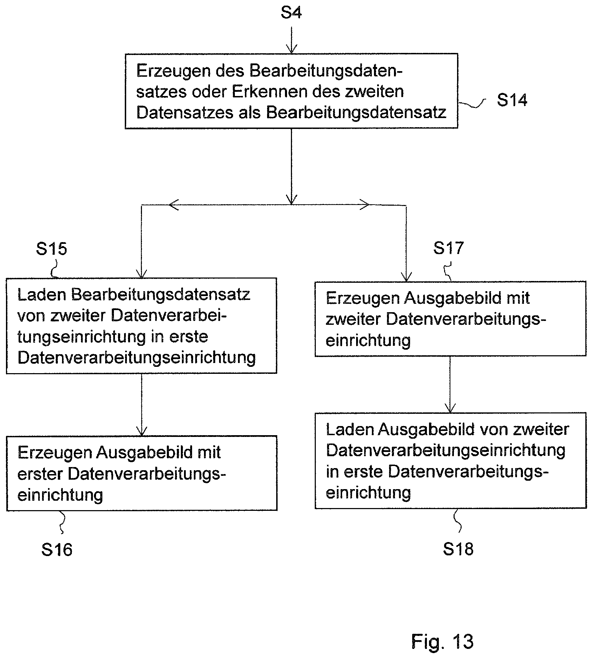

**Figur 13** zeigt eine schematische Darstellung einer noch weiteren Ausführungsform des erfindungsgemäßen Verfahrens. Die noch weitere Ausführungsform des erfindungsgemäßen Verfahrens beruht auf der Ausführungsform gemäß der **Figur 4.** Es wird daher zunächst auf die weiter oben gemachten Ausführungen verwiesen, die auch hier gelten. Die weitere Ausführungsform gemäß der **Figur 13** weist ebenfalls die Verfahrensschritte S1 bis S4 auf. Nach dem Verfahrensschritt S4 wird der Verfahrensschritt S14 durchgeführt. Im Verfahrensschritt S14 erfolgt ein Erzeugen des Bearbeitungsdatensatzes oder ein Erkennen, dass der zweite Datensatz als Bearbeitungsdatensatz verwendet wird, mit der zweiten Datenverarbeitungseinrichtung 4. Zusätzlich ist es beispielsweise vorgesehen, dass der Bearbeitungsdatensatz von der zweiten Datenverarbeitungseinrichtung 4 in die erste Datenverarbeitungseinrichtung 3 geladen wird (Verfahrensschritt S15) und das Erzeugen des zweidimensionalen Ausgabebilds des Objekts mit der ersten Datenverarbeitungseinrichtung 3 erfolgt (Verfahrensschritt S16). Alternativ hierzu ist es nach dem Verfahrensschritt S14 vorgesehen, dass das Erzeugen des zweidimensionalen Ausgabebilds des Objekts mit der zweiten Datenverarbeitungseinrichtung 4 erfolgt (Verfahrensschritt S17) und dass das zweidimensionale Ausgabebild von der zweiten Datenverarbeitungseinrichtung 4 in die erste Datenverarbeitungseinrichtung 3 geladen wird (Verfahrensschritt S18). Hinsichtlich der Erzeugung des Ausgabebilds wird auf die Ausführungen weiter oben verwiesen, die auch hier gelten.

Die Erfindung stellt ein Verfahren und ein Bilderzeugungssystem 1 zur Erzeugung eines Bilds eines Objekts bereit, mit dem ein Abbildungsfehler oder mehrere Abbildungsfehler in real erzeugten Bildern und/oder Bildsequenzen auf einfache Weise verändert, insbesondere korrigiert werden kann/können. Hierzu wird durch die Erfindung stets der passende Bearbeitungsdatensatz zur Verfügung gestellt, mit dem der Abbildungsfehler oder die mehreren Abbildungsfehler im real erzeugten Bild vollständig oder im Wesentlichen korrigiert werden können. Darüber hinaus gewährleistet es die Erfindung, dass künstlich erzeugte Darstellungen eines Objekts keine oder nur schwach erkennbare Unterschiede zu real erzeugten Bildern und/oder Bildsequenzen aufweisen. Auch hierzu wird stets der passende Bearbeitungsdatensatz zur Verfügung gestellt, mit dem die künstlich erzeugte Darstellung des Objekts entsprechend bearbeitet werden kann.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

**Bezugszeichenliste**

| | |
|---|---|
| 1 | Bilderzeugungssystem |
| 2 | Anzeigeeinheit |
| 3 | erste Datenverarbeitungseinrichtung |
| 4 | zweite Datenverarbeitungseinrichtung |
| 5 | Datenspeicher |

| | |
|---|---|
| 6 | erstes Abbildungssystem |
| 7 | zweites Abbildungssystem |
| 8 | erster Prozessor |
| 9 | zweiter Prozessor |
| 10 | Eingabebild |
| 11 | dreidimensionale Darstellung |
| 12A | erste Metadaten |
| 12B | zweite Metadaten |
| 13A | erste Kameradaten |
| 13B | zweite Kameradaten |
| 14A | erste Objektivdaten |
| 14B | zweite Objektivdaten |
| 15A | erste Blendeneinheitsdaten |
| 15B | zweite Blendeneinheitsdaten |
| 16A | erste Fokussiereinheitsdaten |
| 16B | zweite Fokussiereinheitsdaten |
| 17A | erste Brennweiteneinstelleinheitsdaten |
| 17B | zweite Brennweiteneinstelleinheitsdaten |
| 18A | erste Informationen über Position und Lage |
| 18B | zweite Informationen über Position und Lage |
| 19A | erste Informationen über Auflösung des ersten Abbildungssystems |
| 19B | zweite Informationen über Auflösung des zweiten Abbildungssystems |

| | |
|---|---|
| 1000 | Kamera |
| 1001 | Gehäuse |
| 1002 | Objektiv |
| 1003 | Bilderfassungseinheit |
| 1004 | erste Linseneinheit |
| 1005 | zweite Linseneinheit |
| 1006 | Prozessor |
| 1007 | Monitor |
| 1008 | SLAM-Modul |
| 1009 | Kommunikationseinrichtung |
| 1016 | Blendeneinheit |
| 1017 | XD-Datenschnittstelle |

| | |
|---|---|
| O | Objekt |
| OA | optische Achse |
| D | Durchmesser |
| D1 | erste Dimension |
| D2 | zweite Dimension |
| D3 | dritte Dimension |

| | |
|---|---|
| S1 bis S8 | Verfahrensschritte |
| S10 bis S18 | Verfahrensschritte |
| S3A bis S3B | Verfahrensschritte |
| S5A bis S5C | Verfahrensschritte |

| | |
|---|---|
| V | Voxel |

**Patentansprüche**

1. Verfahren zur Erzeugung eines Bilds eines Objekts (O) mit den folgenden Verfahrensschritten:

- Bereitstellen von Daten über das Objekt (O) mit einer ersten Datenverarbeitungseinrichtung (3);
- Bereitstellen mindestens eines ersten Datensatzes mit der ersten Datenverarbeitungseinrichtung (3), wobei der erste Datensatz erste Daten aufweist, die Folgendes umfassen: (i) mindestens einen ersten Abbildungsparameter (12A, 13A, 14A, 15A, 16A, 17A, 18A, 19A) eines ersten Abbildungssystems (6), mit dem die Daten über das Objekt (O) erzeugt wurden, und/oder (ii) mindestens einen zweiten Abbildungsparameter (12B, 13B, 14B, 15B, 16B, 17B, 18B, 19B) eines zweiten Abbildungssystems (7), mit dessen Eigenschaften ein Bild des Objekts (O) basierend auf den Daten über das Objekt (O) auf einer Anzeigeeinheit (2) dargestellt werden soll;
- Laden des ersten Datensatzes von der ersten Datenverarbeitungseinrichtung (3) in eine zweite Datenverarbeitungseinrichtung (4);
- Laden eines zweiten Datensatzes aus einem Datenspeicher (5) in die zweite Datenverarbeitungseinrichtung (4) in Abhängigkeit des in die zweite Datenverarbeitungseinrichtung (4) geladenen ersten Datensatzes, wobei der zweite Datensatz zweite Daten aufweist, die Folgendes umfassen: (i) Veränderungsdaten zur Veränderung von Abbildungsfehlern in Abhängigkeit des ersten Abbildungsparameters (12A, 13A, 14A, 15A, 16A, 17A, 18A, 19A) des ersten Abbildungssystems (6) und/oder (ii) Änderungsdaten zur Änderung der Daten über das Objekt in Abhängigkeit des zweiten Abbildungsparameters (12B, 13B, 14B, 15B, 16B, 17B, 18B, 19B) des zweiten Abbildungssystems (7);
- Erzeugen eines Bearbeitungsdatensatzes basierend auf dem zweiten Datensatz oder Erkennen, dass der zweite Datensatz als Bearbeitungsdatensatz verwendet wird; sowie
- Erzeugen eines zweidimensionalen Ausgabebilds des Objekts (O) durch Bearbeiten der Daten über das Objekt unter Verwendung des Bearbeitungsdatensatzes, wobei das Ausgabebild eine vorgebbare Anzahl an Ausgabebildpixeln aufweist;
wobei
- der von der ersten Datenverarbeitungseinrichtung (3) in die zweite Datenverarbeitungseinrichtung (4) geladene erste Datensatz Benutzeridentifikationsdaten aufweist; und wobei
- anhand der Benutzeridentifikationsdaten unter Verwendung der ersten Datenverarbeitungseinrichtung (3) und/oder der zweiten Datenverarbeitungseinrichtung (4) geprüft wird, ob eine Verwendungsberechtigung für die Verwendung des zweiten Datensatzes mit der ersten Datenverarbeitungseinrichtung (3) und/oder der zweiten Datenverarbeitungseinrichtung (4) vorliegt, und wobei der Bearbeitungsdatensatz nur dann erzeugt wird, wenn die Verwendungsberechtigung vorliegt.

2.    Verfahren nach Anspruch 1, wobei

    - der zweite Datensatz von der zweiten Datenverarbeitungseinrichtung (4) in die erste Datenverarbeitungseinrichtung (3) geladen wird; und wobei

    - das Erzeugen des Bearbeitungsdatensatzes oder das Erkennen, dass der zweite Datensatz als Bearbeitungsdatensatz verwendet wird, mit der ersten Datenverarbeitungseinrichtung (3) erfolgt.

3.    Verfahren nach Anspruch 1 oder 2, wobei das Erzeugen des zweidimensionalen Ausgabebilds des Objekts (O) mit der ersten Datenverarbeitungseinrichtung (3) erfolgt.

4.    Verfahren nach Anspruch 1, wobei das Erzeugen des Bearbeitungsdatensatzes oder das Erkennen, dass der zweite Datensatz als Bearbeitungsdatensatz verwendet wird, mit der zweiten Datenverarbeitungseinrichtung (4) erfolgt.

5.    Verfahren nach Anspruch 4, mit einem der folgenden Verfahrensschritte:

    (i) der Bearbeitungsdatensatz wird von der zweiten Datenverarbeitungseinrichtung (4) in die erste Datenverarbeitungseinrichtung (3) geladen und das Erzeugen des zweidimensionalen Ausgabebilds des Objekts (O) erfolgt mit der ersten Datenverarbeitungseinrichtung (3);

    (ii) das Erzeugen des zweidimensionalen Ausgabebilds des Objekts (O) erfolgt mit der zweiten Datenverarbeitungseinrichtung (4) und das zweidimensionale Ausgabebild wird von der zweiten Datenverarbeitungseinrichtung (4) in die erste Datenverarbeitungseinrichtung (3) geladen.

6.    Verfahren nach einem der vorangehenden Ansprüche, wobei

    - die Daten über das Objekt (O) mindestens ein zweidimensionales Eingabebild (10) des Objekts (O) umfassen;

    - das Eingabebild (10) des Objekts (O) eine vorgegebene Anzahl an Eingabebildpixeln ($P_{op}$) aufweist; und wobei

    - beim Erzeugen des Ausgabebilds des Objekts (O) mindestens ein Eingabebildpixel ($P_{op}$) der vorgegebenen Anzahl an Eingabebildpixeln ($P_{op}$) des Eingabebilds (10) des Objekts (O) unter Verwendung des Bearbeitungsdatensatzes bearbeitet wird, wobei Pixelwerte des Eingabebildpixels ($P_{op}$) des Eingabebilds (10) des Objekts (O) mit Daten des Bearbeitungsdatensatzes geändert werden.

7.    Verfahren nach einem der vorangehenden Ansprüche, wobei

    - die Daten über das Objekt (O) mindestens eine dreidimensionale Darstellung (11) betreffen;

    - die Daten über das Objekt (O) erste Dateninhalte ($V_{ijk}$) in einer ersten Dimension (D1), zweite Dateninhalte ($V_{ijk}$) in einer zweiten Dimension (D2) sowie dritte Dateninhalte ($V_{ijk}$) in einer dritten Dimension (D3) umfassen; und wobei

    - beim Erzeugen des Ausgabebilds des Objekts (O) der erste Dateninhalt ($V_{ijk}$), der zweite Dateninhalt ($V_{ijk}$) und/oder der dritte Dateninhalt ($V_{ijk}$) unter Verwendung des Bearbeitungsdatensatzes bearbeitet wird/werden, wobei der erste Dateninhalt ($V_{ijk}$), der zweite Dateninhalt ($V_{ijk}$) und/oder der dritte Dateninhalt ($V_{ijk}$) mit Daten des Bearbeitungsdatensatzes geändert wird/werden.

8.    Verfahren nach einem der vorangehenden Ansprüche, wobei als erstes Abbildungssystem (6) ein erstes optisches Abbildungssystem (1000) verwendet wird.

9.    Verfahren nach einem der vorangehenden Ansprüche, wobei als der erste Abbildungsparameter (12A, 13A, 14A, 15A, 16A, 17A, 18A, 19A) mindestens einer der folgenden Parameter des ersten Abbildungssystems (6) verwendet wird:

    (i) erste Metadaten (12A) des ersten Abbildungssystems (6);

    (ii) erste Kameradaten (13A) über eine erste Kamera (1000), mit welcher die Daten über das Objekt (O) erzeugt wurden;

    (iii) erste Objektivdaten (14A) über ein erstes Objektiv (1002), mit welchem die Daten über das Objekt (O) erzeugt wurden;

    (iv) erste Blendeneinheitsdaten (15A) über eine erste Blendeneinheit (1016), mit welcher die Daten über das Objekt (O) erzeugt wurden;

    (v) erste Fokussiereinheitsdaten (16A) über eine erste Fokussiereinheit (1004, 1005), mit welcher die Daten über das Objekt (O) erzeugt wurden;

    (vi) erste Brennweiteneinstelleinheitsdaten (17A) über eine erste Brennweiteneinstelleinheit (1004, 1005), mit welcher die Daten über das Objekt (O) erzeugt wurden;

    (vii) erste Informationen (18A) über eine Position und eine Lage des ersten Abbildungssystems (6) im Raum;

(viii) erste Informationen (19A) über eine Auflösung des ersten Abbildungssystems und/oder über eine gewünschte Zielauflösung.

10. Verfahren nach einem der vorangehenden Ansprüche, wobei als zweites Abbildungssystem (7) ein zweites optisches Abbildungssystem verwendet wird.

11. Verfahren nach einem der vorangehenden Ansprüche, wobei als der zweite Abbildungsparameter (12B, 13B, 14B, 15B, 16B, 17B, 18B, 19B) mindestens einer der folgenden Parameter des zweiten Abbildungssystems verwendet wird:

(i) zweite Metadaten (12B) des zweiten optischen Abbildungssystems (7);
(ii) zweite Kameradaten (13B) über eine zweite Kamera (1000), mit deren Eigenschaften die Daten über das Objekt (O) auf der Anzeigeeinheit (2) dargestellt werden sollen;
(iii) zweite Objektivdaten (14B) über ein zweites Objektiv (1002), mit dessen Eigenschaften die Daten über das Objekt (O) auf der Anzeigeeinheit (2) dargestellt werden sollen;
(iv) zweite Blendeneinheitsdaten (15B) über eine zweite Blendeneinheit (1016), mit deren Eigenschaften die Daten über das Objekt (O) auf der Anzeigeeinheit (2) dargestellt werden sollen;
(v) zweite Fokussiereinheitsdaten (16B) über eine zweite Fokussiereinheit (1004, 1005), mit deren Eigenschaften die Daten über das Objekt (O) auf der Anzeigeeinheit (2) dargestellt werden sollen;
(vi) zweite Brennweiteneinstelleinheitsdaten (17B) über eine zweite Brennweiteneinstelleinheit (1004, 1005), mit deren Eigenschaften die Daten über das Objekt (O) auf der Anzeigeeinheit (2) dargestellt werden sollen;
(vii) zweite Informationen (18B) über eine Position und eine Lage des zweiten Abbildungssystems (7) im Raum;
(viii) zweite Informationen (19B) über eine Auflösung des ersten Abbildungssystems und/oder über eine gewünschte Zielauflösung.

12. Verfahren nach einem der vorangehenden Ansprüche, wobei das Verfahren mindestens einen der folgenden Verfahrensschritte umfasst:

(i) als Veränderungsdaten werden Daten zur Veränderung einer Verzeichnung des ersten Abbildungssystems (6) verwendet;
(ii) als Veränderungsdaten werden Daten zur Veränderung einer Vignettierung des ersten Abbildungssystems (6) verwendet;

(iii) als Veränderungsdaten werden Daten zur Korrektur einer Verzeichnung des ersten Abbildungssystems (6) verwendet;
(iv) als Veränderungsdaten werden Daten zur Korrektur einer Vignettierung des ersten Abbildungssystems (6) verwendet.

13. Verfahren nach einem der vorangehenden Ansprüche, wobei das Verfahren mindestens einen der folgenden Verfahrensschritte umfasst:

(i) als das zweite Abbildungssystem (7) wird eine virtuelle Kamera verwendet, wobei mit der virtuellen Kamera ein Bild des Objekts (O) durch mathematische Berechnung basierend auf den Daten über das Objekt (O) derart erzeugt wird, als ob eine Kamera, welche die durch den zweiten Abbildungsparameter gewählte Eigenschaft aufweist, das Objekt (O) tatsächlich abbildet;
(ii) als zweiter Datensatz wird eine mathematische Abbildungsvorschrift verwendet, welche die virtuelle Kamera repräsentiert und in mathematischer Form beschreibt, wie und wo ein in ein Objektiv der virtuellen Kamera einfallender und aus dem Objektiv wieder austretender Lichtstrahl auf einer Bilderfassungseinheit der virtuellen Kamera abgebildet wird;
(iii) als zweiter Datensatz wird ein Polynom verwendet, das die virtuelle Kamera repräsentiert und in mathematischer Form beschreibt, wie und wo ein in ein Objektiv der virtuellen Kamera einfallender und aus dem Objektiv wieder austretender Lichtstrahl auf einer Bilderfassungseinheit der virtuellen Kamera abgebildet wird;
(iv) als zweiter Datensatz wird eine Fourier-Entwicklung verwendet, welche die virtuelle Kamera repräsentiert und in mathematischer Form beschreibt, wie und wo ein in ein Objektiv der virtuellen Kamera einfallender und aus dem Objektiv wieder austretender Lichtstrahl auf einer Bilderfassungseinheit der virtuellen Kamera abgebildet wird.

14. Verfahren nach einem der vorangehenden Ansprüche, wobei der von der ersten Datenverarbeitungseinrichtung (3) in die zweite Datenverarbeitungseinrichtung (4) geladene erste Datensatz Identifikationsdaten der Daten über das Objekt (O) aufweist.

15. Verfahren nach Anspruch 14, wobei der folgende Verfahrensschritt durchgeführt wird:

- Prüfen anhand der Identifikationsdaten unter Verwendung der ersten Datenverarbeitungseinrichtung (3) und/oder der zweiten Datenverarbeitungseinrichtung (4), ob eine Verwendungsberechtigung für die Verwendung des zweiten Datensatzes mit der ersten Datenverarbeitungseinrichtung (3) und/oder der zweiten Datenverarbeitungseinrichtung (4) vorliegt, und Erzeugen des Bearbeitungsdatensatzes nur dann, wenn die Verwendungsberechtigung vorliegt.

16. Verfahren nach Anspruch 14, wobei die folgenden Verfahrensschritte durchgeführt werden:

(i) die Identifikationsdaten und/oder die Benutzeridentifikationsdaten werden erneut von der ersten Datenverarbeitungseinrichtung (3) in die zweite Datenverarbeitungseinrichtung (4) geladen;

(ii) Prüfen anhand der Identifikationsdaten und/oder der Benutzeridentifikationsdaten unter Verwendung der zweiten Datenverarbeitungseinrichtung (4), ob eine Verwendungsberechtigung für die Verwendung des zweiten Datensatzes mit der ersten Datenverarbeitungseinrichtung (3) und/oder der zweiten Datenverarbeitungseinrichtung (4) vorliegt, und Erzeugen des Bearbeitungsdatensatzes nur dann, wenn die Verwendungsberechtigung vorliegt.

17. Verfahren nach einem der vorangehenden Ansprüche, wobei

- die zweiten Daten des zweiten Datensatzes Änderungsdaten zur Änderung des erzeugten Ausgabebilds des Objekts (O) zur Einarbeitung von Abbildungsfehlern in das Ausgabebild des Objekts (O) in Abhängigkeit des ersten Abbildungsparameters (12A, 13A, 14A, 15A, 16A, 17A, 18A, 19A) des ersten Abbildungssystems (6) umfassen;
- der Bearbeitungsdatensatz nach dessen Erzeugung oder Erkennung Bearbeitungsdaten basierend auf den Änderungsdaten aufweist; und wobei
- das Verfahren den folgenden Verfahrensschritt umfasst: Ändern des Ausgabebilds des Objekts (O) durch Bearbeiten mindestens eines Ausgabebildpixels der vorgebbaren Anzahl an Ausgabebildpixeln des Ausgabebilds des Objekts (O) mit der ersten Datenverarbeitungseinrichtung (3) und/oder der zweiten Datenverarbeitungseinrichtung (4) unter Verwendung der Bearbeitungsdaten, wobei Pixelwerte des Ausgabebildpixels des Ausgabebilds des Objekts (O) mit den Bearbeitungsdaten geändert werden.

18. Verfahren zur Erzeugung eines Bilds eines Objekts (O) mit den folgenden Verfahrensschritten:

- Bereitstellen von Daten über das Objekt (O) mit einer ersten Datenverarbeitungseinrichtung (3);

- Bereitstellen mindestens eines ersten Datensatzes mit der ersten Datenverarbeitungseinrichtung (3), wobei der erste Datensatz erste Daten aufweist, die Folgendes umfassen: (i) mindestens einen ersten Abbildungsparameter (12A, 13A, 14A, 15A, 16A, 17A, 18A, 19A) eines ersten Abbildungssystems (6), mit dem die Daten über das Objekt (O) erzeugt wurden, und/oder (ii) mindestens einen zweiten Abbildungsparameter (12B, 13B, 14B, 15B, 16B, 17B, 18B, 19B) eines zweiten Abbildungssystems (7), mit dessen Eigenschaften ein Bild des Objekts (O) basierend auf den Daten über das Objekt (O) auf einer Anzeigeeinheit (2) dargestellt werden soll;
- Laden des ersten Datensatzes von der ersten Datenverarbeitungseinrichtung (3) in eine zweite Datenverarbeitungseinrichtung (4);
- Erzeugen eines Lizenzdatensatzes in Abhängigkeit des in die zweite Datenverarbeitungseinrichtung (4) geladenen ersten Datensatzes;
- Laden des Lizenzdatensatzes von der zweiten Datenverarbeitungseinrichtung (4) in die erste Datenverarbeitungseinrichtung (3);
- Laden eines zweiten Datensatzes aus einem Datenspeicher (5) in die erste Datenverarbeitungseinrichtung (3) in Abhängigkeit des in die zweite Datenverarbeitungseinrichtung (4) geladenen ersten Datensatzes, wobei der zweite Datensatz zweite Daten aufweist, die Folgendes umfassen: (i) Veränderungsdaten zur Veränderung von Abbildungsfehlern in Abhängigkeit des ersten Abbildungsparameters (12A, 13A, 14A, 15A, 16A, 17A, 18A, 19A) des ersten Abbildungssystems (6) und/oder (ii) Änderungsdaten zur Änderung der Daten über das Objekt (O) in Abhängigkeit des zweiten Abbildungsparameters (12B, 13B, 14B, 15B, 16B, 17B, 18B, 19B) des zweiten Abbildungssystems (7);
- Entschlüsseln des zweiten Datensatzes unter Verwendung des Lizenzdatensatzes;
- Erzeugen eines Bearbeitungsdatensatzes mit der ersten Datenverarbeitungseinrichtung (3) basierend auf dem zweiten Datensatz oder Erkennen mit der ersten Datenverarbeitungseinrichtung (3), dass der zweite Datensatz als Bearbeitungsdatensatz verwendet wird; sowie
- Erzeugen eines zweidimensionalen Ausgabebilds des Objekts (O) durch Bearbeiten der Daten über das Objekt (O) unter Verwendung des Bearbeitungsdatensatzes, wobei das Ausgabebild eine vorgebbare Anzahl an Ausgabebildpixeln aufweist.

19. Computerprogrammprodukt mit einem Programmcode, der in einen Prozessor (8, 9) eines Bilderzeugungssystems (1) ladbar ist und, wenn er in dem Prozessor (8, 9) geladen ist, bei seiner Ausführung das Bilderzeugungssystem (1) derart steuert, dass ein Verfahren nach einem der vorangehenden Ansprüche durchgeführt wird.

20. Bilderzeugungssystem (1) zur Erzeugung eines Bilds eines Objekts (O), mit

- einer Anzeigeeinheit (2);
- einem ersten Abbildungssystem (6);
- einem zweiten Abbildungssystem (7);
- einer ersten Datenverarbeitungseinrichtung (3) zur Bereitstellung von Daten über das Objekt (O) und zur Bereitstellung eines ersten Datensatzes, der erste Daten aufweist, die Folgendes umfassen: (i) mindestens einen ersten Abbildungsparameter (12A, 13A, 14A, 15A, 16A, 17A, 18A, 19A) des ersten Abbildungssystems (6), mit dem die Daten über das Objekt (O) erzeugt wurden, und/oder (ii) mindestens einen zweiten Abbildungsparameter (12B, 13B, 14B, 15B, 16B, 17B, 18B, 19B) des zweiten Abbildungssystems (7), mit dessen Eigenschaften ein Bild des Objekts (O) basierend auf den Daten über das Objekt (O) auf der Anzeigeeinheit (2) dargestellt werden soll;
- einer zweiten Datenverarbeitungseinrichtung (4), die mit der ersten Datenverarbeitungseinrichtung (3) zum Datenaustausch verbunden ist;
- einem Datenspeicher (5), in dem ein zweiter Datensatz gespeichert ist, und wobei der zweite Datensatz zweite Daten aufweist, die Folgendes umfassen: (i) Änderungsdaten zur Änderung von Abbildungsfehlern in Abhängigkeit des ersten Abbildungsparameters (12A, 13A, 14A, 15A, 16A, 17A, 18A, 19A) des ersten Abbildungssystems (6) und/oder (ii) Änderungsdaten zur Änderung der Daten über das Objekt (O) in Abhängigkeit des zweiten Abbildungsparameters (12B, 13B, 14B, 15B, 16B, 17B, 18B, 19B) des zweiten Abbildungssystems (7); sowie mit
- mindestens einem Prozessor (8, 9), in dem ein Computerprogrammprodukt nach Anspruch 19 geladen ist.

21. Bilderzeugungssystem (1) nach Anspruch 20, wobei

(i) das erste Abbildungssystem (6) als ein erstes optisches Abbildungssystem ausgebildet ist; und/oder wobei

(ii) das zweite Abbildungssystem (7) als ein zweites optisches Abbildungssystem ausgebildet ist.

22. Bilderzeugungssystem (1) nach Anspruch 20 oder 21, wobei das erste Abbildungssystem (6) mindestens eines der folgenden Merkmale aufweist:

(i) eine erste Kamera (1000);

(ii) ein erstes Objektiv (1002);
(iii) eine erste Blendeneinheit (1016);
(iv) eine erste Fokussiereinheit (1004, 1005);
(v) eine erste Brennweiteneinstelleinheit (1004, 1005).

23. Bilderzeugungssystem (1) nach einem der Ansprüche 20 bis 22, wobei das zweite Abbildungssystem (7) mindestens eines der folgenden Merkmale aufweist:

(i) eine zweite Kamera (1000);
(ii) ein zweites Objektiv (1002);
(iii) eine zweite Blendeneinheit (1016);
(iv) eine zweite Fokussiereinheit (1004, 1005);
(v) eine zweite Brennweiteneinstelleinheit (1004, 1005).

24. Bilderzeugungssystem (1) nach Anspruch 20, wobei das Bilderzeugungssystem mindestens eines der folgenden Merkmale aufweist:

(i) das zweite Abbildungssystem (7) ist eine virtuelle Kamera zur Erzeugung eines Bilds des Objekts (O) durch mathematische Berechnung basierend auf den Daten über das Objekt (O) derart, als ob eine Kamera, welche die durch den zweiten Abbildungsparameter gewählte Eigenschaft aufweist, das Objekt (O) tatsächlich abbildet;
(ii) der zweiter Datensatz ist als eine mathematische Abbildungsvorschrift ausgebildet, welche die virtuelle Kamera repräsentiert und in mathematischer Form beschreibt, wie und wo ein in ein Objektiv der virtuellen Kamera einfallender und aus dem Objektiv wieder austretender Lichtstrahl auf einer Bilderfassungseinheit der virtuellen Kamera abgebildet wird;
(iii) der zweiter Datensatz ist als ein Polynom ausgebildet, das die virtuelle Kamera repräsentiert und in mathematischer Form beschreibt, wie und wo ein in ein Objektiv der virtuellen Kamera einfallender und aus dem Objektiv wieder austretender Lichtstrahl auf einer Bilderfassungseinheit der virtuellen Kamera abgebildet wird;
(iv) der zweiter Datensatz ist als eine Fourier-Entwicklung ausgebildet, welche die virtuelle Kamera repräsentiert und in mathematischer Form beschreibt, wie und wo ein in ein Objektiv der virtuellen Kamera einfallender und aus dem Objektiv wieder austretender Lichtstrahl auf einer Bilderfassungseinheit der virtuellen Kamera abgebildet wird.

## Claims

1. Method for forming an image of an object (O) with the following method steps:

   - providing data about the object (O) by a first data processing device (3);
   - providing at least a first data record by the first data processing device (3), the first data record having first data, which comprise the following: (i) at least a first imaging parameter (12A, 13A, 14A, 15A, 16A, 17A, 18A, 19A) of a first imaging system (6) with which the data about the object (O) have been generated, and/or (ii) at least a second imaging parameter (12B, 13B, 14B, 15B, 16B, 17B, 18B, 19B) of a second imaging system (7) with the properties of which an image of the object (O) is intended to be represented on a display unit (2) on the basis of the data about the object (O);
   - loading the first data record from the first data processing device (3) into a second data processing device (4);
   - loading a second data record from a data memory (5) into the second data processing device (4) in dependence on the first data record loaded into the second data processing device (4), the second data record having second data, which comprise the following: (i) modification data for modifying imaging errors in dependence on the first imaging parameter (12A, 13A, 14A, 15A, 16A, 17A, 18A, 19A) of the first imaging system (6) and/or (ii) modification data for modifying the data about the object in dependence on the second imaging parameter (12B, 13B, 14B, 15B, 16B, 17B, 18B, 19B) of the second imaging system (7);
   - generating a processing data record on the basis of the second data record or detecting that the second data record is being used as the processing data record; and
   - forming a two-dimensional output image of the object (O) by processing the data about the object by using the processing data record, the output image having a predeterminable number of output image pixels;

   wherein

   - the first data record loaded from the first data processing device (3) into the second data processing device (4) has user identification data; and wherein

   - checking is carried out on the basis of the user identification data by using the first data processing device (3) and/or the second data processing device (4) to ascertain whether an authorization of use exists for using the second data record with the first data processing device (3) and/or the second data processing device (4), and wherein the processing data record is generated only if the authorization of use exists.

2. Method according to Claim 1, wherein

   - the second data record is loaded from the second data processing device (4) into the first data processing device (3); and wherein
   - the first data processing device (3) is used for generating the processing data record or detecting that the second data record is being used as the processing data record.

3. Method according to Claim 1 or 2, wherein the first data processing device (3) is used for forming the two-dimensional output image of the object (O).

4. Method according to Claim 1, wherein the second data processing device (4) is used for generating the processing data record or detecting that the second data record is being used as the processing data record.

5. Method according to Claim 4, with one of the following method steps:

   (i) the processing data record is loaded from the second data processing device (4) into the first data processing device (3) and the first data processing device (3) is used for forming the two-dimensional output image of the object (O);
   (ii) the second data processing device (4) is used for generating the two-dimensional output image of the object (O) and the two-dimensional output image is loaded from the second data processing device (4) into the first data processing device (3).

6. Method according to one of the preceding claims, wherein

   - the data about the object (O) comprise at least one two-dimensional input image (10) of the object (O);
   - the input image (10) of the object (O) has a predetermined number of input image pixels ($P_{op}$) ; and wherein
   - during the forming of the output image of the object (O), at least one input image pixel ($P_{op}$) of the predetermined number of input image pixels ($P_{op}$) of the input image (10) of the object (O) is processed by using the processing data record, pixel values of the input image pixel ($P_{op}$) of the input image (10) of the object (O) being modified with data of the processing data record.

7. Method according to one of the preceding claims, wherein

   - the data about the object (O) concern at least one three-dimensional representation (11);
   - the data about the object (O) comprise first data contents ($V_{ijk}$) in a first dimension (D1), second data contents ($V_{ijk}$) in a second dimension (D2) and third data contents ($V_{ijk}$) in a third dimension (D3); and wherein
   - during the forming of the output image of the object (O), the first data content ($V_{ijk}$), the second data content ($V_{ijk}$) and/or the third data content ($V_{ijk}$) is/are processed by using the processing data record, with the first data content ($V_{ijk}$), the second data content ($V_{ijk}$) and/or the third data content ($V_{ijk}$) being modified with data of the processing data record.

8. Method according to one of the preceding claims, wherein a first optical imaging system (1000) is used as the first imaging system (6).

9. Method according to one of the preceding claims, wherein at least one of the following parameters of the first imaging system (6) is used as the first imaging parameter (12A, 13A, 14A, 15A, 16A, 17A, 18A, 19A) :

   (i) first meta data (12A) of the first imaging system (6);
   (ii) first camera data (13A) about a first camera (1000) with which the data about the object (O) have been generated;
   (iii) first lens data (14A) about a first lens (1002) with which the data about the object (O) have been generated;
   (iv) first stop-unit data (15A) about a first stop unit (1016) with which the data about the object (O) have been generated;
   (v) first focusing unit data (16A) about a first focusing unit (1004, 1005) with which the data about the object (O) have been generated;
   (vi) first focal-length setting unit data (17A) about a first focal-length setting unit (1004, 1005) with which the data about the object (O) have been generated;
   (vii) first information (18A) about a position and a location of the first imaging system (6) in space;
   (viii) first information (19A) about a resolution of the first imaging system and/or about a desired target resolution.

10. Method according to one of the preceding claims, wherein a second optical imaging system is used as the second imaging system (7).

11. Method according to one of the preceding claims, wherein at least one of the following parameters of the second imaging system is used as the second imaging parameter (12B, 13B, 14B, 15B, 16B, 17B, 18B, 19B) :

   (i) second meta data (12B) of the second optical imaging system (7);
   (ii) second camera data (13B) about a second camera (1000) with the properties of which the data about the object (O) are intended to be represented on the display unit (2);
   (iii) second lens data (14B) about a second lens (1002) with the properties of which the data about the object (O) are intended to be represented on the display unit (2);
   (iv) second stop unit data (15B) about a second stop unit (1016) with the properties of which the data about the object (O) are intended to be represented on the display unit (2);
   (v) second focusing unit data (16B) about a second focusing unit (1004, 1005) with the properties of which the data about the object (O) are intended to be represented on the display unit (2);
   (vi) second focal-length setting unit data (17B) about a second focal-length setting unit (1004, 1005) with the properties of which the data about the object (O) are intended to be represented on the display unit (2);
   (vii) second information (18B) about a position and a location of the second imaging system (7) in space;
   (viii) second information (19B) about a resolution of the first imaging system and/or about a desired target resolution.

12. Method according to one of the preceding claims, wherein the method comprises at least one of the following method steps:

   (i) data for modifying a distortion of the first imaging system (6) are used as modification data;
   (ii) data for modifying vignetting of the first imaging system (6) are used as modification data;
   (iii) data for correcting a distortion of the first imaging system (6) are used as modification data;
   (iv) data for correcting vignetting of the first imaging system (6) are used as modification data.

13. Method according to one of the preceding claims, wherein the method comprises at least one of the following method steps:

   (i) a virtual camera is used as the second imaging system (7), an image of the object (O) being formed with the virtual camera by mathematical calculation on the basis of the data about the object (O) in such a way as though a camera which has the property chosen by the second imaging parameter were actually imaging the object (O);

(ii) a mathematical mapping rule, which represents the virtual camera and describes in a mathematical form how and where a light beam entering a lens of the virtual camera and emerging again from the lens is imaged on an image capturing unit of the virtual camera, is used as the second data record;

(iii) a polynomial, which represents the virtual camera and describes in a mathematical form how and where a light beam entering a lens of the virtual camera and emerging again from the lens is imaged on an image capturing unit of the virtual camera, is used as the second data record;

(iv) a Fourier development, which represents the virtual camera and describes in a mathematical form how and where a light beam entering a lens of the virtual camera and emerging again from the lens is imaged on an image capturing unit of the virtual camera, is used as the second data record.

14. Method according to one of the preceding claims, wherein the first data record loaded from the first data processing device (3) into the second data processing device (4) has identification data of the data about the object (O).

15. Method according to Claim 14, wherein the following method step is carried out:

- checking on the basis of the identification data by using the first data processing device (3) and/or the second data processing device (4) whether an authorization of use exists for using the second data record with the first data processing device (3) and/or the second data processing device (4), and only generating the processing data record if the authorization of use exists.

16. Method according to Claim 14, wherein the following method steps are carried out:

(i) the identification data and/or the user identification data are once again loaded from the first data processing device (3) into the second data processing device (4);

(ii) checking on the basis of the identification data and/or the user identification data by using the second data processing device (4) whether an authorization of use exists for using the second data record with the first data processing device (3) and/or the second data processing device (4), and only generating the processing data record if the authorization of use exists.

17. Method according to one of the preceding claims, wherein

- the second data of the second data record comprise modification data for modifying the formed output image of the object (O) for incorporating imaging errors in the output image of the object (O) in dependence on the first imaging parameter (12A, 13A, 14A, 15A, 16A, 17A, 18A, 19A) of the first imaging system (6);
- after being generated or detected, the processing data record has processing data on the basis of the modification data; and wherein
- the method comprises the following method step: modifying the output image of the object (O) by processing at least one output image pixel of the predeterminable number of output image pixels of the output image of the object (O) with the first data processing device (3) and/or the second data processing device (4) by using the processing data, pixel values of the output image pixel of the output image of the object (O) being modified with the processing data.

18. Method for forming an image of an object (O) with the following method steps:

- providing data about the object (O) by a first data processing device (3);
- providing at least a first data record by the first data processing device (3), the first data record having first data, which comprise the following: (i) at least a first imaging parameter (12A, 13A, 14A, 15A, 16A, 17A, 18A, 19A) of a first imaging system (6) with which the data about the object (O) have been generated, and/or (ii) at least a second imaging parameter (12B, 13B, 14B, 15B, 16B, 17B, 18B, 19B) of a second imaging system (7) with the properties of which an image of the object (O) is intended to be represented on a display unit (2) on the basis of the data about the object (O);
- loading the first data record from the first data processing device (3) into a second data processing device (4);
- generating a licence data record in dependence on the first data record loaded into the second data processing device (4);
- loading the licence data record from the second data processing device (4) into the first data processing device (3);
- loading a second data record from a data memory (5) into the first data processing device (3) in dependence on the first data record loaded into the second data processing device (4), the second data record having second data, which comprise the following: (i) modification data for modifying imaging errors in dependence on the first imaging parameter (12A, 13A, 14A, 15A, 16A, 17A, 18A, 19A) of the first imaging system (6) and/or (ii) modification data for modifying the data about the object (O) in dependence on the second imaging parameter (12B, 13B, 14B, 15B, 16B, 17B, 18B, 19B) of the second imaging system (7);

- decrypting the second data record by using the licence data record;

- generating a processing data record with the first data processing device (3) on the basis of the second data record or detecting with the first data processing device (3) that the second data record is being used as the processing data record; and

- forming a two-dimensional output image of the object (O) by processing the data about the object (O) by using the processing data record, the output image having a predeterminable number of output image pixels.

19. Computer program product with a program code which can be loaded into a processor (8, 9) of an image forming system (1) and, when it has been loaded in the processor (8, 9), during its execution controls the image forming system (1) in such a way that a method according to one of the preceding claims is carried out.

20. Image forming system (1) for forming an image of an object (O), with

- a display unit (2);
- a first imaging system (6);
- a second imaging system (7);
- a first data processing device (3) for providing data about the object (O) and for providing a first data record, which has first data, which comprise the following: (i) at least a first imaging parameter (12A, 13A, 14A, 15A, 16A, 17A, 18A, 19A) of the first imaging system (6) with which the data about the object (O) have been generated, and/or (ii) at least a second imaging parameter (12B, 13B, 14B, 15B, 16B, 17B, 18B, 19B) of the second imaging system (7) with the properties of which an image of the object (O) is intended to be represented on the display unit (2) on the basis of the data about the object (O);

- a second data processing device (4), which is connected to the first data processing device (3) for data exchange;

- a data memory (5), in which a second data record is stored, and wherein the second data record has second data, which comprise the following: (i) modification data for modifying imaging errors in dependence on the first imaging parameter (12A, 13A, 14A, 15A, 16A, 17A, 18A, 19A) of the first imaging system (6) and/or (ii) modification data for modifying the data about the object (O) in dependence on the second imaging parameter (12B, 13B, 14B, 15B, 16B, 17B, 18B, 19B) of the second imaging system (7); and with

- at least one processor (8, 9), in which a computer program product according to Claim 19 is loaded.

21. Image forming system (1) according to Claim 20, wherein

(i) the first imaging system (6) is formed as a first optical imaging system; and/or wherein
(ii) the second imaging system (7) is formed as a second optical imaging system.

22. Image forming system (1) according to Claim 20 or 21, wherein the first imaging system (6) has at least one of the following features:

(i) a first camera (1000);
(ii) a first lens (1002);
(iii) a first stop unit (1016);
(iv) a first focusing unit (1004, 1005);
(v) a first focal-length setting unit (1004, 1005) .

23. Image forming system (1) according to one of Claims 20 to 22, wherein the second imaging system (7) has at least one of the following features:

(i) a second camera (1000);
(ii) a second lens (1002);
(iii) a second stop unit (1016);
(iv) a second focusing unit (1004, 1005);
(v) a second focal-length setting unit (1004, 1005) .

24. Image forming system (1) according to Claim 20, wherein the image forming system has at least one of the following features:

(i) the second imaging system (7) is a virtual camera for forming an image of the object (O) by mathematical calculation on the basis of the data about the object (O) in such a way as though a camera which has the property chosen by the second imaging parameter were actually imaging the object (O);
(ii) the second data record is formed as a mathematical mapping rule, which represents the virtual camera and describes in a mathematical form how and where a light beam entering a lens of the virtual camera and emerging again from the lens is imaged on an image capturing unit of the virtual camera;

(iii) the second data record is formed as a polynomial, which represents the virtual camera and describes in a mathematical form how and where a light beam entering a lens of the virtual camera and emerging again from the lens is imaged on an image capturing unit of the virtual camera;

(iv) the second data record is formed as a Fourier development, which represents the virtual camera and describes in a mathematical form how and where a light beam entering a lens of the virtual camera and emerging again from the lens is imaged on an image capturing unit of the virtual camera.

## Revendications

1. Procédé de génération d'une image d'un objet (0), ledit procédé comprenant les étapes suivantes :

   - fournir des données concernant l'objet (O) à l'aide d'un premier dispositif de traitement de données (3) ;
   - fournir au moins un premier ensemble de données à l'aide du premier dispositif de traitement de données (3), le premier ensemble de données comportant des premières données qui comprennent : (i) au moins un premier paramètre de reproduction (12A, 13A, 14A, 15A, 16A, 17A, 18A, 19A) d'un premier système de reproduction (6) avec lequel les données concernant un objet (O) ont été générées, et/ou (ii) au moins un deuxième paramètre de reproduction (12B, 13B, 14B, 15B, 16B, 17B, 18B, 19B) d'un deuxième système de reproduction (7), avec les propriétés duquel une image de l'objet (O) doit être affichée sur une unité d'affichage (2) sur la base des données concernant l'objet (O) ;
   - charger le premier ensemble de données depuis le premier dispositif de traitement de données (3) jusque dans un deuxième dispositif de traitement de données (4) ;
   - charger un deuxième ensemble de données depuis une mémoire de données (5) jusque dans le deuxième dispositif de traitement de données (4) en fonction du premier ensemble de données chargé dans le deuxième dispositif de traitement de données (4), le deuxième ensemble de données comportant des deuxièmes données qui comprennent : (i) des données de modification destinées à modifier des erreurs de reproduction en fonction du premier paramètre de reproduction (12A, 13A, 14A, 15A, 16A, 17A, 18A, 19A) du premier système de reproduction (6) et/ou (ii) des données de modification destinées à modifier les données concernant l'objet en fonction du deuxième paramètre de reproduction (12B, 13B, 14B, 15B, 16B, 17B, 18B, 19B) du deuxième système de reproduction (7) ;
   - générer un ensemble de données de traitement sur la base du deuxième ensemble de données ou détecter que le deuxième ensemble de données est utilisé comme ensemble de données de traitement ; et
   - générer une image de sortie bidimensionnelle de l'objet (O) par traitement des données concernant l'objet à l'aide de l'ensemble de données de traitement, l'image de sortie comportant un nombre spécifié de pixels d'image de sortie ;
   - le premier ensemble de données chargé depuis le premier dispositif de traitement de données (3) jusque dans le deuxième dispositif de traitement de données (4) comportant des données d'identification d'utilisateur ; et
   - les données d'identification de l'utilisateur étant utilisées pour vérifier à l'aide du premier dispositif de traitement de données (3) et/ou du deuxième dispositif de traitement de données (4) s'il existe une autorisation d'utilisation pour utiliser le deuxième ensemble de données avec le premier dispositif de traitement de données (3) et/ou le deuxième dispositif de traitement de données (4), et l'ensemble de données de données de traitement n'étant généré que s'il existe une autorisation d'utilisation.

2. Procédé selon la revendication 1,

   - le deuxième ensemble de données étant chargé depuis le deuxième dispositif de traitement de données (4) jusque dans le premier dispositif de traitement de données (3) ; et
   - la génération de l'ensemble de données de données de traitement ou la détection du fait que le deuxième ensemble de données de données est utilisé comme ensemble de données de données de traitement étant effectuée à l'aide du premier dispositif de traitement de données (3).

3. Procédé selon la revendication 1 ou 2, l'image de sortie bidimensionnelle de l'objet (O) étant générée à l'aide du premier dispositif de traitement de données (3) .

4. Procédé selon la revendication 1, la génération de l'ensemble de données de traitement ou la détection du fait que le deuxième ensemble de données est utilisé comme ensemble de données de traitement étant effectuées à l'aide du deuxième dispositif de traitement de données (4).

5. Procédé selon la revendication 4, ledit procédé comprenant l'une des étapes suivantes :

(i) l'ensemble de données de traitement est chargé depuis le deuxième dispositif de traitement de données (4) jusque dans le premier dispositif de traitement de données (3) et la génération de l'image de sortie bidimensionnelle de l'objet (O) est effectuée à l'aide du premier dispositif de traitement de données (3) ;

(ii) la génération de l'image de sortie bidimensionnelle de l'objet (O) est effectuée à l'aide du deuxième dispositif de traitement de données (4) et l'image de sortie bidimensionnelle est chargée depuis le deuxième dispositif de traitement de données (4) jusque dans le premier dispositif de traitement de données (3).

6. Procédé selon l'une des revendications précédentes,

- les données concernant l'objet (O) comprenant au moins une image d'entrée bidimensionnelle (10) de l'objet (O) ;
- l'image d'entrée (10) de l'objet (O) comportant un nombre spécifié de pixels d'image d'entrée ($P_{op}$) ; et
- lors de la génération de l'image de sortie de l'objet (O), au moins un pixel d'image d'entrée ($P_{op}$) du nombre spécifié de pixels d'image d'entrée ($P_{op}$) de l'image d'entrée (10) de l'objet (O) étant traité à l'aide de l'ensemble de données de traitement, les valeurs de pixel du pixel d'image d'entrée ($P_{op}$) de l'image d'entrée (10) de l'objet (O) étant modifiées à l'aide des données de l'ensemble de données de traitement.

7. Procédé selon l'une des revendications précédentes,

- les données concernant l'objet (O) concernant au moins une représentation tridimensionnelle (11) ;
- les données concernant l'objet (O) comprenant des premiers contenus de données ($V_{ijk}$) dans une première dimension (D1), un des deuxièmes contenus de données ($V_{ijk}$) dans une deuxième dimension (D2) et des troisièmes contenus de données ($V_{ijk}$) dans une troisième dimension (D3) ; et
- lors de la génération de l'image de sortie de l'objet (O), le premier contenu de données ($V_{ijk}$), le deuxième contenu de données ($V_{ijk}$) et/ou le troisième contenu de données ($V_{ijk}$) étant traités à l'aide de l'ensemble de données de traitement, le premier contenu de données ($V_{ijk}$), le deuxième contenu de données ($V_{ijk}$) et/ou le troisième contenu de données ($V_{ijk}$) étant modifiés à l'aide de données de l'ensemble de données de traitement.

8. Procédé selon l'une des revendications précédentes, un premier système de reproduction optique (1000) étant utilisé comme premier système de reproduction (6).

9. Procédé selon l'une des revendications précédentes, l'un au moins des paramètres suivants du premier système de reproduction (6) étant utilisé comme premier paramètre de reproduction (12A, 13A, 14A, 15A, 16A, 17A, 18A, 19A) :

(i) des premières métadonnées (12A) du premier système de reproduction (6) ;
(ii) des premières données de caméra (13A) concernant une première caméra (1000) avec laquelle les données concernant l'objet (O) ont été générées ;
(iii) des premières données d'objectif (14A) concernant un premier objectif (1002) avec lequel les données concernant l'objet (O) ont été générées ;
(iv) des premières données d'unité d'ouverture (15A) concernant une première unité d'ouverture (1016) avec laquelle les données concernant l'objet (O) ont été générées ;
(v) des premières données d'unité de focalisation (16A) concernant une première unité de focalisation (1004, 1005) avec laquelle les données concernant l'objet (O) ont été générées ;
(vi) des premières données d'unité de réglage de distance focale (17A) concernant une première unité de réglage de distance focale (1004, 1005) avec laquelle les données concernant l'objet (O) ont été générées ;
(vii) des premières informations (18A) concernant une position et un emplacement du premier système de reproduction (6) dans l'espace ;
(viii) des premières informations (19A) concernant une résolution du premier système de reproduction et/ou concernant une résolution cible souhaitée.

10. Procédé selon l'une des revendications précédentes, un deuxième système de reproduction optique étant utilisé comme deuxième système de reproduction (7).

11. Procédé selon l'une des revendications précédentes, l'un au moins des paramètres suivants du deuxième système de reproduction étant utilisé comme deuxième paramètre de reproduction (12B, 13B, 14B, 15B, 16B, 17B, 18B, 19B) :

(i) des deuxièmes métadonnées (12B) du deuxième système de reproduction optique (7) ;
(ii) des deuxièmes données de caméra (13B) concernant une deuxième caméra (1000) avec les propriétés de laquelle les données concernant l'objet (O) doivent être affichées sur l'unité d'affichage (2) ;

(iii) des deuxièmes données d'objectif (14B) concernant un deuxième objectif (1002) avec les propriétés duquel les données concernant l'objet (O) doivent être affichées sur l'unité d'affichage (2) ;

(iv) des deuxièmes données d'unité d'ouverture (15B) concernant une deuxième unité d'ouverture (1016) avec les propriétés de laquelle les données concernant l'objet (O) doivent être affichées sur l'unité d'affichage (2) ;

(v) des deuxièmes données d'unité de focalisation (16B) concernant une deuxième unité de focalisation (1004, 1005) avec les propriétés de laquelle les données concernant l'objet (O) doivent être affichées sur l'unité d'affichage (2) ;

(vi) des deuxièmes données d'unité de réglage de distance focale (17B) concernant une deuxième unité de réglage de distance focale (1004, 1005) avec les propriétés de laquelle les données concernant l'objet (O) doivent être affichées sur l'unité d'affichage (2) ;

(vii) des deuxièmes informations (18B) concernant une position et un emplacement du deuxième système de reproduction (7) dans l'espace ;

(viii) des deuxièmes informations (19B) concernant une résolution du premier système de reproduction et/ou concernant une résolution cible souhaitée.

12. Procédé selon l'une des revendications précédentes, le procédé comprenant l'une au moins des étapes suivantes :

(i) des données de modification d'une distorsion du premier système de reproduction (6) étant utilisées comme données de modification ;

(ii) des données permettant de modifier un vignettage du premier système de reproduction (6) étant utilisées comme données de modification ;

(iii) des données de correction de la distorsion du premier système de reproduction (6) étant utilisées comme données de modification ;

(iv) des données de correction du vignettage du premier système de reproduction (6) étant utilisées comme données de modification.

13. Procédé selon l'une des revendications précédentes, le procédé comprenant l'une au moins des étapes suivantes :

(i) une caméra virtuelle étant utilisée comme deuxième système de reproduction (7), une image de l'objet (O) étant générée à l'aide de la caméra virtuelle par calcul mathématique sur la base des données concernant l'objet (O) comme si une caméra qui possède la propriété sélectionnée par le deuxième paramètre de reproduction reproduisait réellement l'objet (O) ;

(ii) une règle de reproduction mathématique étant utilisée comme deuxième ensemble de données, laquelle règle représente la caméra virtuelle et décrit sous forme mathématique comment et où un faisceau lumineux incident à un objectif de la caméra virtuelle et sortant de l'objectif est reproduit sur une unité d'acquisition d'image de la caméra virtuelle;

(iii) un polynôme étant utilisé comme deuxième ensemble de données, lequel polynôme représente la caméra virtuelle et décrit sous forme mathématique comment et où un faisceau lumineux incident à un objectif de la caméra virtuelle et sortant de l'objectif est reproduit sur une unité d'acquisition d'image de la caméra virtuelle ;

(iv) un développement de Fourier étant utilisé comme deuxième ensemble de données, lequel développement de Fourier représente la caméra virtuelle et décrit sous forme mathématique comment et où un faisceau lumineux incident à un objectif de la caméra virtuelle et sortant de l'objectif est reproduit sur une unité d'acquisition d'image de la caméra virtuelle.

14. Procédé selon l'une des revendications précédentes, le premier ensemble de données chargé depuis le premier dispositif de traitement de données (3) jusque dans le deuxième dispositif de traitement de données (4) comportant des données d'identification des données concernant l'objet (O).

15. Procédé selon la revendication 14, l'étape de procédé suivante étant exécutée :

- vérifier, sur la base des données d'identification à l'aide du premier dispositif de traitement de données (3) et/ou du deuxième dispositif de traitement de données (4), s'il existe une autorisation d'utilisation pour utiliser le deuxième ensemble de données avec le premier dispositif de traitement de données (3) et/ou le deuxième dispositif de traitement de données (4), et générer l'ensemble de données de traitement uniquement si l'autorisation d'utilisation existe.

16. Procédé selon la revendication 14, les étapes de procédé suivantes étant réalisées :

(i) charger à nouveau les données d'identification et/ou les données d'identification d'utilisateur depuis le premier dispositif de traitement de données (3) jusque dans le deuxième dispositif de traitement de données (4) ;

(ii) vérifier, sur la base des données d'identification et/ou des données d'identification d'utilisateur à l'aide du deuxième dispositif de traitement de données (4), s'il existe une autorisation d'utilisation pour utiliser le deuxième ensemble de données avec le premier dispositif de traitement de données (3) et/ou le deuxième dispositif de traitement de données (4) et générer l'ensemble de données de traitement uniquement si l'autorisation d'utilisation existe.

17. Procédé selon l'une des revendications précédentes,

- les deuxièmes données du deuxième ensemble de données comprenant des données de modification destinées à modifier l'image de sortie générée de l'objet (O) afin d'incorporer des erreurs de reproduction dans l'image de sortie de l'objet (O) en fonction du premier paramètre de reproduction (12A, 13A, 14A, 15A, 16A, 17A, 18A, 19A) du premier système de reproduction (6) ;
- l'ensemble de données comportant, après génération ou détection de celui-ci, des données de traitement basées sur les données de modification ; et
- le procédé comprenant l'étape suivante: modifier l'image de sortie de l'objet (O) par traitement d'au moins un pixel d'image de sortie du nombre spécifié de pixels d'image de sortie de l'image de sortie de l'objet (O) à l'aide du premier dispositif de traitement de données (3) et/ou du deuxième dispositif de traitement de données (4) à l'aide des données de traitement, les valeurs de pixel du pixel d'image de sortie de l'image de sortie de l'objet (O) étant modifiées avec les données de traitement.

18. Procédé de génération d'une image d'un objet (O), ledit procédé comprenant les étapes suivantes :

- fournir des données concernant l'objet (O) à l'aide d'un premier dispositif de traitement de données (3) ;
- fournir au moins un premier ensemble de données à l'aide du premier dispositif de traitement de données (3), le premier ensemble de données comportant des premières données qui comprennent : (i) au moins un premier paramètre de reproduction (12A, 13A, 14A, 15A, 16A, 17A, 18A, 19A) d'un premier système de reproduction (6) avec lequel les données concernant un objet (O) ont été générées, et/ou (ii) au moins un deuxième paramètre de reproduction (12B, 13B, 14B, 15B, 16B, 17B, 18B, 19B) d'un deuxième système de reproduction (7), avec les propriétés duquel une image de l'objet (O) doit être affichée sur une unité d'affichage (2) sur la base des données concernant l'objet (O) ;

- charger le premier ensemble de données de licence depuis le premier dispositif de traitement de données (3) jusque dans un deuxième dispositif de traitement de données (4) ;
- générer un ensemble de données de licence en fonction du premier ensemble de données chargé dans le deuxième dispositif de traitement de données (4) ;
- charger l'ensemble de données de licence depuis le deuxième dispositif de traitement de données (4) jusque dans le premier dispositif de traitement de données (3) ;
- charger un deuxième ensemble de données de licence depuis une mémoire de données (5) jusque dans le premier dispositif de traitement de données (3) en fonction du premier ensemble de données chargé dans le deuxième dispositif de traitement de données (4), le deuxième ensemble de données comportant des deuxièmes données qui comprennent : (i) des données de modification destinées à modifier des erreurs de reproduction en fonction du premier paramètre de reproduction (12A, 13A, 14A, 15A, 16A, 17A, 18A, 19A) du premier système de reproduction (6) et/ou (ii) des données de modification destinées à modifier les données concernant l'objet (O) en fonction du deuxième paramètre de reproduction (12B, 13B, 14B, 15B, 16B, 17B, 18B, 19B) du deuxième système de reproduction (7) ;
- décrypter le deuxième ensemble de données à l'aide de l'ensemble de données de licence ;
- générer un ensemble de données de traitement à l'aide du premier dispositif de traitement de données (3) sur la base du deuxième ensemble de données ou détecter à l'aide du premier dispositif de traitement de données (3) que le deuxième ensemble de données est utilisé comme ensemble de données de traitement ; et
- générer une image de sortie bidimensionnelle de l'objet (O) par traitement des données concernant l'objet (O) à l'aide de l'ensemble de données de traitement, l'image de sortie comportant un nombre spécifié de pixels d'image de sortie ;

19. Produit de programme d'ordinateur comportant un code de programme qui peut être chargé dans un processeur (8, 9) d'un système de génération d'images (1) et qui, lorsqu'il est chargé dans le processeur (8, 9), commande lors de son exécution le système de génération d'images (1) de manière à mettre en œuvre un procédé selon l'une des revendications précédentes.

20. Système de génération d'images (1) destiné à générer une image d'un objet (O), ledit système comprenant

- une unité d'affichage (2) ;

- un premier système de reproduction (6) ;
- un deuxième système de reproduction (7) ;
- un premier dispositif de traitement de données (3) destiné à fournir des données concernant l'objet (O) et à fournir un premier ensemble de données qui comporte des premières données qui comprennent : (i) au moins un premier paramètre de reproduction (12A, 13A, 14A, 15A, 16A, 17A, 18A, 19A) du premier système de reproduction (6) avec lequel les données concernant l'objet (O) ont été générées, et/ou (ii) au moins un deuxième paramètre de reproduction (12B, 13B, 14B, 15B, 16B, 17B, 18B, 19B) du deuxième système de reproduction (7) avec les propriétés duquel une image de l'objet (O) doit être affichée sur l'unité d'affichage (2) sur la base des données concernant l'objet (O) ;
- un deuxième dispositif de traitement de données (4) qui est relié au premier dispositif de traitement de données (3) en vue de l'échange de données ;
- une mémoire de données (5) dans laquelle un deuxième ensemble de données est mémorisé, et le deuxième ensemble de données comportant des deuxièmes données qui comprennent : (i) des données de modification destinées à modifier les erreurs de reproduction en fonction du premier paramètre de reproduction (12A, 13A, 14A, 15A, 16A, 17A, 18A, 19A) du premier système de reproduction (6) et/ou (ii) des données de modification destinées à modifier les données concernant l'objet (O) en fonction du deuxième paramètre de reproduction (12B, 13B, 14B, 15B, 16B, 17B, 18B, 19B) du deuxième système de reproduction (7) ; et
- au moins un processeur (8, 9) dans lequel un produit de programme d'ordinateur selon la revendication 19 est chargé.

21. Système de génération d'images (1) selon la revendication 20,

(i) le premier système de reproduction (6) étant conçu comme un premier système de reproduction optique ; et/ou
(ii) le deuxième système de reproduction (7) étant conçu comme un deuxième système de reproduction optique.

22. Système de génération d'images (1) selon la revendication 20 ou 21, le premier système de reproduction (6) comportant l'une au moins des caractéristiques suivantes :

(i) une première caméra (1000) ;
(ii) un premier objectif (1002) ;
(iii) une première unité d'ouverture (1016) ;
(iv) une première unité de focalisation (1004, 1005) ;
(v) une première unité de réglage de distance focale (1004, 1005).

23. Système de génération d'images (1) selon l'une des revendications 20 à 22, le deuxième système de reproduction (7) comportant l'une au moins des caractéristiques suivantes :

(i) une deuxième caméra (1000) ;
(ii) un deuxième objectif (1002) ;
(iii) une deuxième unité d'ouverture (1016) ;
(iv) une deuxième unité de focalisation (1004, 1005) ;
(v) une deuxième unité de réglage de distance focale (1004, 1005).

24. Système de génération d'images (1) selon la revendication 20, le système de reproduction comportant l'une au moins des caractéristiques suivantes :

(i) le deuxième système de reproduction (7) étant une caméra virtuelle destinée à générer une image de l'objet (O) par calcul mathématique sur la base des données concernant l'objet (O) comme si une caméra, qui présente la propriété sélectionnée par le deuxième paramètre de reproduction, reproduit réellement l'objet (O) ;
(ii) le deuxième ensemble de données étant conçu comme une règle de reproduction mathématique qui représente la caméra virtuelle et décrit sous forme mathématique comment et où un faisceau lumineux incident à un objectif de la caméra virtuelle et sortant de l'objectif est reproduit sur une unité d'acquisition d'images de la caméra virtuelle ;
(iii) le deuxième ensemble de données étant conçu comme un polynôme qui représente la caméra virtuelle et décrit sous forme mathématique comment et où un faisceau lumineux incident à un objectif de la caméra virtuelle et sortant de l'objectif est reproduit sur une unité d'acquisition d'images de la caméra virtuelle ;
(iv) le deuxième ensemble de données étant conçu comme un développement de Fourier, qui représente la caméra virtuelle et décrit sous forme mathématique comment et où un faisceau lumineux incident à un objectif de la caméra virtuelle et sortant de l'objectif est reproduit sur une unité d'acquisition d'images de la caméra virtuelle.

Fig. 1

Fig 2

Fig 3

Bereitstellen von Daten über Objekt mit
erster Datenverarbeitungseinrichtung ⟩ S1

Bereitstellen eines ersten Datensatzes
mit erster Datenverarbeitungseinrichtung, wobei erster Datensatz erste
Daten aufweist mit ersten Abbildungsparameter eines ersten Abbildungssystems und/oder zweite Abbildungsparameter eines zweiten Abbildungssystems ⟩ S2

Laden erster Datensatz von erster
Datenverarbeitungseinrichtung in zweite
Datenverarbeitungseinrichtung ⟩ S3

Laden zweiter Datensatz aus Datenspeicher in zweite Datenverarbeitungseinrichtung in Abhängigkeit des ersten
Datensatzes ⟩ S4

Laden zweiter Datensatz von zweiter
Datenverarbeitungseinrichtung in erste
Datenverarbeitungseinrichtung ⟩ S5

S6

Fig. 4

S5

| |
|---|
| Erzeugung oder Erkennung Bearbeitungs-datensatz mit erster Datenverarbeitungsein-richtung basierend auf zweitem Datensatz |

S6

| |
|---|
| Erzeugen eines zweidimensionalen Aus-gabebilds des Objekts durch Bearbeiten der Daten über das Objekt unter Verwendung des Bearbeitungsdatensatzes |

S7

Fig. 5

$P_{11}$

$P_{19}$

10

## Fig. 6

11

D1

D2

D3

$V_{ijk}$

$P_{91}$

$P_{99}$

## Fig. 7

| METADATEN | $\smile$ 12 A/B |
|---|---|
| Kameradaten | $\smile$ 13 A/B |
| Objektivdaten | $\smile$ 14 A/B |
| Blendeneinheitsdaten | $\smile$ 15 A/B |
| Fokussiereinheitsdaten | $\smile$ 16 A/B |
| Brennweiteneinstelleinheitsdaten | $\smile$ 17 A/B |
| Informationen über Position und Lage | $\smile$ 18 A/B |
| Informationen über Auflösung | $\smile$ 19 A/B |

Fig. 8

S3

Prüfen anhand von Identifikationsdaten und/oder Benutzeridentifikationsdaten, ob Verwendungsberechtigung für zweiten Datensatz
vorliegt $\qquad$ S3A

NEIN
STOP ← Liegt vor? — S3B

JA

S4 Fig. 9

S5

Laden Identifikationsdaten und/oder Benutzeridentifikationsdaten erneut von erster Datenverarbeitungseinrichtung in zweite Datenverarbeitungseinrichtung — S5A

Prüfen anhand der Identifikationsdaten und/oder der Benutzeridentifikationsdaten mit zweiter Datenverarbeitungseinrichtung, ob Verwendungsberechtigung für zweiten Datensatz vorliegt — S5B

NEIN
STOP ◄— Liegt vor? — S5C

JA
S6

Fig. 10

S7
↓

Ändern des Ausgabebilds mit
erster Datenvereinbarungseinrichtung mit Bearbeitungsdatensatz

S8

Fig. 11

S3

| Erzeugen eines Lizenzdatensatzes | S10 |

| Laden Lizenzdatensatz von zweiter Datenverarbeitungseinrichtung in erste Datenverarbeitungseinrichtung | S11 |

| Laden zweiter Datensatz aus Datenspeicher in erste Datenverarbeitungseinrichtung | S12 |

| Entschlüsseln des zweiten Datensatzes mit Lizenzdatensatz | S13 |

S6

Fig. 12

S4

Erzeugen des Bearbeitungsdatensatzes oder Erkennen des zweiten
Datensatzes als Bearbeitungsdatensatz    S14

S15

Laden Bearbeitungsdatensatz
von zweiter Datenverarbeitungseinrichtung in erste
Datenverarbeitungseinrichtung

Erzeugen Ausgabebild mit
erster Datenverarbeitungseinrichtung

S16

S17

Erzeugen Ausgabebild mit
zweiter Datenverarbeitungseinrichtung

Laden Ausgabebild von zweiter
Datenverarbeitungseinrichtung
in erste Datenverarbeitungseinrichtung

S18

Fig. 13

**EP 4 068 198 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020021121 A1
- CN 110675348 A